(19) Europäisches Patentamt
European Patent Office
Office européen des brevets

(11) **EP 4 583 397 A1**

(12) **EUROPEAN PATENT APPLICATION**
published in accordance with Art. 153(4) EPC

(43) Date of publication:
09.07.2025 Bulletin 2025/28

(21) Application number: 23859701.7

(22) Date of filing: 18.04.2023

(51) International Patent Classification (IPC):
$H02P\ 21/14^{(2016.01)}$    $H02P\ 25/024^{(2016.01)}$
$F25B\ 49/02^{(2006.01)}$

(52) Cooperative Patent Classification (CPC):
F25B 49/02; H02P 21/14; H02P 25/024

(86) International application number:
PCT/JP2023/015441

(87) International publication number:
WO 2024/047930 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.08.2022 JP 2022136042

(71) Applicant: Panasonic Intellectual Property
Management Co., Ltd.
Osaka-shi, Osaka 540-6207 (JP)

(72) Inventors:
• MATSUYAMA, Tetsuya
Osaka 571-0057 (JP)
• TANAKA, Yuya
Osaka 571-0057 (JP)
• HIWATA, Akira
Osaka 571-0057 (JP)

(74) Representative: Eisenführ Speiser
Patentanwälte Rechtsanwälte PartGmbB
Gollierstraße 4
80339 München (DE)

(54) **SYNCHRONOUS-MACHINE CONTROL DEVICE, COMPRESSION SYSTEM, AND REFRIGERATION-CYCLE DEVICE**

(57)    A synchronous-machine control device, a compression system, and a refrigeration-cycle device enabling improvement of accuracy of estimation of a magnet magnetic flux of a permanent magnet of a synchronous machine are provided. The synchronous-machine control device (1) is connectable to a drive circuit (2) to drive a synchronous machine (10) and a detection circuit (3) to detect a current flowing through the synchronous machine (10) to output a detected current indicative of the current. The synchronous-machine control device (1) performs: a synchronous machine controlling process of determining an instruction voltage to allow a reactive power component of the synchronous machine (10) to satisfy a predetermined condition and controlling the drive circuit (2) to allow the drive circuit (2) to apply a voltage corresponding to the instruction voltage across the synchronous machine (10); and a magnet magnetic flux estimating process of estimating a magnet magnetic flux, based on a relation satisfied by an armature flux linkage, an armature reaction flux and the magnet magnetic flux of a permanent magnet, of the synchronous machine (10) when the reactive power component of the synchronous machine (10) satisfies the predetermined condition, from the armature flux linkage calculated from the detected current and the instruction voltage and the armature reaction flux calculated from an inductance of the synchronous machine (10) and the detected current.

Fig. 1

EP 4 583 397 A1

**Description**

TECHNICAL FIELD

The present disclosure relates to synchronous-machine control devices, compression systems, and refrigeration-cycle devices.

BACKGROUND ART

Patent document 1 discloses a drive control device for a motor. The drive control device disclosed in patent document 1 includes: PWM current control means for supplying a sinusoidal current having a predetermined amplitude and a predetermined phase according to a torque instruction value to an alternating current motor; voltage phase control means for supplying an alternating current having phase deviated from the predetermined phase according to the torque instruction value to the alternating current motor; control switching means for switching between PWM current control by the PWM current control means and voltage phase control by the voltage phase control means; magnet temperature estimating means for estimating a temperature of a permanent magnet of the alternating current motor; and correcting means for, in switching from the volage phase control to the PWM current control with a voltage amplitude being changed stepwise, correcting the torque instruction value under the PWM current control by calculating a torque under the voltage phase control and a torque under the PWM current control from the temperature of the permanent magnet estimated by the magnet temperature estimating means and adding a torque difference obtained by subtracting the calculated torque under the PWM current control from the calculated torque under the voltage phase control, to the torque instruction value under the PWM current control.

PRIOR ART DOCUMENTS

PATENT DOCUMENTS

Patent Document 1: JP 5396906 B

SUMMARY OF THE INVENTION

PROBLEMS TO BE SOLVED BY THE INVENTION

Patent document 1 estimates the magnet temperature using the magnetic flux (magnet magnetic flux) of the permanent magnet. Patent document 1 estimates the magnet magnetic flux using a dq axis voltage equation and a torque equation of the motor. In this case, equations used for estimation of the magnet magnetic flux include an instruction voltage (a dq axis voltage instruction value) and a winding resistance (see equations 14 to 20 in patent document 1). Therefore, this is sensitive to a voltage error caused by dead time of an inverter, a resistance, and the like. This may cause a decrease in estimation accuracy of the magnet magnetic flux.

The present disclosure provides a synchronous-machine control device, a compression system, and a refrigeration-cycle device enabling improvement of accuracy of estimation of a magnet magnetic flux of a permanent magnet of a synchronous machine.

SOLUTIONS TO THE PROBLEMS

A synchronous-machine control device according one aspect of the present disclosure includes: a drive circuit configured to drive a synchronous machine; a detection circuit configured to detect a current flowing through the synchronous machine to output a detected current indicative of the current; and a control circuit configured to control the drive circuit. The control circuit has functions of performing: a synchronous machine controlling process of determining an instruction voltage to be applied across the synchronous machine and controlling the drive circuit to allow the drive circuit to apply a voltage corresponding to the instruction voltage across the synchronous machine; and a magnet magnetic flux estimating process of estimating a magnet magnetic flux of a permanent magnet of the synchronous machine. The synchronous machine controlling process determines the instruction voltage to allow a reactive power component of the synchronous machine to satisfy a predetermined condition. The magnet magnetic flux estimating process estimates, based on a relation satisfied by an armature flux linkage of the synchronous machine, an armature reaction flux of the synchronous machine and the magnet magnetic flux of the permanent magnet of the synchronous machine when the reactive power component of the synchronous machine satisfies the predetermined condition, the magnet magnetic flux from the armature flux linkage calculated from the detected current and the instruction voltage and the armature reaction flux calculated from an inductance of the synchronous machine and the detected current.

A compression system according to one aspect of the present disclosure includes: a compressor; and a control device configured to control the compressor. The compressor includes: a sealed container constituting a fluidic pathway for a working medium containing ethylene-based fluoroolefin as a refrigerant component; a compression mechanism positioned inside the sealed container to compress the working medium; and a synchronous machine positioned inside the sealed container to operate the compression mechanism. The control device includes: a drive circuit configured to drive the synchronous machine; a detection circuit configured to detect a current flowing through the synchronous machine to output a detected current indicative of the current; and a synchronous-machine control device connected to the drive circuit and the detection circuit. The synchronous-machine control device includes functions of performing: a synchronous machine controlling process of determining an instruction voltage to be applied across the synchronous machine and controlling the drive circuit to allow the drive circuit to apply a voltage corresponding to the instruction voltage across the synchronous machine; a magnet magnetic flux estimating process of estimating a magnet magnetic flux of a permanent magnet of the synchronous machine; and a stop process of stopping the synchronous machine when a surrounding temperature of the synchronous machine is determined to exceed a predetermined temperature based on the magnet magnetic flux. The synchronous machine controlling process determines the instruction voltage to allow a reactive power component of the synchronous machine to satisfy a predetermined condition. The magnet magnetic flux estimating process estimates, based on a relation satisfied by an armature flux linkage of the synchronous machine, an armature reaction flux of the synchronous machine and the magnet magnetic flux of the permanent magnet of the synchronous machine when the reactive power component of the synchronous machine satisfies the predetermined condition, the magnet magnetic flux from the armature flux linkage calculated from the detected current and the instruction voltage and the armature reaction flux calculated from an inductance of the synchronous machine and the detected current.

A refrigeration-cycle device according to one aspect of the present disclosure includes: a refrigeration cycle circuit including a compressor, a condenser, an expansion valve and an evaporator, and allowing circulation of a working medium; and a control apparatus configured to control the refrigeration cycle circuit. The working medium contains ethylene-based fluoroolefin as a refrigerant component. The compressor includes: a sealed container constituting a fluidic pathway for the working medium; a compression mechanism positioned inside the sealed container to compress the working medium; and a synchronous machine positioned inside the sealed container to operate the compression mechanism. The control apparatus includes: a drive circuit configured to drive the synchronous machine; a detection circuit configured to detect a current flowing through the synchronous machine to output a detected current indicative of the current; and a synchronous-machine control device connected to the drive circuit and the detection circuit. The synchronous-machine control device includes functions of performing: a synchronous machine controlling process of determining an instruction voltage to be applied across the synchronous machine and controlling the drive circuit to allow the drive circuit to apply a voltage corresponding to the instruction voltage across the synchronous machine; a magnet magnetic flux estimating process of estimating a magnet magnetic flux of a permanent magnet of the synchronous machine; and a stop process of stopping the synchronous machine when a surrounding temperature of the synchronous machine is determined to exceed a predetermined temperature based on the magnet magnetic flux. The synchronous machine controlling process determines the instruction voltage to allow a reactive power component of the synchronous machine to satisfy a predetermined condition. The magnet magnetic flux estimating process estimates, based on a relation satisfied by an armature flux linkage of the synchronous machine, an armature reaction flux of the synchronous machine and the magnet magnetic flux of the permanent magnet of the synchronous machine when the reactive power component of the synchronous machine satisfies the predetermined condition, the magnet magnetic flux from the armature flux linkage calculated from the detected current and the instruction voltage and the armature reaction flux calculated from an inductance of the synchronous machine and the detected current.

EFFECTS OF THE INVENTION

An aspect of the present disclosure enables improvement of accuracy of estimation of a magnet magnetic flux of a permanent magnet of a synchronous machine.

BRIEF DESCRIPTION OF THE DRAWINGS

Fig. 1 is a block diagram of a configuration example of a synchronous-machine drive system including a synchronous-machine control device according to embodiment 1.

Fig. 2 is a circuit diagram of a configuration example of a drive circuit of the synchronous-machine drive system of Fig. 1.

Fig. 3 is a block diagram of a voltage generator of a synchronous-machine control device of the synchronous-machine drive system of Fig. 1.

Fig. 4 is an explanatory diagram of coordinate systems used in the synchronous-machine control device of Fig. 3.

Fig. 5 is an explanatory diagram of current and flux vectors of the synchronous machine by the synchronous-machine control device of Fig. 3.

Fig. 6 is an explanatory diagram of current and flux vectors of the synchronous machine by the synchronous-machine control device of Fig. 3.

Fig. 7 is an explanatory diagram of current and flux vectors of the synchronous machine by the synchronous-machine control device of Fig. 3.

Fig. 8 is a graph representing one example of comparison between an estimated value and a true value, of a magnet magnetic flux by the synchronous-machine control device of Fig. 1.

Fig. 9 is a graph representing another example of comparison between the estimated value and the true value, of the magnet magnetic flux by the synchronous-machine control device of Fig. 1.

Fig. 10 is a block diagram of a configuration example of a refrigeration-cycle device according to embodiment 1.

Fig. 11 is a schematic view of a configuration example of a compressor of the refrigeration-cycle device of Fig. 1.

Fig. 12 is a block diagram of a voltage generator of a synchronous-machine control device according to embodiment 2.

Fig. 13 is a block diagram of a voltage generator of a synchronous-machine control device according to embodiment 3.

Fig. 14 is a block diagram of a configuration example of an instruction phase determining unit of the voltage generator of Fig. 13.

Fig. 15 is a block diagram of a voltage generator of a synchronous-machine control device according to embodiment 4.

Fig. 16 is a block diagram of a configuration example of an instruction phase determining unit of the voltage generator of Fig. 15.

Fig. 17 is a block diagram of a voltage generator of a synchronous-machine control device according to embodiment 5.

Fig. 18 is a block diagram of a configuration example of an instruction phase determining unit of the voltage generator of Fig. 17.

Fig. 19 is a block diagram of a voltage generator of a synchronous-machine control device according to embodiment 6.

Fig. 20 is a block diagram of a first configuration example of an instruction phase determining unit of the voltage generator of Fig. 19.

Fig. 21 is a block diagram of a second configuration example of the instruction phase determining unit of the voltage generator of Fig. 19.

Fig. 22 is a block diagram of a third configuration example of the instruction phase determining unit of the voltage generator of Fig. 19.

Fig. 23 is a block diagram of a voltage generator of a synchronous-machine control device according to embodiment 7.

Fig. 24 is an explanatory diagram of coordinate systems used in the synchronous-machine control device of Fig. 23.

Fig. 25 is a block diagram of a voltage generator of a synchronous-machine control device according to embodiment 8.

Fig. 26 is an explanatory diagram of current and flux vectors of a synchronous machine by the synchronous-machine control device of Fig. 25.

Fig. 27 is a block diagram of a configuration example of a dm axis current determining unit of the voltage generator of Fig. 25.

Fig. 28 is a graph representing one example of comparison between the estimated value and the true value, of the magnet magnetic flux by the synchronous-machine control device of Fig. 25.

Fig. 29 is a graph representing another example of comparison between the estimated value and the true value, of the magnet magnetic flux by the synchronous-machine control device of Fig. 25.

Fig. 30 is a block diagram of a voltage generator of a synchronous-machine control device according to embodiment 9.

Fig. 31 is a block diagram of a voltage generator of a synchronous-machine control device according to embodiment 10.

Fig. 32 is a block diagram of a voltage generator of a synchronous-machine control device according to embodiment 11.

Fig. 33 is a block diagram of a voltage generator of a synchronous-machine control device according to embodiment 12.

Fig. 34 is a block diagram of a voltage generator of a synchronous-machine control device according to embodiment 13.

Fig. 35 is a block diagram of a voltage generator of a synchronous-machine control device according to embodiment 14.

DETAILED DESCRIPTION

[1. EMBODIMENTS]

Hereinafter, embodiments of the present disclosure will be described with reference to the drawings where appropriate. However, the following embodiments are merely examples for explaining the present disclosure, and are not intended to limit the present disclosure to the following content. Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.
Note that, in the following description, same or similar components may be designated by the same reference signs to avoid unnecessary repetition.
In the following description, if it is necessary to distinguish a plurality of components from each other, prefixes, such as, "first", "second", or the like are attached to names of such components. However, if these components can be distinguished from each other by reference signs attached to those components, such prefixes, such as, "first", "second", or the like, may be omitted in consideration of readability of texts.
In the following description, symbols representative of physical amounts such as a magnetic flux, a voltage, a current, and the like may indicate vectors when written in bold font, and may indicate scholars when not written in bold font (when written in standard font).

[1.1 EMBODIMENT 1]

[1.1.1 CONFIGURATIONS]

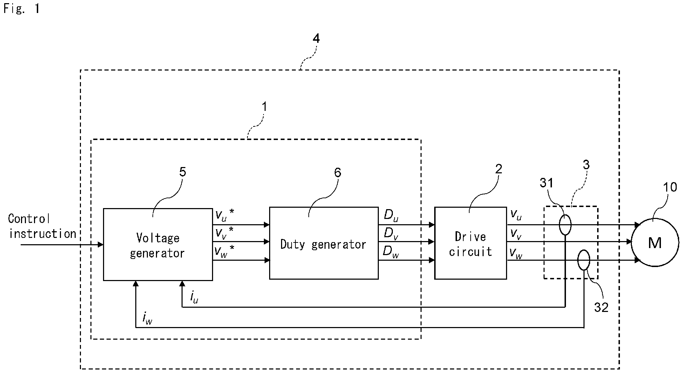

Fig. 1 is a block diagram of a configuration example of a synchronous-machine drive system 4 including a synchronous-machine control device 1 according to embodiment 1. The synchronous-machine drive system 4 of Fig. 1 is configured to control an operation of a synchronous machine (synchronous motor) 10 according to a control instruction.
The synchronous machine 10 is, for example, a blushless motor (three-phase blushless motor). The synchronous machine 10 includes, for example, a rotator and a stator, the stator provided in a vicinity of the rotator.

The synchronous-machine drive system 4 of Fig. 1 includes the synchronous-machine control device 1, a drive circuit 2, and the detection circuit 3.

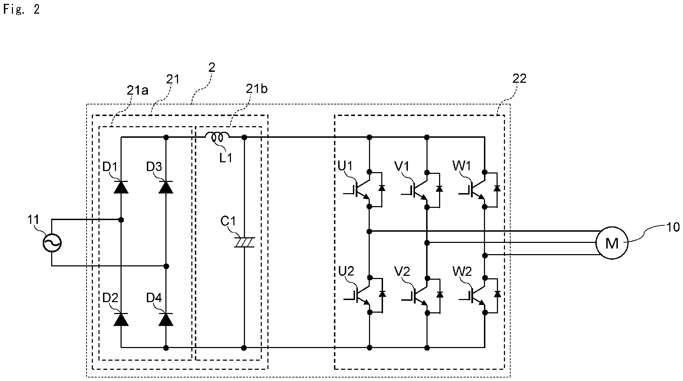

The drive circuit 2 is configured to drive the synchronous machine 10. Fig. 2 illustrates a circuit diagram of a configuration example of the drive circuit 2. The drive circuit 2 of Fig. 2 is connected between the synchronous machine 10 and the power supply 11. The drive circuit 2 of Fig. 2 is configured to supply drive power to the synchronous machine 10 based on power from the power supply 11. In the present embodiment, the power supply 11 is an alternating current power supply. The drive circuit 2 is configured to supply drive power to the synchronous machine 10 based on alternating current power from the power supply 11. Especially, the drive circuit 2 is configured to supply three-phase alternating current power to the synchronous machine 10, as the drive power. The drive circuit 2 includes a converter circuit 21 and an inverter circuit 22.

The converter circuit 21 is configured to convert alternating current power from the power supply 11 into direct current power. The converter circuit 21 includes a rectification circuit 21a and a smoothing circuit 21b. The rectification circuit 21a is a diode bridge constituted by a plurality of diodes D1 to D4. The power supply 11 is connected between input terminals (a connecting point between the diodes D1, D2 and a connecting point between the diodes D3, D4) of the rectification circuit 21a and the smoothing circuit 21b is connected between output terminals (a connecting point between the diodes D1, D3 and a connecting point between the diodes D2, D4) of the rectification circuit 21a. The smoothing circuit 21b includes a series circuit of an inductor L1 and a capacitor C1, and is configured to smooth a voltage between the output terminals of the rectification circuit 21a to output it as a voltage across the capacitor C1. Configurations of the rectification circuit 21a and the smoothing circuit 21b of Fig. 2 are known and detailed description thereof is omitted.

The inverter circuit 22 is configured to supply three-phase alternating current power to the synchronous machine 10 based on the direct current power from the converter circuit 21. The inverter circuit 22 includes a plurality of arms U1, U2, V1, V2, W1, and W2. Each of the plurality of arms U1, U2, V1, V2, W1, and W2 is constituted by a semiconductor switching element such as a transistor. A series circuit of the arms U1, U2 is connected in parallel to the capacitor C1 of the converter circuit 21 and constitutes a U-phase leg. A series circuit of the arms V1, V2 is connected in parallel to the capacitor C1 of the converter circuit 21 and constitutes a V-phase leg. A series circuit of the arms W1, W2 is connected in parallel to the capacitor C1 of the converter circuit 21 and constitutes a W-phase leg. The inverter circuit 22 is configured to output a U-phase output voltage $v_u$, a V-phase output voltage $v_v$, and a W-phase output voltage $v_w$ to the synchronous machine 10. Configuration of the inverter circuit 22 of Fig. 2 is known and detailed description thereof is omitted.

The detection circuit 3 of Fig. 1 is configured to detect a current flowing through the synchronous machine 10 and output a detected current indicative of this current (i.e., a detected value of a current flowing through the synchronous machine 10). In the present embodiment, the detection circuit 3 is configured to detect output alternating currents of the U-phase and W-phase legs of the drive circuit 2. The detection circuit 3 of Fig. 1 includes a first alternating current sensor 31 and a second alternating current sensor 32. The first alternating current sensor 31 is configured to detect an output alternating current (current value) of the U-phase leg of the drive circuit 2 and output a first detected current (first detected current value) indicative of the detected output alternating current (current value) $i_u$ to the synchronous-machine control device 1. The second alternating current sensor 32 is configured to detect an output alternating current (current value) of the W-phase leg of the drive circuit 2 and output a second detected current (second detected current value) indicative of the detected output alternating current (current value) $i_w$ to the synchronous-machine control device 1.

The synchronous-machine control device 1 of Fig. 1 is connectable to the drive circuit 2 and the detection circuit 3. The synchronous-machine control device 1 of Fig. 1 may be realized by a computer system including, at least, one or more processors (microprocessors) and one or more memories, for example. Alternatively, the synchronous-machine control device 1 of Fig. 1 may be configured by a logic circuit.

The synchronous-machine control device 1 of Fig. 1 is configured to drive the synchronous machine 10 according to a given control instruction. The synchronous-machine control device 1 is configured to perform a sensorless operation for speed and position of the synchronous machine 10. The sensorless operation for speed and position is an operation without using a positional sensor such as an encoder, a resolver, and the like.

The synchronous-machine control device 1 of Fig. 1 includes a voltage generator 5 and a duty generator 6. The voltage generator 5 and the duty generator 6 of Fig. 1 are visual representations of processing (e.g., signal processing, a transfer function, and the like) performed by the synchronous-machine control device 1 rather than tangible configurations.

The voltage generator 5 is configured to determine (identify) instruction voltages $v_u{}^*$, $v_v{}^*$, $v_w{}^*$ respectively corresponding to the U-phase output voltage $v_u$, the V-phase output voltage $v_v$ and the W-phase output voltage $v_w$ output from the drive circuit 2 to the synchronous machine 10, based on the control instruction and the detected current (the first detected current $i_u$ and the second detected current $i_w$) from the detection circuit 3. The voltage generator 5 is configured to update the instruction voltages $v_u{}^*$, $v_v{}^*$, $v_w{}^*$ at s predetermined control period. The voltage generator 5 will be described in detail later.

The duty generator 6 is configured to perform PWM control of the plurality of semiconductor switching elements of the inverter circuit 22 of the drive circuit 2 to allow the drive circuit 2 to operate the synchronous machine 10. In more detail, the duty generator 6 is configured to perform switching control of the plurality of semiconductor switching elements U1, U2, V1, V2, W1, W2 of the inverter circuit 22 to allow the inverter circuit 22 to supply the three-phase alternating current power to the synchronous machine 10 based on the direct current power from the smoothing circuit 21b. In the present embodiment, the duty generator 6 determines duty cycles $D_u$, $D_v$, $D_w$ of the U-phase, V-phase and W-phase legs of the drive circuit 2 to allow the drive circuit 2 to output the U-phase output voltage $v_u$, the V-phase output voltage $v_v$ and the W-phase output voltage $v_w$ respectively equal to the instruction voltages $v_u{}^*$, $v_v{}^*$, $v_w{}^*$ to the synchronous machine 10.

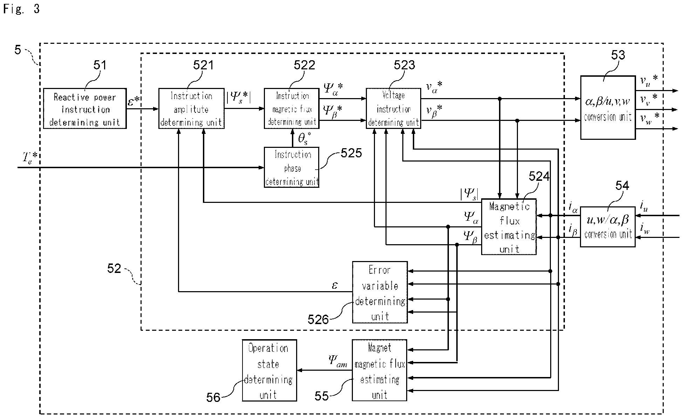

Fig. 3 illustrates a block diagram of a configuration example of the voltage generator 5 of the synchronous-machine control device 1. The voltage generator 5 of Fig. 3 includes a reactive power instruction determining unit 51, a synchronous-machine control unit 52, an $\alpha$, $\beta$/u, v, w conversion unit (two-phase to three-phase coordinate conversion unit) 53, a u, w/$\alpha$, $\beta$ conversion unit (three-phase to two-phase coordinate conversion unit) 54, a magnet magnetic flux estimating unit 55, and an operation state determining unit 56. Components of the voltage generator 5 shown in Fig. 3 (the reactive power instruction determining unit 51, the synchronous-machine control unit 52, the $\alpha$, $\beta$/u, v, w conversion unit 53, the u, w/$\alpha$, $\beta$ conversion unit 54, the magnet magnetic flux estimating unit 55, and the operation state determining unit 56) are visual representations of processing (e.g., signal processing and the like) performed by the synchronous-machine control device 1 rather than tangible configurations. This applies to embodiments described later.

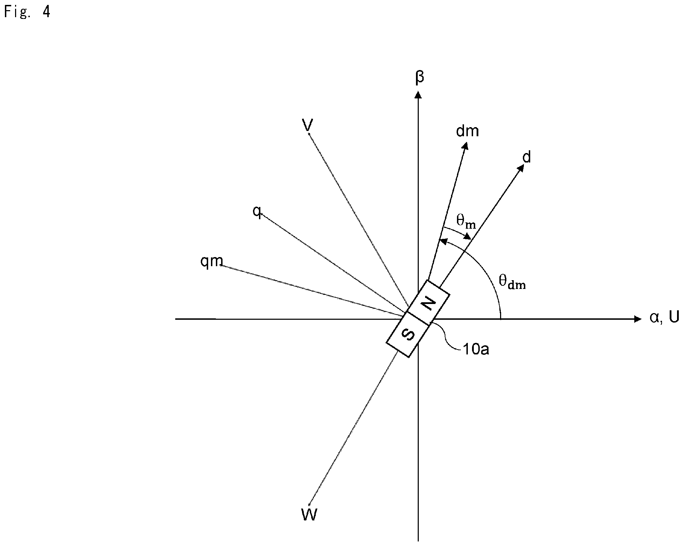

In the present embodiment, an operation of the synchronous-machine control device 1 will be described by use of a UVW coordinate system (UVW coordinate axes), an $\alpha\beta$ coordinate system ($\alpha\beta$ coordinate axes), a dq coordinate system (dq coordinate axes), and a dmqm coordinate system (dmqm coordinate axes). Fig. 4 illustrates an explanatory diagram of coordinate systems used in the synchronous-machine control device 1. With respect to the UVW coordinate system, the $\alpha\beta$ coordinate system, the dq coordinate system, and the dmqm coordinate system, angles mean electric angles.

The UVW coordinate system of Fig. 4 is a fixed coordinate system based on the stator of the synchronous machine 10 and is defined by a U axis, a V axis and a W axis spaced at 120 degrees intervals. The U axis, the V axis and the W axis are respectively corresponding to U-phase, V-phase and W-phase windings of the stator of the synchronous machine 10. The U axis, the V axis and the W axis do not rotate with rotation of the rotator of the synchronous machine 10. This means that the U axis, the V axis and the W axis are fixed axes.

The $\alpha\beta$ coordinate system of Fig. 4 is a two-dimensional Cartesian coordinate system and is defined by an a axis and a $\beta$ axis perpendicular to each other. The $\alpha$ axis is set to be aligned with the U axis. The $\beta$ axis is an axis obtained by rotating the $\alpha$ axis by 90 degrees in a direction of advance. Similarly to the UVW coordinate system, the $\alpha\beta$ coordinate system is a fixed coordinate system based on the stator of the synchronous machine 10.

The dq coordinate system of Fig. 4 is a rotating coordinate system based on the rotator (permanent magnet 10a) of the synchronous machine 10. The dq coordinate system is a two-dimensional Cartesian coordinate system and is defined by a d axis and a q axis perpendicular to each other. The d axis and the q axis rotate at the same rotational speed (the number of rotations) as the magnetic flux formed by the permanent magnet 10a relative to the $\alpha$ axis and the $\beta$ axis. The rotational speed of the magnetic flux formed by the permanent magnet 10a is equal to a rotational speed of the rotator of the synchronous machine 10. In Fig. 4, a counterclockwise direction is a direction of phase advance. The d axis is set as an axis extending in a direction of the magnetic flux formed by the permanent magnet 10a. The q axis is set to be an axis obtained by rotating the d axis by 90 degrees in a direction of advance.

The dmqm coordinate system of Fig. 4 is a coordinate system set to realize a maximum torque/ampere (maximum torque per ampere: MTPA) control. The dmqm coordinate system is a two-dimensional Cartesian coordinate system and is defined by a dm axis and a qm axis perpendicular to each other. The qm axis is set to allow a direction of the qm axis to be aligned with a direction of a current vector which should be supplied to the synchronous machine 10 to achieve the maximum torque/ampere control. This means that the qm axis is aligned with the current vector under the maximum torque/ampere control. The dm axis is an axis delayed from the qm axis by 90 degrees. In the dmqm coordinate system, the maximum torque/ampere control can be achieved by setting a dm axis current to zero, the dm axis current being a dm axis component of a current of the synchronous machine 10. Note that, in Fig. 4, $\theta$dm indicates an angle of the dmqm coordinate system relative to the $\alpha\beta$ coordinate system and $\theta$m indicates an angle of the dq coordinate system relative to the dmqm coordinate system.

Next, with reference to Fig. 3, the voltage generator 5 of the synchronous-machine control device 1 will be described in detail. First, explanation is made to parameters shown in the block diagram of Fig. 3. $\varepsilon^*$ is a target value of a reactive power component of the synchronous machine 10. $|\Psi_S{}^*|$ is an amplitude of an instruction magnetic flux $\Psi_S{}^*$ of the synchronous machine 10. $\Psi_\alpha{}^*$ is an $\alpha$ axis component of the instruction magnetic flux $\Psi_S{}^*$ of the $\alpha\beta$ coordinate system, and hereinafter may be referred to as an $\alpha$, axis instruction magnetic flux. $\Psi_\beta{}^*$ is a $\beta$ axis component of the instruction magnetic flux $\Psi_S{}^*$ of the $\alpha\beta$ coordinate system, and hereinafter may be referred to as a $\beta$ axis instruction magnetic flux. $\theta_S{}^*$ is a phase of the instruction magnetic flux $\Psi_S{}^*$ of the synchronous machine 10. $v_\alpha{}^*$ is an $\alpha$ axis component of the instruction voltage in the $\alpha\beta$ coordinate system, and hereinafter may be referred to as an $\alpha$ axis instruction voltage. $v_\beta{}^*$ is a $\beta$ axis component of the instruction voltage in the $\alpha\beta$ coordinate system, and hereinafter may be referred to as a $\beta$ axis instruction voltage. $i_\alpha$ is an $\alpha$ axis of the detected current in the $\alpha\beta$ coordinate system, and hereinafter may be referred to as an a axis detected current. $i_\beta$ is a $\beta$ axis of the detected current in the $\alpha\beta$ coordinate system, and hereinafter may be referred to as a $\beta$ axis

detected current. $|\Psi_S|$ is an amplitude of an estimated armature flux linkage $\Psi_S$ of the synchronous machine 10. $\Psi_\alpha$ is an $\alpha$ axis component of an estimated armature flux linkage in the $\alpha\beta$ coordinate system, and hereinafter referred to as an $\alpha$ axis estimated magnetic flux. $\Psi_\beta$ is a $\beta$ axis component of the estimated armature flux linkage in the $\alpha\beta$ coordinate system, and hereinafter referred to as a $\beta$ axis estimated magnetic flux. $\varepsilon$ is a reactive power component of the synchronous machine 10, and hereinafter referred to as an error variable. In Fig. 3, $T_e{}^*$ is an instruction torque as the control instruction. the instruction torque $T_e{}^*$ indicates a target value of a torque of the synchronous machine 10. The instruction torque $T_e{}^*$ may be provided from an external device to the synchronous-machine control device 1.

The reactive power instruction determining unit 51 of Fig. 3 is configured to determine the target value $\varepsilon^*$ of the reactive power component of the synchronous machine 10. The target value $\varepsilon^*$ is provided to the synchronous-machine control unit 52. The reactive power component of the synchronous machine 10 is given by an inner product of a magnet magnetic flux of the permanent magnet 10a of the synchronous machine 10 and a current flowing through the synchronous machine 10. To achieve the maximum torque/ampere control, a dm axis current $i_{dm}$ is set to 0 in the dmqm coordinate system. In this case, the inner product of the magnet magnetic flux of the permanent magnet 10a of the synchronous machine 10 and the current flowing through the synchronous machine 10 is zero, that is, the target value $\varepsilon^*$ of the reactive power component of the synchronous machine 10 is set to zero.

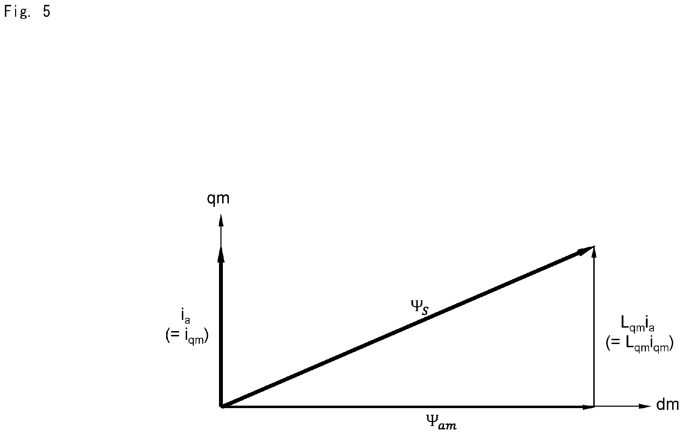

Fig. 5 is an explanatory diagram of current and flux vectors of the synchronous machine 10. Especially, Fig. 5 represents a relation among the armature flux linkage of the synchronous machine 10, an armature reaction flux of the synchronous machine 10, and a magnet magnetic flux of the permanent magnet 10a of the synchronous machine 10 when the reactive power component of the synchronous machine 10 is zero (the dm axis current $i_{dm}$ is zero). $\Psi_S$ is the armature flux linkage (vector) of the synchronous machine 10. $\Psi_{am}$ is the magnet magnetic flux (vector) of the permanent magnet 10a. Especially, $\Psi_{am}$ is the magnet magnetic flux (vector) of the permanent magnet 10a in the dmqm coordinate system. In the dmqm coordinate system, $\Psi_{am} = (\Psi_{am}, 0)$. $L_{qm}$ is an virtual inductance and means an inductance in the qm axis in the dmqm coordinate system. $i_a$ is a current (i.e., the detected current) (vector) flowing through the synchronous machine 10. In the dmqm coordinate system $i_a = (i_{dm}, i_{qm})$. The armature reaction flux of the synchronous machine 10 is represented by $L_{qm}i_a$. When the dm axis current $i_{dm}$ is zero, $i_a = (0, i_{qm})$. The armature reaction flux of the synchronous machine 10 satisfies that $L_{qm}i_a = (0, L_{qm}i_{qm})$.

In the case of Fig. 5, the armature reaction flux of the synchronous machine 10 and the magnet magnetic flux of the permanent magnet 10a of the synchronous machine 10 are perpendicular to each other. Therefore, when the reactive power component of the synchronous machine 10 is zero (when the dm axis current $i_{dm}$ is zero), a relation satisfied by the armature flux linkage $\Psi_S$ of the synchronous machine 10, the armature reaction flux $L_{qm}i_a$ of the synchronous machine 10, and the magnet magnetic flux $\Psi_{am}$ of the permanent magnet 10a of the synchronous machine 10 can be represented by the following equation (1).

[FORMULA 1]

$$\Psi_{am} = \sqrt{|\Psi_s|^2 - \left(L_{qm}|i_a|\right)^2} \qquad (1)$$

The synchronous-machine control unit 52 of Fig. 3 defines signal processing corresponding to a synchronous-machine control process. The synchronous-machine control process determines the instruction voltages $v_u{}^*$, $v_v{}^*$, $v_w{}^*$ and controls the drive circuit 2 to allow the drive circuit 2 to apply voltages $v_u$, $v_v$, $v_w$ corresponding to the instruction voltages $v_u{}^*$, $v_v{}^*$, $v_w{}^*$ to the synchronous machine 10. In the present embodiment, the synchronous-machine control unit 52 determines the $\alpha$ axis and $\beta$ axis instruction voltages $V_\alpha{}^*$, $V_\beta{}^*$ to determine the instruction voltages $v_u{}^*$, $v_v{}^*$, $v_w{}^*$.

The synchronous-machine control process determines the instruction voltages $v_u{}^*$, $v_v{}^*$, $v_w{}^*$ to allow the reactive power component of the synchronous machine 10 to satisfy a predetermined condition. In the present embodiment, the predetermined condition is that the reactive power component of the synchronous machine 10 becomes equal to the target value $\varepsilon^*$. In the present embodiment, the target value $\varepsilon^*$ is set to zero. Accordingly, in the present embodiment, the predetermined condition is that the reactive power component becomes zero.

The synchronous-machine control unit 52 of Fig. 3 includes an instruction amplitude determining unit 521, an instruction magnetic flux determining unit 522, a voltage instruction determining unit 523, a magnetic flux estimating unit 524, an instruction phase determining unit 525, and an error variable determining unit 526.

The instruction amplitude determining unit 521 is configured to determine an amplitude $|\Psi_S{}^*|$ of an instruction magnetic flux of the synchronous machine 10 for each control cycle. The amplitude $|\Psi_S{}^*|$ is determined to allow the reactive power component of the synchronous machine 10 to satisfy the predetermined condition. In the present embodiment, the predetermined condition is that the reactive power component becomes zero, and this means that the above equation (1) is satisfied.

The reactive power component $\varepsilon$ of the synchronous machine 10 is represented by the following equation (2).

[FORMULA 2]

$$\varepsilon = \Psi_{am} \cdot i_a \qquad (2)$$

The magnet magnetic flux $\Psi_{am}$ may contain an error (magnetic flux error) $\Psi_e$ originating from a voltage error and a resistance error in the drive circuit 2. In the dmqm coordinate system, considering the magnetic flux error $\Psi_e$, the magnet magnetic flux $\Psi_{am}$ can be represented by the following equation (3). In equation (3), $\Psi_{am0}$ represents an initial value (vector) of the magnet magnetic flux $\Psi_{am}$ and $\Delta\Psi_{am}$ represents a variable value (vector) of the magnet magnetic flux $\Psi_{am}$. in the dmqm coordinate system, $\Psi_{am0} = (\Psi_{am0}, 0)$ and $\Delta\Psi_{am} = (\Delta\Psi_{am}, 0)$.
[FORMULA 3]

$$\Psi_{am} = \Psi_{am0} + \Delta\Psi_{am} + \Psi_e \qquad (3)$$

The magnetic flux error $\Psi_e$ can be represented by the following equation (4). In equation (4), $\Delta V$ represents the voltage error and $\Delta R$ represents the resistance error.
[FORMULA 4]

$$\Psi_e = \int \Delta V dt + \int \Delta R i_a dt \qquad (4)$$

By use of aforementioned equations (3), (4), the reactive power component $\varepsilon$ of the synchronous machine 10 can be represented by the following equation (5).
[FORMULA 5]

$$\varepsilon = \left(\Psi_{am0} + \Delta\Psi_{am} + \int \Delta V dt + \int \Delta R i_a dt\right) i_a = (\Psi_{am0} + \Delta\Psi_{am}) i_{dm} \qquad (5)$$

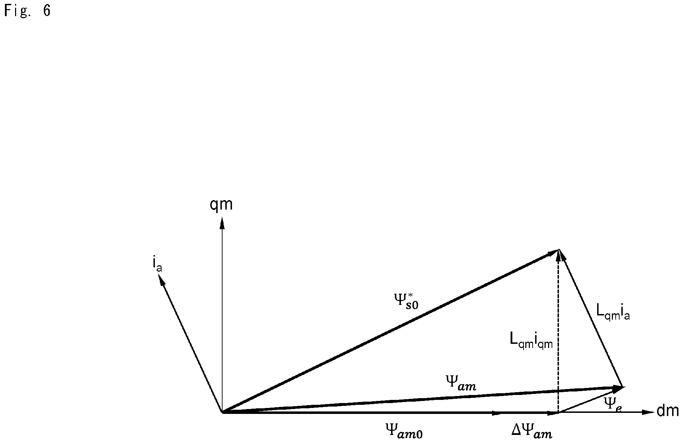

Fig. 6 is an explanatory diagram of the current and flux vectors of the synchronous machine 10. Especially, Fig. 6 shows the relation among the instruction magnetic flux $\Psi_{S0}{}^*$ set without consideration of the magnetic flux error $\Psi_e$, the armature reaction flux of the synchronous machine 10, and the magnet magnetic flux of the permanent magnet 10a of the synchronous machine 10. As to the instruction magnetic flux $\Psi_{S0}{}^*$, when the magnet magnetic flux $\Psi_{am}$ satisfies that $\Psi_{am} = \Psi_{am0} + \Delta\Psi_{am}$, the dm axis current $i_{dm}$ becomes zero but when the magnet magnetic flux $\Psi_{am}$ satisfies that $\Psi_{am} = \Psi_{am0} + \Delta\Psi_{am} + \Psi_e$, the dm axis current $i_{dm}$ does not become zero.

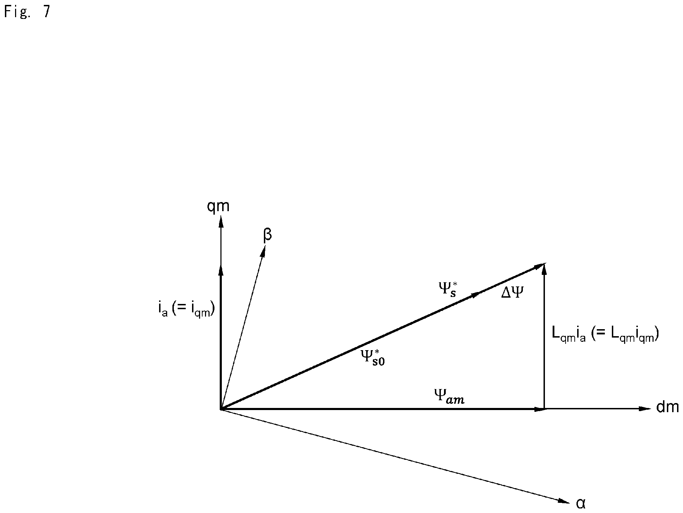

Fig. 7 is an explanatory diagram of the current and flux vectors of the synchronous machine 10. Especially, Fig. 7 shows the relation among the instruction magnetic flux $\Psi_{S0}{}^*$ set to allow the reactive power component $\varepsilon$ to become zero, the armature reaction flux of the synchronous machine 10, and the magnet magnetic flux of the permanent magnet 10a of the synchronous machine 10. As to the instruction magnetic flux $\Psi_{S0}{}^*$, when the magnetic flux $\Psi_{am}$ satisfies that $\Psi_{am} = \Psi_{am0} + \Delta\Psi_{am}$, the dm axis current $i_{dm}$ becomes zero but when the magnetic flux $\Psi_{am}$ satisfies that $\Psi_{am} = \Psi_{am0} + \Delta\Psi_{am} + \Psi_e$, the dm axis current $i_{dm}$ does not become zero. In Fig. 7, the instruction magnetic flux $\Psi_S{}^*$ satisfies that $\Psi_S{}^* = \Psi_{S0}{}^* + \Delta\Psi$. $\Delta\Psi$ represents a correction amount for correcting the instruction magnetic flux $\Psi_{S0}{}^*$ to the instruction magnetic flux $\Psi_S{}^*$ which allows the reactive power component $\varepsilon$ to become zero. When $\Delta\Psi$ is a scholar and the amplitude of the instruction magnetic flux $\Psi_{S0}{}^*$ is denoted by $|\Psi_{S0}{}^*|$, $|\Psi_S{}^*| = |\Psi_{S0}{}^*| + \Delta\Psi$ is satisfied. Setting the instruction magnetic flux $\Psi_S{}^*$ (the amplitude $|\Psi_S{}^*|$) to allow the reactive power component $\varepsilon$ of the synchronous machine 10 to become zero enables the maximum torque/ampere control.

The instruction amplitude determining unit 521 of Fig. 3 receives the target value $\varepsilon^*$ from the reactive power instruction determining unit 51, receives the amplitude $|\Psi_S|$ of the estimated armature flux linkage of the synchronous machine 10 from the magnetic flux estimating unit 524, and receives the reactive power component (error variable) $\varepsilon$ of the synchronous machine 10 from the error variable determining unit 526. In one example, the instruction amplitude determining unit 521 uses the amplitude $|\Psi_S|$ as the amplitude $|\Psi_{S0}{}^*|$ and perform feedback control to allow the error variable $\varepsilon$ to be equal to the target value $\varepsilon^*$ (a deviation of the error variable $\varepsilon$ from the target value $\varepsilon^*$ to be equal to zero) to determine a correction amount $\Delta\Psi$ and determine the amplitude $|\Psi_S{}^*|$ of the instruction magnetic flux $\Psi_S{}^*$. Examples of the feedback control may include proportional (P) control, proportional-integral (PI) control, proportional-derivative (PD) control and proportional-integral-derivative (PID) control. In the case of using PI control, the correction amount $\Delta\Psi$ is represented by the following equation (6). In equation (6), $K_P$ denotes a proportional gain, $K_I$ denotes an integral gain, and s denotes a Laplace operator.
[FORMULA 6]

$$\Delta \Psi = \left( K_P + \frac{K_I}{s} \right) (\varepsilon^* - \varepsilon) \qquad (6)$$

The instruction amplitude determining unit 521 provides the amplitude $|\Psi_S^*|$ of the instruction magnetic flux $\Psi_S^*$ to the instruction magnetic flux determining unit 522. Note that, when the amplitude $|\Psi_S|$ and the error variable $\varepsilon$ are not given in an initial state, predetermined initial values can be used respectively for the amplitude $|\Psi_S|$ and the error variable $\varepsilon$.

The instruction magnetic flux determining unit 522 determines the $\alpha$ axis instruction magnetic flux $\Psi_\alpha^*$ and the $\beta$ axis instruction magnetic flux $\Psi_\beta^*$. In detail, the instruction magnetic flux determining unit 522 determines, for each control cycle, the a axis instruction magnetic flux $\Psi_\alpha^*$ and the $\beta$ axis instruction magnetic flux $\Psi_\beta^*$ from the amplitude $|\Psi_S^*|$ and the phase $\theta_S^*$ of the instruction magnetic flux $\Psi_S^*$. In one example, the $\alpha$ axis instruction magnetic flux $\Psi_\alpha^*$ and the $\beta$ axis instruction magnetic flux $\Psi_\beta^*$ are represented by the following equations (7), (8), respectively.

[FORMULA 7]

$$\Psi_\alpha^* = |\Psi_S^*| \cos \theta_S^* \qquad (7)$$
$$\Psi_\beta^* = |\Psi_S^*| \sin \theta_S^* \qquad (8)$$

The instruction magnetic flux determining unit 522 of Fig. 3 receives the amplitude $|\Psi_S^*|$ from the instruction amplitude determining unit 521 and receives the phase $\theta_S^*$ from the instruction phase determining unit 525. The instruction magnetic flux determining unit 522 determines an $\alpha$ axis instruction magnetic flux $\Psi_\alpha^*$ and a $\beta$ axis instruction magnetic flux $\Psi_\beta^*$ from the amplitude $|\Psi_S^*|$ and the phase $\theta_S$, of the instruction magnetic flux $\Psi_S^*$. The instruction magnetic flux determining unit 522 provides the $\alpha$ axis instruction magnetic flux $\Psi_\alpha^*$ and the $\beta$ axis instruction magnetic flux $\Psi_\beta^*$ to the voltage instruction determining unit 523.

The voltage instruction determining unit 523 determines an $\alpha$ axis instruction voltage $v_\alpha^*$ and a $\beta$ axis instruction voltage $v_\beta^*$. In detail, the voltage instruction determining unit 523 determines the $\alpha$ axis instruction voltage $v_\alpha^*$ and the $\beta$ axis instruction voltage $v_\beta^*$ from the $\alpha$ axis instruction magnetic flux $\Psi_\alpha^*$, the $\beta$ axis instruction magnetic flux $\Psi_\beta^*$, the $\alpha$ axis estimated magnetic flux $\Psi_\alpha$, the $\beta$ axis estimated magnetic flux $\Psi_B$, the $\alpha$ axis detected current $i_\alpha$ and the $\beta$ axis detected current $i_\beta$, for each control cycle. In one example, the $\alpha$ axis instruction voltage $v_\alpha^*$ and the $\beta$ axis instruction voltage $v_\beta^*$ are represented by the following equations (9), (10), respectively. In the following equations (9), (10), Ts represents the control cycle, and Ra represents a winding resistor of the synchronous machine 10.

[FORMULA 8]

$$v_\alpha^* = \frac{\Psi_\alpha^* - \Psi_\alpha}{T_s} + R_a i_\alpha \qquad (9)$$

$$v_\beta^* = \frac{\Psi_\beta^* - \Psi_\beta}{T_s} + R_a i_\beta \qquad (10)$$

The voltage instruction determining unit 523 of Fig. 3 receives the $\alpha$ axis instruction magnetic flux $\Psi_\alpha^*$ and the $\beta$ axis instruction magnetic flux $\Psi_\beta^*$ from the instruction magnetic flux determining unit 522, receives the $\alpha$ axis estimated magnetic flux $\Psi_\alpha$ and the $\beta$ axis estimated magnetic flux $\Psi_\beta$ from the magnetic flux estimating unit 524, and receives the $\alpha$ axis detected current $i_\alpha$ and the $\beta$ axis detected current $i_\beta$ from the u, w/$\alpha$, $\beta$ conversion unit 54. The voltage instruction determining unit 523 determines an $\alpha$ axis instruction voltage $v_\alpha^*$ and a $\beta$ axis0instruction voltage $v_\beta^*$. The voltage instruction determining unit 523 provides the $\alpha$ axis instruction voltage $v_\alpha^*$ and the $\beta$ axis instruction voltage $v_\beta^*$ to the $\alpha$, $\beta$/u, v, w conversion unit53 and the magnetic flux estimating unit 524.

The magnetic flux estimating unit 524 estimates the armature flux linkage $\Psi_S$ of the synchronous machine 10. In the present embodiment, the magnetic flux estimating unit 524 calculates the amplitude $|\Psi_S|$ of the estimated armature flux linkage of the synchronous machine 10, the $\alpha$ axis estimated magnetic flux $\Psi_\alpha$, and the $\beta$ axis estimated magnetic flux $\Psi_\beta$. In detail, the magnetic flux estimating unit 524 calculates the amplitude $|\Psi_S|$, the $\alpha$ axis estimated magnetic flux $\Psi_\alpha$, and the $\beta$ axis estimated magnetic flux $\Psi_\beta$ from the $\alpha$ axis instruction voltage $v_\alpha^*$, the $\beta$ axis instruction voltage $v_\beta^*$, the $\alpha$ axis detected current $i_\alpha$, and the $\beta$ axis detected current $i_\beta$. In one example, the $\alpha$ axis estimated magnetic flux $\Psi_\alpha$, the $\beta$ axis estimated magnetic flux $\Psi_\beta$, and the amplitude $|\Psi_S|$ are represented by the following equations (11), (12), (13), respectively. In the following equation (11), $\Psi_{\alpha 0}$ denotes an initial value of the $\alpha$ axis estimated magnetic flux. In the following equation (12), $\Psi_{\beta 0}$ is an initial value of the $\beta$ axis estimated magnetic flux.

[FORMULA 9]

$$\Psi_\alpha = \int \left( v_\alpha^* - R_a i_\alpha \right) dt + \Psi_{\alpha 0} \qquad (11)$$

$$\Psi_\beta = \int \left( v_\beta^* - R_a i_\beta \right) dt + \Psi_{\beta 0} \qquad (12)$$

$$|\Psi_S| = \sqrt{|\Psi_\alpha|^2 + |\Psi_\beta|^2} \qquad (13)$$

The magnetic flux estimating unit 524 of Fig. 3 receives the $\alpha$ axis instruction voltage $v_\alpha^*$ and the $\beta$ axis instruction voltage $v_\beta^*$ from the voltage instruction determining unit 523 and receives the $\alpha$ axis detected current $i_\alpha$ and the $\beta$ axis detected current $i_\beta$ from the u, w/$\alpha$, $\beta$ conversion unit 54. The magnetic flux estimating unit 524 calculates the amplitude $|\Psi_S|$, the $\alpha$ axis estimated magnetic flux $\Psi_\alpha$, and the $\beta$ axis estimated magnetic flux $\Psi_\beta$. The magnetic flux estimating unit 524 provides the amplitude $|\Psi_S|$ to the instruction amplitude determining unit 521, and provides the $\alpha$ axis estimated magnetic flux $\Psi_\alpha$ and the $\beta$ axis estimated magnetic flux $\Psi_\beta$ to the voltage instruction determining unit 523, the error variable determining unit 526 and the magnet magnetic flux estimating unit 55.

The instruction phase determining unit 525 determines the phase $\theta_S^*$ of the instruction magnetic flux $\Psi_S^*$ of the synchronous machine 10. In Fig. 3, the instruction phase determining unit 525 receives the instruction torque $T_e^*$ as the control instruction. The instruction phase determining unit 525 determines the phase $\theta_S^*$ based on the instruction torque $T_e^*$. In one example, the instruction phase determining unit 525 calculates the rotational speed from the instruction torque $T_e^*$ and integrates the rotational speed based on the control cycle to determine the phase $\theta_S^*$. Note that, the instruction phase determining unit 525 may receive an instruction rotational speed $\omega_{ref}^*$ as the control instruction instead of the instruction torque $T_e^*$. In this case, the instruction phase determining unit 525 determines the phase $\theta_S^*$ based on the instruction rotational speed $\omega_{ref}^*$. In one example, the instruction phase determining unit 525 may determine the phase $\theta_S^*$ by integrating the instruction rotational speed $\omega_{ref}^*$ based on the control cycle. The instruction phase determining unit 525 provides the phase $\theta_S^*$ to the instruction magnetic flux determining unit 522.

The error variable determining unit 526 determines the error variable $\varepsilon$. The error variable $\varepsilon$ is defined as an inner product of the magnet magnetic flux $\Psi_{am}$ and the detected current $i_a$ (the reactive power component of the synchronous machine 10). In the present embodiment, the error variable determining unit 526 determines the error variable $\varepsilon$ from the $\alpha$ axis estimated magnetic flux $\Psi_\alpha$, the $\beta$ axis estimated magnetic flux $\Psi_\beta$, the $\alpha$ axis detected current $i_\alpha$, and the $\beta$ axis detected current $i_\beta$. When the $\alpha$ axis magnet magnetic flux of the magnet magnetic flux $\Psi_{am}$ in the $\alpha\beta$ coordinate system is denoted by $\Psi_{am\_\alpha}$ and the $\beta$ axis magnet magnetic flux of the magnet magnetic flux $\Psi_{am}$ in the $\alpha\beta$ coordinate system is denoted by $\Psi_{am\_\beta}$, the $\alpha$ axis magnet magnetic flux $\Psi_{am\_\alpha}$ is represented by the following equation (14) and the $\beta$ axis magnet magnetic flux $\Psi_{am\_\beta}$ is represented by the following equation (15).

[FORMULA 10]

$$\Psi_{am\_\alpha} = \Psi_\alpha - L_{qm} i_\alpha \qquad (14)$$

$$\Psi_{am\_\beta} = \Psi_\beta - L_{qm} i_\beta \qquad (15)$$

The error variable determining unit 526 calculates the inner product of the magnet magnetic flux $\Psi_{am}$ and the detected current $i_a$, that is, the error variable $\varepsilon$, from the $\alpha$ axis magnet magnetic flux $\Psi_{am\_\alpha}$, the $\alpha$ axis magnet magnetic flux $\Psi_{am\_\alpha}$, the $\alpha$ axis detected current $i_\alpha$, and the $\beta$ axis detected current $i_\beta$. By use of the $\alpha$ axis magnet magnetic flux $\Psi_{am\_\alpha}$, the $\alpha$ axis magnet magnetic flux $\Psi_{am\_\alpha}$, the $\alpha$ axis detected current $i_\alpha$, and the $\beta$ axis detected current $i_\beta$, the error variable $\varepsilon$ may be represented by the following equation (16) different from the above equation (5).

[FORMULA 11]

$$\varepsilon = \Psi_{am\_\alpha} i_\alpha + \Psi_{am\_\beta} i_\beta \qquad (16)$$

The error variable determining unit 526 of Fig. 3 receives the $\alpha$ axis estimated magnetic flux $\Psi_\alpha$ and the $\beta$ axis estimated magnetic flux $\Psi_\beta$ from the magnetic flux estimating unit 524, and receives the a axis detected current $i_\alpha$ and the $\beta$ axis detected current $i_\beta$ from the u, w/$\alpha$, $\beta$ conversion unit 54. The error variable determining unit 526 determines the error variable $\varepsilon$. The error variable determining unit 526 provides the error variable $\varepsilon$ to the instruction amplitude determining unit 521.

As described above, the synchronous-machine control process calculates the inner product (the error variable $\varepsilon$) of the magnet magnetic flux $\Psi_{am}$ and the detected current $i_a$ and performs the feedback control using the inner product (the error variable $\varepsilon$) to determine the amplitude $|\Psi_S*|$ of the instruction magnetic flux $\Psi_S*$ of the synchronous machine 10 to allow the reactive power component (the error variable $\varepsilon$) to satisfy the predetermined condition. In the present embodiment, the predetermined condition is that the reactive power component (the error variable $\varepsilon$) becomes zero. The synchronous-machine control process determines the phase $\theta_S*$ of the instruction magnetic flux $\Psi_S*$ based on the instruction torque $T_e*$ of the synchronous machine 10. The synchronous-machine control process determines the $\alpha$ axis instruction voltage $v_\alpha*$ and the $\beta$ axis instruction voltage $v_\beta*$ based on the amplitude $|\Psi_S*|$ and the phase $\theta_S*$ of the instruction magnetic flux $\Psi_S*$ to thereby determine the instruction voltages $v_u*$, $v_v*$, $v_w*$.

The $\alpha$, $\beta$/u, v, w conversion unit 53 of Fig. 3 coverts the $\alpha$ axis instruction voltage $v_\alpha*$ and the $\beta$ axis instruction voltage $v_\beta*$ into the instruction voltages $v_u*$, $v_v*$, $v_w*$ in the UVW coordinate system. In one example, the instruction voltages $v_u*$, $v_v*$, $v_w*$ are represented by the following equation (17).

[FORMULA 12]

$$\begin{bmatrix} v_u^* \\ v_v^* \\ v_w^* \end{bmatrix} = \begin{bmatrix} \sqrt{2/3} & 0 \\ -\sqrt{1/6} & \sqrt{1/2} \\ -\sqrt{1/6} & -\sqrt{1/2} \end{bmatrix} \begin{bmatrix} v_\alpha^* \\ v_\beta^* \end{bmatrix} \qquad (17)$$

The $\alpha$, $\beta$/u, v, w conversion unit 53 provides the instruction voltages $v_u*$, $v_v*$, $v_w*$ to the duty generator 6.

The u, w/$\alpha$, $\beta$ conversion unit 54 of Fig. 3 converts the detected currents $i_u$, $i_w$ in the UVW coordinate system into the $\alpha$ axis detected current $i_\alpha$ and the $\beta$ axis detected current $i_\beta$. In one example, the $\alpha$ axis detected current $i_\alpha$ is represented by the following equation (18) and the $\beta$ axis detected current $i_\beta$ is represented by the following equation (19).

[FORMULA 13]

$$i_\alpha = \sqrt{\frac{3}{2}} i_u \qquad (18)$$

$$i_\beta = -\sqrt{\frac{1}{2}} i_u - \sqrt{2} i_w \qquad (19)$$

The u, w/$\alpha$, $\beta$ conversion unit 54 provides the $\alpha$ axis detected current $i_\alpha$ and the $\beta$ axis detected current $i_\beta$ to the synchronous-machine control unit 52 and the magnet magnetic flux estimating unit 55.

The magnet magnetic flux estimating unit 55 of Fig. 3 defines signal processing corresponding to the magnet magnetic flux estimating process. The magnet magnetic flux estimating process estimates the magnet magnetic flux $\Psi_{am}$ of the permanent magnet 10a of the synchronous machine 10. To estimate the magnet magnetic flux $\Psi_{am}$, a relation is used, the relation being satisfied by the armature flux linkage of the synchronous machine 10, the armature reaction flux of the synchronous machine 10, and the magnet magnetic flux $\Psi_{am}$ of the permanent magnet 10a of the synchronous machine 10 when the reactive power component $\varepsilon$ of the synchronous machine 10 satisfies the predetermined condition. The predetermined condition is that the reactive power component of the synchronous machine 10 is zero. In this case, the relation satisfied by the armature flux linkage $\Psi_S$ of the synchronous machine 10, the armature reaction flux $L_{qm}i_a$ of the synchronous machine 10, and the magnet magnetic flux $\Psi_{am}$ of the permanent magnet 10a of the synchronous machine 10 is represented by equation (1) as already described above. Therefore, using equation (1) enables calculation of the magnet magnetic flux $\Psi_{am}$ from the armature flux linkage $\Psi_S$ and the armature reaction flux $L_{qm}i_a$.

The armature flux linkage $\Psi_S$ is calculated from the detected current and the instruction voltage. In detail, as shown in the above equations (11) to (13), the amplitude $|\Psi_S|$ of the armature flux linkage $\Psi_S$ is calculated from the detected current (the $\alpha$ axis detected current $i_\alpha$, the $\beta$ axis detected current $i_\beta$) and the instruction voltage (the $\alpha$ axis instruction voltage $v_\alpha*$, the $\beta$ axis instruction voltage $v_\beta*$). The armature reaction flux $L_{qm}i_a$ is calculated from the inductance ($L_{qm}$) of the synchronous machine 10 and the detected current (the $\alpha$ axis detected current $i_\alpha$, the $\beta$ axis detected current $i_\beta$). In this

regard, $|i_a| = \sqrt{(i_\alpha^2 + i_\beta^2)}$.

In the present embodiment, the magnet magnetic flux estimating unit 55 receives the $\alpha$ axis estimated magnetic flux $\Psi_\alpha$ and the $\beta$ axis estimated magnetic flux $\Psi_\beta$ from the magnetic flux estimating unit 524, and receives the $\alpha$ axis detected current $i_\alpha$ and the $\beta$ axis detected current $i_\beta$ from the u, w/$\alpha$, $\beta$ conversion unit 54. The magnet magnetic flux estimating unit 55 estimates the magnet magnetic flux $\Psi_{am}$ from the above equation (1) using the $\alpha$ axis estimated magnetic flux $\Psi_\alpha$, the $\beta$ axis estimated magnetic flux $\Psi_\beta$, the $\alpha$ axis detected current $i_\alpha$, and the $\beta$ axis detected current $i_\beta$. The magnet magnetic flux estimating unit 55 provides the magnet magnetic flux $\Psi_{am}$ to the operation state determining unit 56.

As described above, the magnet magnetic flux estimating process estimates the magnet magnetic flux $\Psi_{am}$ from the armature flux linkage (estimated magnetic flux $\Psi_s$) calculated from the detected current (the $\alpha$ axis detected current $i_\alpha$ and the $\beta$ axis detected current $i_\beta$) and the instruction voltage (the $\alpha$ axis instruction voltage $v_\alpha^*$ and the $\beta$ axis instruction voltage $v_\beta^*$) and the armature reaction flux ($L_{qm}i_a$) calculated from the inductance ($L_{qm}$) of the synchronous machine 10 and the detected current (the $\alpha$ axis detected current $i_\alpha$ and the $\beta$ axis detected current $i_\beta$), based on the relation (the relation of the above equation (1)) satisfied by the armature flux linkage of the synchronous machine 10, the armature reaction flux of the synchronous machine 10 and the magnet magnetic flux $\Psi_{am}$ of the permanent magnet 10a of the synchronous machine 10 when the reactive power component $\varepsilon$ of the synchronous machine 10 satisfies the predetermined condition. As apparent from equation (1), equation (1) is calculation using a magnetic flux and does not contain the instruction voltage and the winding resistance as such. Therefore, it is unlikely to be affected by voltage errors. Thus, it is possible to improve the accuracy of estimation of the magnet magnetic flux of the permanent magnet 10a of the synchronous machine 10.

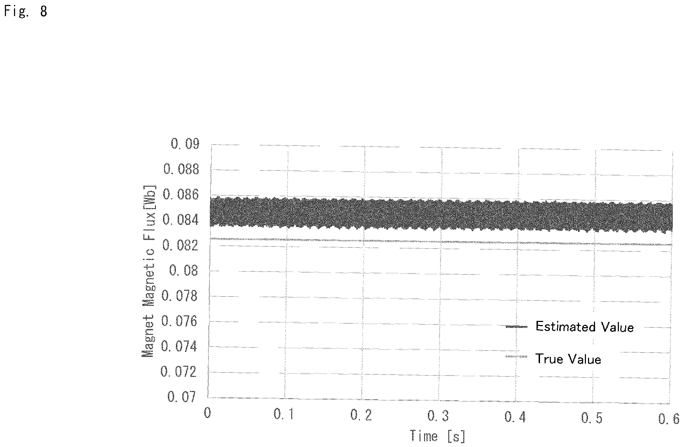

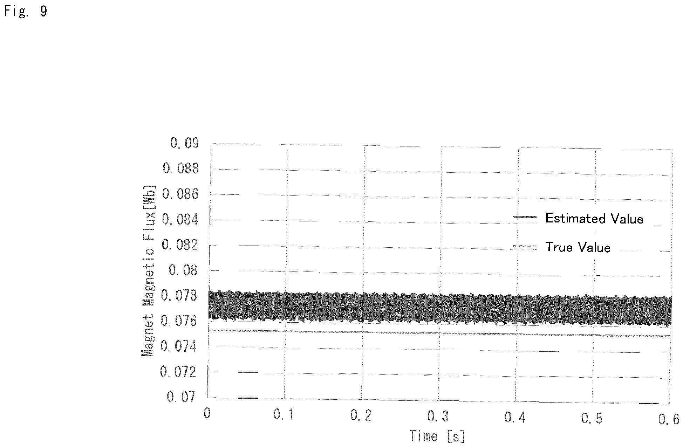

To confirm the estimation accuracy of the flux (the magnet magnetic flux $\Psi_{am}$) of the permanent magnet 10a of the synchronous machine 10 by the synchronous-machine control device 1, a simulation was conducted to calculate the estimated value of the magnet magnetic flux $\Psi_{am}$. Fig. 8 is a graph representing one example of comparison between an estimated value and a true value, of the magnet magnetic flux $\Psi_{am}$ by the synchronous-machine control device 1. In Fig. 8, an error between the estimated value and the true value, of the magnet magnetic flux $\Psi_{am}$ is less than 3%, and the relatively high estimation accuracy was confirmed. Fig. 9 is a graph representing another example of comparison between an estimated value and a true value, of the magnet magnetic flux $\Psi_{am}$ by the synchronous-machine control device 1. Regarding Fig. 9, a simulation was conducted to calculate the estimated value of the magnet magnetic flux $\Psi_{am}$ under an assumption that the permanent magnet 10a lost about 10% of its magnetism. In Fig. 9, an error between the estimated value and the true value, of the magnet magnetic flux $\Psi_{am}$ is less than 3%, and the relatively high estimation accuracy was confirmed. Comparison between the estimated value of Fig. 8 and the estimated value of Fig. 9 reveals that the estimated value of Fig. 9 is lower than the estimated value of Fig. 8 by about 10% of the estimated value of Fig. 8. Therefore it is confirmed that the estimated value of Fig. 9 accurately reflects demagnetization of the permanent magnet 10a.

The operation state determining unit 56 of Fig. 3 determines an operation state of the synchronous machine 10 based on the magnet magnetic flux $\Psi_{am}$. Examples of the operation state may include a surrounding temperature of the synchronous machine 10, a permanent change in a flux (irreversible demagnetization) of a permanent magnet of the synchronous machine 10, and presence or absence of a layer short of the synchronous machine 10. In one example, the operation state determining unit 56 may determine whether the synchronous machine 10 is in an abnormal state or a normal state. The magnet magnetic flux $\Psi_{am}$ is known to have a negative correlation with the temperature of the permanent magnet 10a. Further, a demagnetization amount of the magnet magnetic flux $\Psi_{am}$ is known to have a positive correlation with the temperature of the permanent magnet 10a. The demagnetization amount is defined as a value obtained by subtracting an estimated value of the magnet magnetic flux $\Psi_{am}$ at a given point of time from a standard value of the magnet magnetic flux $\Psi_{am}$. The temperature of the permanent magnet 10a has a positive correlation with the surrounding temperature of the synchronous machine 10. Therefore, using the magnet magnetic flux $\Psi_{am}$ allows for determining whether the surrounding temperature of the synchronous machine 10 exceeds a predetermined temperature. When the surrounding temperature of the synchronous machine 10 is determined to exceed the predetermined temperature based on the magnet magnetic flux $\Psi_{am}$, the synchronous-machine control device 1 performs the stop process of stopping the synchronous machine 10.

[1.1.2 APPLICATION EXAMPLES]

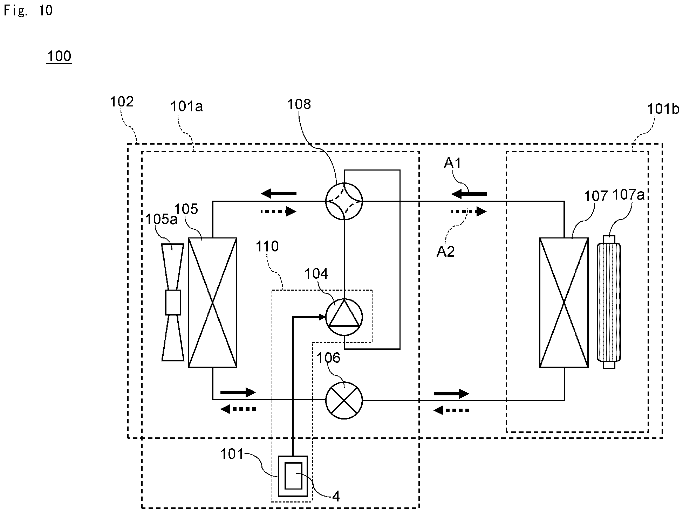

The aforementioned synchronous-machine drive system 4 (the synchronous-machine control device 1) is applicable to refrigeration-cycle devices. Fig. 10 illustrates a block diagram of a configuration example of a refrigeration-cycle device 100 according to embodiment 1. The refrigeration-cycle device 100 of Fig. 10 constitutes an air conditioner enabling a cooling operation and a heating operation, for example.

The refrigeration-cycle device 100 of Fig. 10 includes a refrigeration cycle circuit 102 and a control device 101.

The refrigeration cycle circuit 102 constitutes a fluidic pathway where the working medium circulates. In the present embodiment, the working medium contains ethylene-based fluoroolefin as a refrigerant component. The ethylene-based fluoroolefin may be ethylene-based fluoroolefin likely to undergo a disproportionation reaction. Examples of the ethylene-based fluoroolefin likely to undergo a disproportionation reaction may include 1,1,2-trifluoroethylene (HFO1123), trans-1,2-difluoroethylene (HFO1132(E)), cis-1,2-difluoroethylene (HFO-1132(Z)), 1,1-difluoroethylene (HFO-1132a), tetrafluoroethylene ($CF_2=CF_2$, FO1114), or monofluoroethylene (HFO-1141).

The working medium may include a plurality of types of refrigerant components. The working medium may contain ethylene-based fluoroolefin as a main refrigerant component, and additionally contain one or more chemical compounds other than ethylene-based fluoroolefin as one or more auxiliary refrigerant components. Examples of the auxiliary refrigerant components may include hydrofluorocarbons (HFC), liydrofluoroolefins (HFO), saturated hydrocarbons, and carbon dioxide. Examples of hydrofluorocarbons (HFC) may include difluoromethane, difluoroethane, trifluoroethane, tetrafluoroethane, pentafluoroethane, pentafluoropropane, hexafluoropropane, heptafluoropropane, pentafluorobutane, and heptafluorocyclopentane. Examples of hydrofluoroolefins (HFO) may include monofluoropropene, trifluoropropene, tetrafluoropropene, pentafluoropropene, and hexafluorobutene. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimetliylpropane), and methylcyclobutane.

The working medium may further contain a disproportionation inhibitor for suppressing a disproportionation reaction of the ethylene-based fluoroolefin. Examples of the disproportionation inhibitor may include a saturated hydrocarbon or a haloalkane. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. In the above examples, n-propane is preferred. Examples of haloalkanes may include haloalkanes having one or two carbon atoms and fluoroalkane having one, two or three carbon atoms with a boiling point not greater than 0 °C. Examples of haloalkanes having one carbon atom (i.e., halomethanes) may include (mono)iodomethane ($CH_3I$), diiodomethane ($CH_2I_2$), dibromomethane ($CH_2Br_2$), bromomethane ($CH_3Br$), dichloromethane ($CH_2Cl_2$), chloroiodomethane ($CH_2ClI$), dibromochloromethane ($CHBr_2Cl$), tetraiodomethane ($CI_4$), carbon tetrabromide ($CBr_4$), bromotrichloromethane ($CBrCl_3$), dibromodichloromethane ($CBr_2Cl_2$), tribromofluoromethane ($CBr_3F$), fluorodiiodomethane ($CHFI_2$), difluorodiiodomethane ($CF_2I_2$), and dibromodifluoromethane ($CBr_2F_2$), trifluoroiodomethane ($CF_3I$), and difluoroiodomethane ($CHF_2I$). Examples of haloalkanes with two carbon atoms (i.e. haloethanes) may include 1,1,1-trifluoro-2-iodoethane ($CF_3CH_2I$), monoiodoethane ($CH_3CH_2I$), monobromoethane ($CH_3CH_2Br$), and 1,1,1-triiodoethane ($CH_3Cl_3$). Examples of fluoroalkane having one to three carbon atoms with a boiling point not greater than 0 °C may include: fluoromethanes such as fluoromethane (boiling point of -78.2 °C), difluoromethane (boiling point of .6 °C), trifluoromethane (boiling point of -84.4 °C), tetrafluoromethane (boiling point of -127.8 °C), fluoroethanes such as fluoroethane (boiling point of -37.1 °C), 1,1-difluoroethane (boiling point of -24.7 °C), 1,1,1-trifluoroethane (boiling point of -47.2 °C), 1,1,1,2-tetrafluoroethane (boiling point of -26.3 °C), 1,1,1,2,2-pentafluoroethane (boiling point of -48.5 °C); and fluoropropanes such as 1-fluoropropane (boiling point of -2.5 °C), 2-fluoropropane (boiling point of -10.0 °C), 2,2-difluoropropane (boiling point of -1.0 °C), 1,1,1-trifluoropropane (boiling point of -12.0 °C), 1,1,2,2-tetrafluoropropane (boiling point of -0.8 °C), 1,1,1,3,3,3-hexafluoropropane (boiling point of -1.4 °C). The working medium may contain one or more types of saturated hydrocarbons or haloalkanes. In other words, the saturated hydrocarbons or haloalkanes may be used alone or in combination of two or more types.

The refrigeration cycle circuit 102 of Fig. 10 includes a compressor 104, a first heat exchanger 105, an expansion valve 106, a second heat exchanger 107, and a four-way valve 108.

The refrigeration-cycle device 100 of Fig. 10 includes an outdoor unit 101a and an indoor unit 101b. The outdoor unit 101a includes the control device 101, the compressor 104, the first heat exchanger 105, the expansion valve 106, and the four-way valve 108. The first heat exchanger 105 enables heat exchange between the outdoor air and the working medium. The outdoor unit 101a further includes a first air blower 105a for facilitating heat exchange at the first heat exchanger 105. The indoor unit 101b includes the second heat exchanger 107. The second heat exchanger 107 enables heat exchange between the indoor air and the working medium. The indoor unit 101b further includes a second air blower 107a for facilitating heat exchange at the second heat exchanger 107.

In the refrigeration cycle circuit 102 of Fig. 10, the compressor 4 compresses the working medium to increase a pressure of the working medium. The compressor 4 would be described in detail later. The first heat exchanger 105 and the second heat exchanger 107 enable heat exchange between the working medium circulating in the refrigeration cycle circuit 102 and external air (e.g., the outdoor air or the indoor air). The expansion valve 106 regulates the pressure (evaporation pressure) of the working medium and regulates a flow volume of the working medium. The four-way valve 108 switches a direction of the working medium circulating in the refrigeration cycle circuit 102 between a first direction corresponding to the cooling operation and a second direction corresponding to the heating operation.

In the present embodiment, as shown by a solid arrow A1 in Fig. 1, the first direction is a direction in which the working medium circulates in the refrigeration cycle circuit 102 in the order of the compressor 104, the first heat exchanger 105, the expansion valve 106, and the second heat exchanger 107.

In the cooling operation, the compressor 104 compresses and discharges the gaseous working medium, and thus the gaseous working medium is sent to the first heat exchanger 105 through the four-way valve 108. The first heat exchanger 105 conducts heat exchange between the outdoor air and the gaseous working medium and then the gaseous working medium is condensed to be liquefied. The liquid working medium is decompressed by the expansion valve 106 and is sent to the second heat exchanger 107. The second heat exchanger 107 conducts heat exchange between the liquid working medium and the indoor air, and then the liquid working medium evaporates to become the gaseous working medium. The gaseous working medium returns to the compressor 104 through the four-way valve 108. In the cooling operation, the first heat exchanger 105 functions as a condenser, and the second heat exchanger 107 functions as an evaporator. Thus, the indoor unit 101b sends air cooled via heat exchange at the second heat exchanger 107 to an interior during cooling.

In the present embodiment, as shown by a broken arrow A2 in Fig. 10, the second direction is a direction in which the working medium circulates in the refrigeration cycle circuit 102 in the order of the compressor 104, the second heat exchanger 107, the expansion valve 106, and the first heat exchanger 105.

In the heating operation, the compressor 104 compresses and discharges the gaseous working medium, and thus the gaseous working medium is sent to the second heat exchanger 107 through the four-way valve 108. The second heat exchanger 107 conducts heat exchange between the indoor air and the gaseous working medium and then the gaseous working medium is condensed to be liquefied. The liquid working medium is decompressed by the expansion valve 106 and is sent to the first heat exchanger 105. The first heat exchanger 105 conducts heat exchange between the liquid working medium and the outdoor air, and then the liquid working medium evaporates to become the gaseous working medium. The gaseous working medium returns to the compressor 104 through the four-way valve 108. In the heating operation, the second heat exchanger 107 functions as a condenser, and the first heat exchanger 105 functions as an evaporator. Thus, the indoor unit 101b sends air warmed via heat exchange at the second heat exchanger 107 to an interior during the heating.

The control device 101 of Fig. 10 controls the refrigeration cycle circuit 102. In detail, the control device 101 controls the compressor 104, the first air blower 105a, then expansion valve 106, the second air blower 107a, and the four-way valve 108.

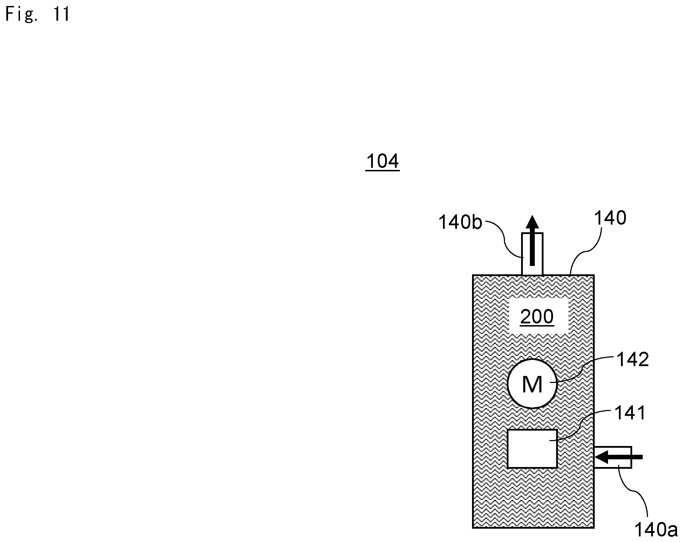

Fig. 11 is a schematic diagram of a configuration example of the compressor 104 of the refrigeration-cycle device 100.

The compressor 104 is, for example, a hermetically sealed compressor. The compressor 104 may be of a rotary type, a scroll type, or other well-known type. The compressor 104 of Fig. 11 includes a sealed container 140, a compression mechanism 141, and a synchronous machine 142.

The sealed container 140 of Fig. 11 constitutes a fluidic pathway for the working medium 200. The sealed container 140 includes a suction pipe 140a and a discharge pipe 140b. The working medium 200 is suctioned into the sealed container 140 via the suction pipe 140a and then is compressed by the compression mechanism 141 and thereafter is discharged to an exterior of the sealed container 140 via the discharge pipe 140b. The inside of the sealed container 140 is filled with the working medium 200 with a high temperature and a high pressure together with a lubricating oil. The sealed container 140 has a bottom part which constitutes an oil reservoir for storing a mixed liquid of the working medium 200 and the lubricating oil.

The compression mechanism 141 is positioned inside the sealed container 140 to compress the working medium 200. The compression mechanism 141 may have a conventional configuration. For example, the compression mechanism 141 may include a cylinder forming a compression chamber, a rolling piston disposed in the compression chamber inside the cylinder, and a crank shaft coupled to the rolling piston.

The synchronous machine 142 is positioned inside the sealed container 140 to operate the compression mechanism 141. The synchronous machine 142 is a blushless motor (three-phase blushless motor), for example. The synchronous machine 142 includes a plurality of windings (stator windings). The plurality of windings include a U-phase winding, a V-phase winding, and a W-phase winding. The synchronous machine 142 includes a rotator (permanent magnet) fixed to the crank shaft of the compression mechanism 141 and a stator provided in a vicinity of the rotator, for example. The stator is configured by concentrated or distributed winding of windings (magnet wires) around a stator core (electrical or magnetic steel sheet or the like) with an insulation paper in-between. The windings are covered with insulating material. Examples of the insulating material may include polyethylene terephthalate (PET), polyethylene naphthalate (PEN), aramid polymer, and polyphenylene sulfide (PPS).

The compressor 104 may include an accumulator for preventing liquid compression in the compression chamber of the compression mechanism 141. The accumulator separates the working medium 200 into the gaseous working medium and the liquid working medium and directs only the gaseous working medium to the sealed container 140 via the suction pipe 140a.

The control device 101 of Fig. 10 includes the synchronous-machine drive system 4 of Fig. 1. The synchronous-machine drive system 4 is used to drive the synchronous machine 142 of Fig. 11 instead of the synchronous machine of Fig. 1. The control device 101 of Fig. 10 constitutes a compression system 110 together with the compressor 104.

The control device 101 is configured to drive the synchronous machine 142 of the compressor 104 by use of the synchronous-machine drive system 4. Especially, the control device 101 inputs the control instruction (In the present embodiment, the instruction torque $T_e$*) into the synchronous-machine drive system 4 to drive the compression mechanism 141 of the compressor 140. In the present embodiment, the control device 101 further an opening degree of the expansion valve 106, a rotational number of a fan of the first air blower 105a, a rotational number of a fan of the second air blower 107a, and switching of the four-way valve 108.

In the synchronous-machine drive system 4, as described above, the operation state determining unit 56 of the synchronous-machine control device 1 determines the operation state of the synchronous machine 10 based on the magnet magnetic flux $\Psi_{am}$. The synchronous-machine control device 1 is configured to perform the stop process of stopping the synchronous machine 10 when the surrounding temperature of the synchronous machine 10 is determined to exceed the predetermined temperature based on the magnet magnetic flux $\Psi_{am}$. Thereby, it is possible to suppress a disproportional reaction of the working medium circulating through the refrigeration cycle circuit 102.

Factors of a disproportionation reaction of the working medium are considered to include heat and radicals. For example, it is considered that a disproportionation reaction of the working medium may progress when radicals are generated under a high temperature and high pressure environment. Radicals may be generated by a discharge phenomenon which may be triggered when something abnormal occurs at the compressor 104 or the drive circuit 2.

Aiming to suppress a disproportional reaction of the working medium, the predetermined temperature is, for example, lower than a safety temperature of the working medium and is lower than a heatproof (heat-resistant) temperature of an insulating member of the synchronous machine 142 of the compressor 104.

The safety temperature of the working medium may be set based on a temperature at which a disproportionation reaction of the working medium occurs under a pressure condition in a case of normal operation of the refrigeration-cycle device 100. In one example, the safety temperature of the working medium is set to 150 °C.

The heatproof temperature of the synchronous machine 142 of the compressor 104 may be set based on a heatproof temperature of an insulating member of the synchronous machine 142 of the compressor 104, for example. For instance, the heatproof temperature of the insulating member of the synchronous machine 142 may be a heatproof temperature of an insulating component with a heatproof temperature which is the lowest of heatproof temperatures of insulating components of the synchronous machine 142. When the operation of the refrigeration-cycle device 100 continues under a situation where the internal temperature exceeds the heatproof temperature, insulating paper may be destroyed and this may result in an increase in a probability of occurrence of a discharge phenomenon. In one example, an insulating component the heatproof temperature of which is the lowest in the synchronous machine 142 may be insulating paper between a stator core (electrical or magnetic steel sheet or the like) and a stator winding (magnet wire or the like). The insulating paper has a heatproof temperature of 120 °C when its thermal class is E defined in JIS C 4003, for example.

When the safety temperature of the working medium is 150 °C and the heatproof temperature of the synchronous machine 142 of the compressor 104 is 120 °C, the predetermined temperature is set to a temperature lower than 120 °C. In this case, a safety margin may be set to about 5 °C in consideration of a temperature detection time difference between a temperature of the working medium and a stator, or heat dissipation. Thus, the predetermined temperature may be set to 115 °C. The safety margin may depend on a motor efficiency, and therefore it may not be 5 °C but may be a value within a range of 0 to 20 °C.

The thermal class of the insulating paper may not be limited to E, but may be B, F, or the like. When the thermal class is B, the heatproof temperature is 130 °C. When the safety temperature of the working medium is 150 °C, the predetermined temperature is set to a temperature lower than 130 °C, e.g., 125 °C. When the thermal class is F, the heatproof temperature is 155 °C. When the safety temperature of the working medium is 150 °C, the predetermined temperature is set to a temperature lower than 150 °C, e.g., 145 °C.

The synchronous-machine control device 1 is configured to, when the surrounding temperature of the synchronous machine 142 is determined to exceed the predetermined temperature, continues the stop of the operation of the drive circuit 2. When the surrounding temperature of the synchronous machine 142 exceeds the predetermined temperature, a disproportionation reaction of the working medium may be considered to be more likely to progress. Accordingly, to suppress a disproportionation reaction of the working medium, the synchronous-machine control device 1 keeps stopping the operation of the drive circuit 2. As described above, when the surrounding temperature of the synchronous machine 142 is determined to exceeded the predetermined temperature, the operation of the drive circuit 2 is stopped. In this case, the synchronous-machine control device 1 may output error notification indicating that there may be a possibility of occurrence of a disproportionation reaction of the working medium. When the surrounding temperature of the synchronous machine 142 is equal to or lower than the predetermined temperature, the synchronous-machine control device 1 restarts or resumes the operation of the drive circuit 2.

[1.1.3 ADVANTAGEOUS EFFECTS]

The aforementioned synchronous-machine control device 1 is connectable to the drive circuit 2 configured to drive the synchronous machine 10 and the detection circuit 3 configured to detect a current flowing through the synchronous machine 10 to output a detected current indicative of the current. The synchronous-machine control device

1 includes functions of performing: the synchronous machine controlling process of determining an instruction voltage to be applied across the synchronous machine 10 and controlling the drive circuit 2 to allow the drive circuit 2 to apply a voltage corresponding to the instruction voltage across the synchronous machine 10; and the magnet magnetic flux estimating process of estimating a magnet magnetic flux of the permanent magnet 10a of the synchronous machine 10. The synchronous machine controlling process determines the instruction voltage to allow a reactive power component of the synchronous machine 10 to satisfy the predetermined condition. The magnet magnetic flux estimating process estimates, based on a relation satisfied by an armature flux linkage of the synchronous machine 10, an armature reaction flux of the synchronous machine 10 and the magnet magnetic flux of the permanent magnet 10a of the synchronous machine 10 when the reactive power component of the synchronous machine 10 satisfies the predetermined condition, the magnet magnetic flux from the armature flux linkage calculated from the detected current and the instruction voltage and the armature reaction flux calculated from an inductance of the synchronous machine 10 and the detected current. This configuration enables improvement of the accuracy of estimation of the magnet magnetic flux of the permanent magnet 10a of the synchronous machine 10.

In the synchronous-machine control device 1, the predetermined condition is that the reactive power component becomes zero. This configuration enables the maximum torque/ampere control of the synchronous machine 10.

In the synchronous-machine control device 1, the synchronous machine controlling process: calculates the inner product of the magnet magnetic flux and the detected current; performs feedback control using the inner product to determine the amplitude of the instruction magnetic flux of the synchronous machine 10 to allow the reactive power component to satisfy the predetermined condition; determines the phase of the instruction magnetic flux based on the instruction torque of the synchronous machine 10; and determines the instruction voltage based on the amplitude and the phase, of the instruction magnetic flux. This configuration enables control of the synchronous machine 10 based on the magnetic flux.

The synchronous-machine control device 1 includes the function of performing the stop process of stopping the synchronous machine 10 when the surrounding temperature of the synchronous machine 10 is determined to exceed the predetermined temperature based on the magnet magnetic flux. This configuration enables improvement of the safety of the operation of the synchronous machine 10.

The aforementioned compression system 110 includes the compressor 104; and the control device 101 configured to control the compressor 104. The compressor 104 includes: the sealed container 140 constituting a fluidic pathway for a working medium 200 containing ethylene-based fluoroolefin as a refrigerant component; a compression mechanism 141 positioned inside the sealed container 140 to compress the working medium 200; and the synchronous machine 142 positioned inside the sealed container 140 to operate the compression mechanism 141. The control device 101 includes: the drive circuit 2 configured to drive the synchronous machine 142; the detection circuit 3 configured to detect a current flowing through the synchronous machine 142 to output a detected current indicative of the current; and the synchronous-machine control device 1 connected to the drive circuit 2 and the detection circuit 3. The synchronous-machine control device 1 includes functions of performing: a synchronous machine controlling process of determining an instruction voltage to be applied across the synchronous machine 142 and controlling the drive circuit 2 to allow the drive circuit 2 to apply a voltage corresponding to the instruction voltage across the synchronous machine 142; the magnet magnetic flux estimating process of estimating a magnet magnetic flux of the permanent magnet of the synchronous machine 142; and a stop process of stopping the synchronous machine 142 when the surrounding temperature of the synchronous machine 142 is determined to exceed the predetermined temperature based on the magnet magnetic flux. The synchronous machine controlling process determines the instruction voltage to allow a reactive power component of the synchronous machine 142 to satisfy the predetermined condition. The magnet magnetic flux estimating process estimates the magnet magnetic flux, based on the relation satisfied by an armature flux linkage of the synchronous machine 142, an armature reaction flux of the synchronous machine 142 and the magnet magnetic flux of the permanent magnet of the synchronous machine 142 when the reactive power component of the synchronous machine 142 satisfies the predetermined condition, from the armature flux linkage calculated from the detected current and the instruction voltage and the armature reaction flux calculated from an inductance of the synchronous machine 142 and the detected current. This configuration enables improvement of the accuracy of estimation of the magnet magnetic flux of the permanent magnet of the synchronous machine 142.

The aforementioned refrigeration-cycle device 100 includes: the refrigeration cycle circuit 102 including the compressor 104, the condenser, the expansion valve 106 and the evaporator, and allowing circulation of the working medium 200; and the control device 101 configured to control the refrigeration cycle circuit 102. The working medium 200 contains ethylene-based fluoroolefin as a refrigerant component. The compressor 104 includes: the sealed container 140 constituting a fluidic pathway for the working medium 200; the compression mechanism 141 positioned inside the sealed container 140 to compress the working medium 200; and the synchronous machine 142 positioned inside the sealed container 140 to operate the compression mechanism 141. The control device 101 includes: the drive circuit 2 configured to drive the synchronous machine 10; the detection circuit 3 configured to detect a current flowing through the synchronous machine 10 to output a detected current indicative of the current; and the synchronous-machine control device 1

connected to the drive circuit 2 and the detection circuit 3. The synchronous-machine control device 1 includes functions of performing: the synchronous machine controlling process of determining an instruction voltage to be applied across the synchronous machine 142 and controlling the drive circuit 2 to allow the drive circuit 2 to apply a voltage corresponding to the instruction voltage across the synchronous machine 142; the magnet magnetic flux estimating process of estimating a magnet magnetic flux of the permanent magnet of the synchronous machine 142; and the stop process of stopping the synchronous machine 142 when the surrounding temperature of the synchronous machine 142 is determined to exceed the predetermined temperature based on the magnet magnetic flux. The synchronous machine controlling process determines the instruction voltage to allow a reactive power component of the synchronous machine 142 to satisfy the predetermined condition. The magnet magnetic flux estimating process estimates the magnet magnetic flux, based on the relation satisfied by an armature flux linkage of the synchronous machine 142, an armature reaction flux of the synchronous machine 142 and the magnet magnetic flux of the permanent magnet of the synchronous machine 142 when the reactive power component of the synchronous machine 142 satisfies the predetermined condition, from the armature flux linkage calculated from the detected current and the instruction voltage and the armature reaction flux calculated from an inductance of the synchronous machine 142 and the detected current. This configuration enables improvement of the accuracy of estimation of the magnet magnetic flux of the permanent magnet of the synchronous machine 142.

In the refrigeration-cycle device 100, the ethylene-based fluoroolefin contains ethylene-based fluoroolefin likely to undergo a disproportionation reaction. This configuration enables suppression of a disproportionation reaction of the working medium 200.

In the refrigeration-cycle device 100, the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene. This configuration enables suppression of a disproportionation reaction of the working medium 200.

In the refrigeration-cycle device 100, the working medium 200 contains difluoromethane as the refrigerant component. This configuration enables suppression of a disproportionation reaction of the working medium 200.

In the refrigeration-cycle device 100, the working medium 200 further contains a saturated hydrocarbon. This configuration enables suppression of a disproportionation reaction of the working medium 200.

In the refrigeration-cycle device 100, the working medium 200 contains a haloalkane with 1 or 2 carbon atoms or fluoroalkane having one, two, or three carbon atoms with a boiling point not greater than 0 °C as a disproportionation inhibitor for suppressing a disproportionation reaction of the ethylene-based fluoroolefin. This configuration enables suppression of a disproportionation reaction of the working medium 200.

In the refrigeration-cycle device 100, the saturated hydrocarbon contains n-propane. This configuration enables suppression of a disproportionation reaction of the working medium 200.

[1.2 EMBODIMENT 2]

[1.2.1 CONFIGURATION]

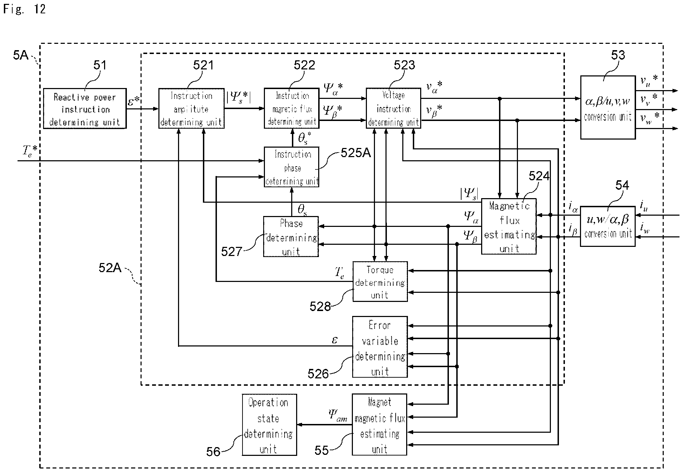

Fig. 12 is a block diagram of a voltage generator 5A of a synchronous-machine control device according to embodiment 2. The voltage generator 5A of Fig. 12 includes the reactive power instruction determining unit 51, a synchronous-machine control unit 52A, the $\alpha$, $\beta$/u, v, w conversion unit (two-phase to three-phase coordinate conversion unit) 53, a u, w/$\alpha$, $\beta$ conversion unit (three-phase to two-phase coordinate conversion unit) 54, the magnet magnetic flux estimating unit 55, and the operation state determining unit 56. Components of the voltage generator 5A of Fig. 12 are visual representations of processing (e.g., signal processing, a transfer function, and the like) performed by the synchronous-machine control device rather than tangible configurations.

The synchronous-machine control unit 52A of Fig. 12 defines signal processing corresponding to the synchronous-machine control process. The synchronous-machine control process determines the instruction voltages $v_u{}^*$, $v_v{}^*$, $v_w{}^*$, and controls the drive circuit 2 to allow the drive circuit 2 to apply the voltages $v_u$, $v_v$, $v_w$ corresponding to the instruction voltages $v_u{}^*$, $v_v{}^*$, $v_w{}^*$ across the synchronous machine 10. In the present embodiment, the synchronous-machine control unit 52A determines the $\alpha$ axis and $\beta$ axis instruction voltages $V_\alpha{}^*$, $V_\beta{}^*$ to thereby determine the instruction voltages $v_u{}^*$, $v_v{}^*$, $v_w{}^*$.

The synchronous-machine control process determines the instruction voltage $v_u{}^*$, $v_v{}^*$, $v_w{}^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to zero. Thus, in the present embodiment, the predetermined condition is that the reactive power component becomes zero.

The synchronous-machine control unit 52A is different from the synchronous-machine control unit 52 in how to determine the phase $\theta_s{}^*$ of the instruction magnetic flux $\Psi s^*$. The synchronous-machine control process performed by the synchronous-machine control unit 52A determines the estimated phase $\theta_S$ of the armature flux linkage from the armature

flux linkage (the $\alpha$ axis estimated magnetic flux $\Psi_\alpha$, the $\beta$ axis estimated magnetic flux $\Psi_\beta$). The synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the torque phase to make the estimated torque $T_e$ equal to the instruction torque $T_e$ * , and adds the torque phase to the estimated phase $\theta_S$ to determine the phase $\theta_S$* of the instruction magnetic flux $\Psi_S$* . This configuration enables improvement of the accuracy of the phase $\theta_S$* of the instruction magnetic flux $\Psi$s* .

Hereinafter, detailed explanation will be made to the synchronous-machine control unit 52A. The synchronous-machine control unit 52A of Fig. 12 includes the instruction amplitude determining unit 521, the instruction magnetic flux determining unit 522, the voltage instruction determining unit 523, the magnetic flux estimating unit 524, an instruction phase determining unit 525A, the error variable determining unit 526, a phase determining unit 527, and a torque determining unit 528.

The phase determining unit 527 determines the phase (estimated phase) $\theta_S$ of the armature flux linkage $\Psi_S$. In the present embodiment, the phase determining unit 527 estimates the estimated phase $\theta_S$ from the armature flux linkage (the $\alpha$ axis estimated magnetic flux $\Psi_\alpha$, the $\beta$ axis estimated magnetic flux $\Psi_\beta$). The estimated phase $\theta_S$ is represented by the following equation (20).

[FORMULA 14]

$$\theta_S = tan^{-1}\left({}^{\Psi_\beta}\!\big/\!{}_{\Psi_\alpha}\right) \qquad (20)$$

The phase determining unit 527 of Fig. 12 receives the $\alpha$ axis estimated magnetic flux $\Psi_\alpha$ and the $\beta$ axis estimated magnetic flux $\Psi_\beta$ from the magnetic flux estimating unit 524. The phase determining unit 527 determines the estimated phase $\theta_S$. The phase determining unit 527 provides the estimated phase $\theta_S$ to the instruction phase determining unit 525A.

The torque determining unit 528 determines the torque (estimated torque) $T_e$ of the synchronous machine 10. In the present embodiment, the torque determining unit 528 determines the estimated torque $T_e$ from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The estimated torque $T_e$ is represented by the following equation (21). In the following equation (21), $P_n$ denotes the number of pole pairs of the synchronous machine 10.

[FORMULA 15]

$$T_e = P_n\big(\Psi_\alpha i_\beta - \Psi_\beta i_\alpha\big) \qquad (21)$$

The torque determining unit 528 of Fig. 12 receives the a axis estimated magnetic flux $\Psi_\alpha$ and the $\beta$ axis estimated magnetic flux $\Psi_\beta$ from the magnetic flux estimating unit 524, and receives the $\alpha$ axis detected current $i_\alpha$ and the $\beta$ axis detected current $i_\beta$ from the u, w/$\alpha$, $\beta$ conversion unit 54. The torque determining unit 528 determines the estimated torque $T_e$. The torque determining unit 528 provides the estimated torque $T_e$ to the instruction phase determining unit 525A.

The instruction phase determining unit 525A determines the phase $\theta_S$ * of the instruction magnetic flux $\Psi_S$ * of the synchronous machine 10. In the present embodiment, the instruction phase determining unit 525A receives the instruction torque $T_e$ * as the control instruction. The instruction phase determining unit 525A receives the estimated phase $\theta_S$ from the phase determining unit 527, and receives the estimated torque $T_e$ from the torque determining unit 528. The instruction phase determining unit 525A determines the phase $\theta_S$* based on the instruction torque $T_e$ * , the estimated torque $T_e$ , and the estimated phase $\theta_S$ . In one example, the instruction phase determining unit 525A determines a correction amount of the phase (hereinafter referred to as "torque phase") necessary for the estimated torque $T_e$ to be equal to the instruction torque $T_e$ * . The instruction phase determining unit 525A adds the torque phase to the estimated phase $\theta_S$ to thereby determine the phase $\theta_S$ * .

[1.2.2 ADVANTAGEOUS EFFECTS]

In the aforementioned synchronous-machine control device, the predetermined condition is that the reactive power component becomes zero. This configuration enables the maximum torque/ampere control of the synchronous machine 10.

In the synchronous-machine control device, the synchronous-machine control process determines the estimated phase $\theta_S$ of the armature flux linkage from the armature flux linkage (the $\alpha$ axis estimated magnetic flux $\Psi_\alpha$ , the $\beta$ axis estimated magnetic flux $\Psi_\beta$). The synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-

machine control process determines the torque phase to allow the estimated torque $T_e$ to be equal to the instruction torque $T_e$ * , and adds the torque phase to the estimated phase $\theta_S$ to determine the phase $\theta_S$ * of the instruction magnetic flux $\Psi_S$ * . This configuration enables improvement of the accuracy of the phase $\theta_S$ * of the instruction magnetic flux $\Psi_S$ * .

[1.3 EMBODIMENT 3]

[1.3.1 CONFIGURATIONS]

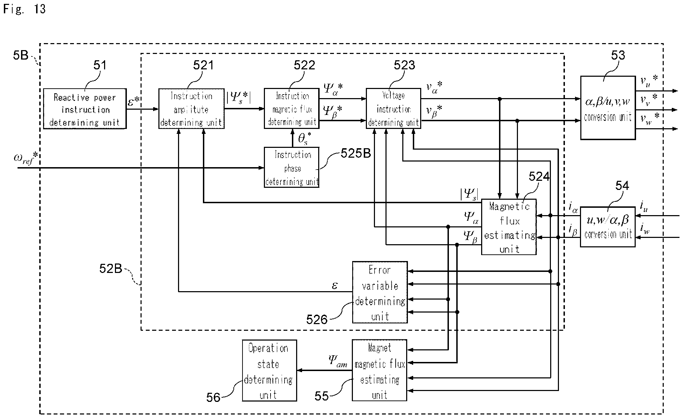

Fig. 13 is a block diagram of a voltage generator 5B of a synchronous-machine control device according to embodiment 3. The voltage generator 5B of Fig. 13 includes the reactive power instruction determining unit 51, a synchronous-machine control unit 52B, the $\alpha$, $\beta$/u, v, w conversion unit(two-phase to three-phase coordinate conversion unit) 53, the u, w/$\alpha$, $\beta$ conversion unit (three-phase to two-phase coordinate conversion unit) 54, the magnet magnetic flux estimating unit 55, and the operation state determining unit 56. Components of the voltage generator 5B of Fig. 13 are visual representations of processing (e.g., signal processing, a transfer function, and the like) performed by the synchronous-machine control device rather than tangible configurations.

The synchronous-machine control unit 52B of Fig. 13 defines signal processing corresponding to the synchronous-machine control process. The synchronous-machine control process determines the instruction voltages $v_u$ * , $v_v$ * , $v_w$ * , and controls the drive circuit 2 to allow the drive circuit 2 to apply the voltages $v_u$, $v_v$, $v_w$ corresponding to the instruction voltages $v_u$ * , $v_v$ * , $v_w$ * across the synchronous machine 10. In the present embodiment, the synchronous-machine control unit 52B determines the $\alpha$ axis and $\beta$ axis instruction voltages $V_a$ * , $V_\beta$ * to thereby determine the instruction voltages $v_u$ * , $v_v$ * , $v_w$ * .

The synchronous-machine control process determines the instruction voltage $v_u$ * , $v_u$ * , $v_w$ * to allow the reactive power component of the synchronous machine 10 to satisfy the predetermined condition. In the present embodiment, the predetermined condition is that the reactive power component of the synchronous machine 10 is equal to the target value $\varepsilon$* . In the present embodiment, the target value $\varepsilon$* is set to zero. Thus, in the present embodiment, the predetermined condition is that the reactive power component becomes zero.

The synchronous-machine control unit 52B is different from the synchronous-machine control unit 52 in how to determine the phase $\theta_S$* of the instruction magnetic flux $\Psi_S$* . The synchronous-machine control unit52B receives the instruction rotational speed $\omega_{ref}$* as the control instruction. The instruction rotational speed $\omega_{ref}$* indicates a target value of a rotational speed of the rotator of the synchronous machine 10. The synchronous-machine control process performed by the synchronous-machine control unit 52B determines a variable of the phase of the armature flux linkage for each control cycle based on the instruction rotational speed $\omega_{ref}$* , and determines the phase $\theta_S$ * of the instruction magnetic flux $\Psi_S$ * based on the variable. In the present embodiment, the determined variable is used as the phase $\theta_S$ * of the instruction magnetic flux $\Psi_S$ * .

Hereinafter, detailed explanation will be made to the synchronous-machine control unit 52B. The synchronous-machine control unit 52B of Fig. 13 includes the instruction amplitude determining unit 521, the instruction magnetic flux determining unit 522, the voltage instruction determining unit 523, the magnetic flux estimating unit 524, an instruction phase determining unit 525B, and the error variable determining unit 526.

The instruction phase determining unit 525B of Fig. 13 determines the phase $\theta_S$ * of the instruction magnetic flux $\Psi_S$ * of the synchronous machine 10. The instruction phase determining unit 525B determines the phase $\theta_S$ * of the instruction magnetic flux $\Psi_S$* of the synchronous machine 10 by use of the instruction rotational speed $\omega_{ref}$* .

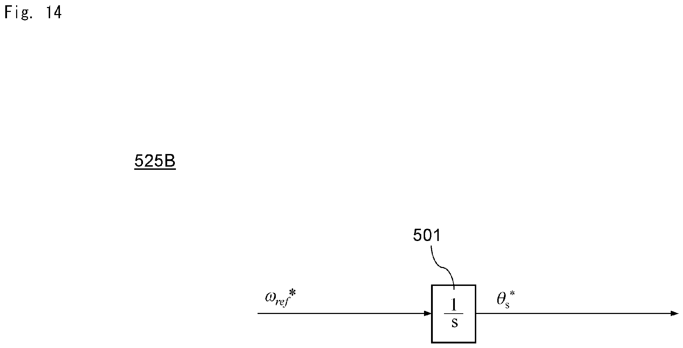

Fig. 14 is a block diagram of a configuration example of the instruction phase determining unit 525B. The instruction phase determining unit 525B of Fig. 14 includes an integrator 501. The integrator 501 determines the variable $\Delta\theta$ of the phase of the armature flux linkage for each control cycle based on the instruction rotational speed $\omega_{ref}$* . When the unit of the instruction rotational speed $\omega_{ref}$* is [rad/s] and the control cycle is $T_S$ [s], the variable $\Delta\theta$ is given by $\Delta\theta = \omega_{ref}$* $\times$ Ts . The integrator 501 determines the determined variable $\Delta\theta$ as the phase $\theta_S$ * of the instruction magnetic flux $\Psi_S$ * .

[1.3.2 ADVANTAGEOUS EFFECTS]

In the aforementioned synchronous-machine control device, the predetermined condition is that the reactive power component becomes zero. This configuration enables the maximum torque/ampere control of the synchronous machine 10.

In the synchronous-machine control device, the synchronous-machine control process determines the variable of the phase of the armature flux linkage for each control cycle based on the instruction rotational speed $\omega_{ref}$* , and determines the phase of the instruction magnetic flux based on the variable. This configuration enables control of the synchronous machine 10 based on the magnetic flux.

[1.4 EMBODIMENT 4]

[1.4.1 CONFIGURATIONS]

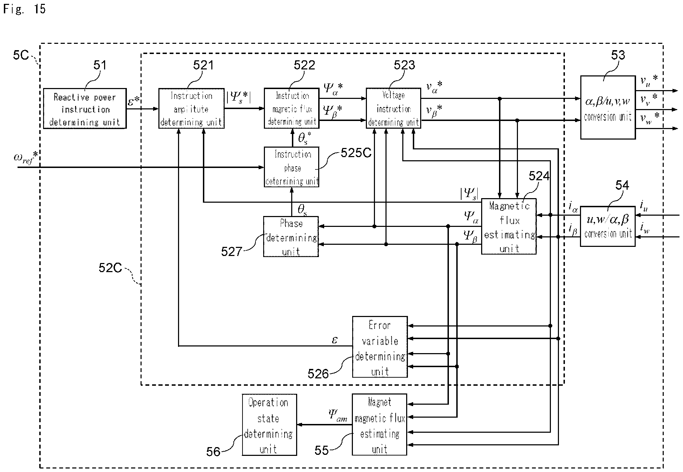

Fig. 15 is a block diagram of a voltage generator 5C of a synchronous-machine control device according to embodiment 4. The voltage generator 5C of Fig. 15 includes the reactive power instruction determining unit 51, a synchronous-machine control unit 52C, the $\alpha$, $\beta$/u, v, w conversion unit (two-phase to three-phase coordinate conversion unit) 53, a u, w/$\alpha$, $\beta$ conversion unit (three-phase to two-phase coordinate conversion unit) 54, the magnet magnetic flux estimating unit 55, and the operation state determining unit 56. Components of the voltage generator 5C of Fig. 15 are visual representations of processing (e.g., signal processing, a transfer function, and the like) performed by the synchronous-machine control device rather than tangible configurations.

The synchronous-machine control unit 52C of Fig. 15 defines signal processing corresponding to the synchronous-machine control process. The synchronous-machine control process determines the instruction voltages $v_u{}^*$, $v_v{}^*$, $v_w{}^*$, and controls the drive circuit 2 to allow the drive circuit 2 to apply the voltages $v_u$, $v_v$, $v_w$ corresponding to the instruction voltages $v_u{}^*$, $v_v{}^*$, $v_w{}^*$ across the synchronous machine 10. In the present embodiment, the synchronous-machine control unit 52C determines the $\alpha$, axis and $\beta$ axis instruction voltages $V_\alpha{}^*$, $V_\beta{}^*$ to thereby determine the instruction voltages $v_u{}^*$, $v_v{}^*$, $v_w{}^*$.

The synchronous-machine control process determines the instruction voltage $v_u{}^*$, $v_v{}^*$, $v_w{}^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to zero. Thus, in the present embodiment, the predetermined condition is that the reactive power component becomes zero.

The synchronous-machine control unit 52C is different from the synchronous-machine control unit 52 in how to determine the phase $\theta_S{}^*$ of the instruction magnetic flux $\Psi s^*$. The synchronous-machine control unit 52C receives the instruction rotational speed $\omega_{ref}{}^*$ as the control instruction. The synchronous-machine control process performed by the synchronous-machine control unit 52C determines a variable of the phase of the armature flux linkage for each control cycle based on the instruction rotational speed $\omega_{ref}{}^*$, and determines the phase $\theta_S{}^*$ of the instruction magnetic flux $\Psi_S{}^*$ based on the variable. Especially, the synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the variable $\Delta\theta$ of the phase of the armature flux linkage for each control cycle based on the instruction rotational speed $\omega_{ref}{}^*$, and determines the phase $\theta_S{}^*$ of the instruction magnetic flux $\Psi_S{}^*$ based on the variable $\Delta\theta$ and the estimated phase $\theta_S$. This configuration enables improvement of a synchronization level between the rotation of the synchronous machine 10 and the rotation of the instruction magnetic flux.

Hereinafter, detailed explanation will be made to the synchronous-machine control unit 52C. The synchronous-machine control unit 52C of Fig. 15 includes the instruction amplitude determining unit 521, the instruction magnetic flux determining unit 522, the voltage instruction determining unit 523, the magnetic flux estimating unit 524, an instruction phase determining unit 525C, the error variable determining unit 526 and the phase determining unit 527.

The instruction phase determining unit 525C of Fig. 15 determines the phase $\theta_S{}^*$ of the instruction magnetic flux $\Psi_S{}^*$ of the synchronous machine 10. In the present embodiment, the instruction phase determining unit 525C receives the estimated phase $\theta_S$ from the phase determining unit 527. The instruction phase determining unit 525C determines the phase $\theta_S{}^*$ of the instruction magnetic flux $\Psi_S{}^*$ of the synchronous machine 10 by use of the instruction rotational speed $\omega_{ref}{}^*$ and the estimated phase $\theta_S$.

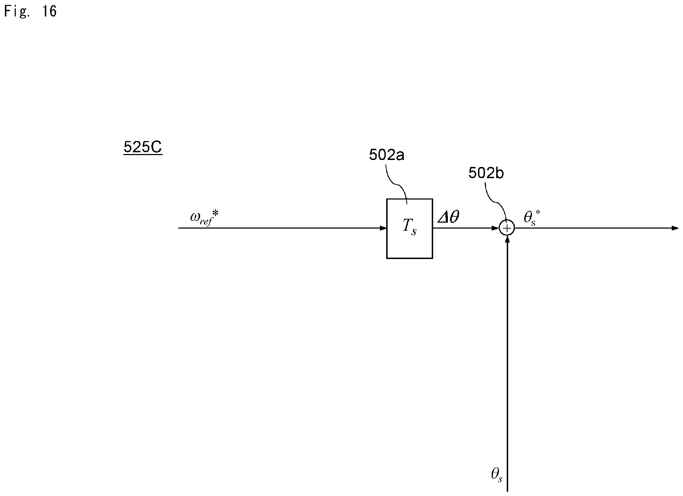

Fig. 16 is a block diagram of a configuration example of the instruction phase determining unit 525C. The instruction phase determining unit 525C of Fig. 16 includes a multiplier 502a and an adder 502b. The multiplier 502a determines the variable $\Delta\theta$ of the phase of the armature flux linkage for each control cycle based on the instruction rotational speed $\omega_{ref}{}^*$. When the unit of the instruction rotational speed $\omega_{ref}{}^*$ is [rad/s] and the control cycle is $\Psi_S$ [s], the variable $\Delta\theta$ is given by $\omega_{ref}{}^* \times T_S$. The adder 502b adds the determined variable $\Delta\theta$ to the estimated phase $\theta_S$ to calculate the phase $\theta_S{}^*$ of the instruction magnetic flux $\Psi_s{}^*$. That is, in the instruction phase determining unit 525C, $\theta_S{}^* = \theta_S + \Delta\theta$.

[1.4.2 ADVANTAGEOUS EFFECTS]

In the aforementioned synchronous-machine control device, the predetermined condition is that the reactive power component becomes zero. This configuration enables the maximum torque/ampere control of the synchronous machine 10.

In the synchronous-machine control device, the synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the variable $\Delta\theta$ of the phase of the armature flux linkage for each control cycle based on the instruction rotational speed $\omega_{ref}{}^*$, and determines the phase $\theta_S{}^*$ of the instruction magnetic flux $\Psi_S{}^*$ based on the variable $\Delta\theta$ and the estimated phase $\theta_S$. This configuration enables improvement of the synchronization level between the rotation of the synchronous machine 10 and the rotation of the instruction magnetic flux.

[1.5 EMBODIMENT 5]

[1.5.1 CONFIGURATIONS]

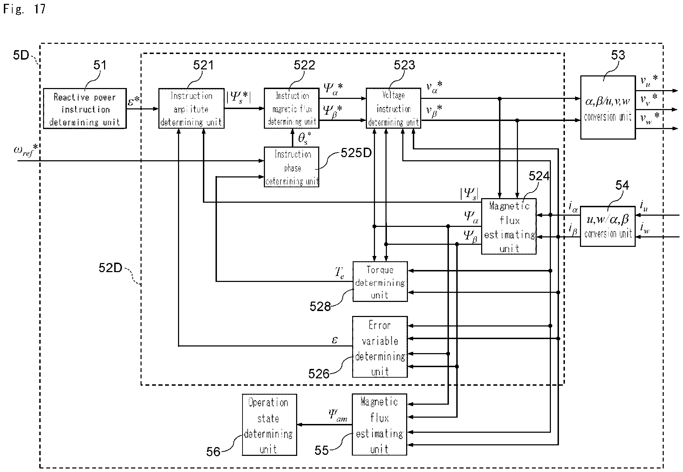

Fig. 17 is a block diagram of a voltage generator 5D of a synchronous-machine control device according to embodiment 5. The voltage generator 5D of Fig. 17 includes the reactive power instruction determining unit 51, a synchronous-machine control unit 52D, the $\alpha$, $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55, and the operation state determining unit 56. Components of the voltage generator 5D of Fig. 17 are visual representations of processing (e.g., signal processing, a transfer function, and the like) performed by the synchronous-machine control device rather than tangible configurations.

The synchronous-machine control unit 52D of Fig. 17 defines signal processing corresponding to the synchronous-machine control process. The synchronous-machine control process determines the instruction voltages $v_u{}^*$, $v_v{}^*$, $v_w{}^*$, and controls the drive circuit 2 to allow the drive circuit 2 to apply the voltages $v_u$, $v_v$, $v_w$ corresponding to the instruction voltages $v_u{}^*$, $v_v{}^*$, $v_w{}^*$ across the synchronous machine 10. In the present embodiment, the synchronous-machine control unit 52D determines the $\alpha$ axis and $\beta$ axis instruction voltages $V_\alpha{}^*$, $V_\beta{}^*$ to thereby determine the instruction voltages $v_u{}^*$, $v_v{}^*$, $v_w{}^*$.

The synchronous-machine control process determines the instruction voltage $v_u{}^*$, $v_v{}^*$, $v_w{}^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to zero. Thus, in the present embodiment, the predetermined condition is that the reactive power component becomes zero.

The synchronous-machine control unit 52D is different from the synchronous-machine control unit 52 in how to determine the phase $\theta_S{}^*$ of the instruction magnetic flux $\Psi_S{}^*$. The synchronous-machine control process performed by the synchronous-machine control unit 52D determines the variable $\Delta\theta$ of the phase of the armature flux linkage for each control cycle based on the instruction rotational speed $\omega_{ref}{}^*$, and determines the phase $\theta_S{}^*$ of the instruction magnetic flux $\Psi_S{}^*$ based on the variable $\Delta\theta$. Especially, the synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the variable $\Delta\theta$ based on the instruction rotational speed $\omega_{ref}{}^*$ and the estimated torque $T_e$. This configuration enables improvement of stability of the operation of the synchronous machine 10.

Hereinafter, detailed explanation will be made to the synchronous-machine control unit 52D. The synchronous-machine control unit 52D of Fig. 17 includes the instruction amplitude determining unit 521, the instruction magnetic flux determining unit 522, the voltage instruction determining unit 523, the magnetic flux estimating unit 524, an instruction phase determining unit 525D, the error variable determining unit 526, and the torque determining unit 528.

The instruction phase determining unit 525D of Fig. 17 determines the phase $\theta_S{}^*$ of the instruction magnetic flux $\Psi_S{}^*$ of the synchronous machine 10. In the present embodiment, the instruction phase determining unit 525D receives the estimated torque $T_e$ from the torque determining unit 528. The instruction phase determining unit 525D determines the phase $\theta_S{}^*$ of the instruction magnetic flux $\Psi_S{}^*$ of the synchronous machine 10 by use of the instruction rotational speed $\omega_{ref}{}^*$ and the estimated torque $T_e$.

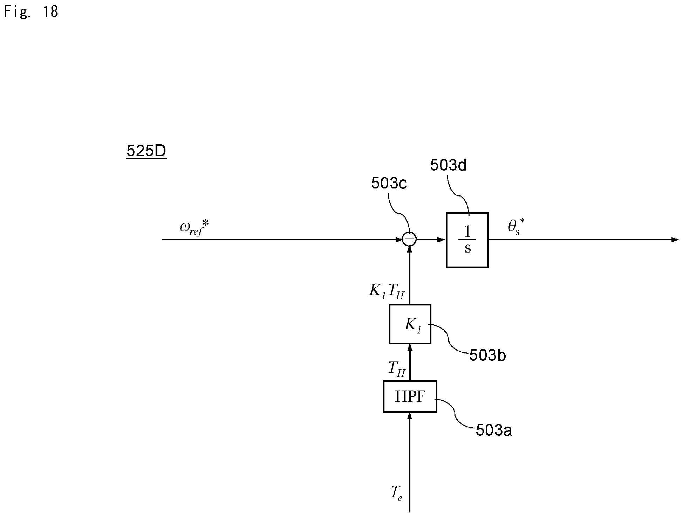

Fig. 18 is a block diagram of a configuration example of the instruction phase determining unit 525D. The instruction phase determining unit 525D of Fig. 18 includes a high-pass filter 503a, a multiplier 503b, a subtractor 503c, and an integrator 503d. The high-pass filter 503a extracts an oscillation component (torque oscillation component) $T_H$ of a torque of the synchronous machine 10 from the estimated torque $T_e$ and outputs it. The multiplier 503b multiplies the oscillation component $T_H$ with a gain $K_1$ and outputs a resultant value. The subtractor 503c subtracts, from the instruction rotational speed $\omega_{ref}{}^*$, the output $(K_1 T_H)$ from the multiplier 503b, and outputs a resultant value. $K_1 T_H$ represents a speed oscillation component of the synchronous machine 10. The integrator 503d determines the variable $\Delta\theta$ of the phase of the armature flux linkage for each control cycle based on the output $(\omega_{ref}{}^* - K_1 T_H)$ from the subtractor 503 c. As one example, the variable $\Delta\theta$ is given by $\Delta\theta = (\omega_{ref}{}^* - K_1 T_H) \times T_S$. The integrator 503d determines the determined variable $\Delta\theta$, as the phase $\theta_S{}^*$ of the instruction magnetic flux $\Psi_S{}^*$.

[1.5.2 ADVANTAGEOUS EFFECTS]

In the aforementioned synchronous-machine control device, the predetermined condition is that the reactive power component becomes zero. This configuration enables the maximum torque/ampere control of the synchronous machine 10.

In the synchronous-machine control device, the synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the variable $\Delta\theta$ based on the instruction rotational speed $\omega_{ref}{}^*$ and the estimated torque $T_e$. This configuration enables improvement of stability of the operation of the synchronous machine 10.

[1.6 EMBODIMENT 6]

[1.6.1 CONFIGURATIONS]

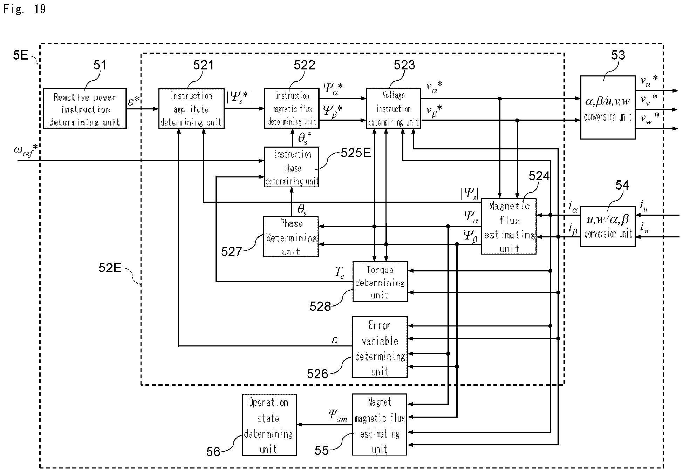

Fig. 19 is a block diagram of a voltage generator 5E of a synchronous-machine control device according to embodiment 6. The voltage generator 5E of Fig. 19 includes the reactive power instruction determining unit 51, a synchronous-machine control unit 52E, the $\alpha$, $\beta$/u, v, w conversion unit (two-phase to three-phase coordinate conversion unit) 53, a u, w/$\alpha$, $\beta$ conversion unit (three-phase to two-phase coordinate conversion unit) 54, the magnet magnetic flux estimating unit 55, and the operation state determining unit 56. Components of the voltage generator 5E of Fig. 19 are visual representations of processing (e.g., signal processing, a transfer function, and the like) performed by the synchronous-machine control device rather than tangible configurations.

The synchronous-machine control unit 52E of Fig. 19 defines signal processing corresponding to the synchronous-machine control process. The synchronous-machine control process determines the instruction voltages $v_u{}^*$, $v_v{}''$, $v_w{}^*$, and controls the drive circuit 2 to allow the drive circuit 2 to apply the voltages $v_u$, $v_v$, $v_w$ corresponding to the instruction voltages $v_u{}^*$, $v_v{}^*$, $v_w{}^*$ across the synchronous machine 10. In the present embodiment, the synchronous-machine control unit 52E determines the $\alpha$ axis and $\beta$ axis instruction voltages $V_\alpha{}^*$, $V_\beta{}^*$ to thereby determine the instruction voltages $v_u{}^*$, $v_v{}^*$, $v_w{}^*$.

The synchronous-machine control process determines the instruction voltage $v_u{}^*$, $v_v{}^*$, $v_w{}^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to zero. Thus, in the present embodiment, the predetermined condition is that the reactive power component becomes zero.

The synchronous-machine control unit 52E is different from the synchronous-machine control unit 52 in how to determine the phase $\theta_S{}^*$ of the instruction magnetic flux $\Psi_S{}^*$. The synchronous-machine control process performed by the synchronous-machine control unit 52E determines a variable of the phase of the armature flux linkage for each control cycle based on the instruction rotational speed $\omega_{ref}{}^*$, and determines the phase $\theta_S{}^*$ of the instruction magnetic flux $\Psi_S{}^*$ based on the variable. Especially, the synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the a axis detected current $i_\alpha$, the $\beta$ axis detected current ip). The synchronous-machine control process determines the variable $\Delta\theta$ based on the instruction rotational speed $\omega_{ref}{}^*$ and the estimated torque $T_e$. The synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the phase $\theta_S{}^*$ of the instruction magnetic flux $\Psi_S{}^*$ based on the variable $\Delta\theta$ and the estimated phase $\theta_S$. This configuration enables improvement of the synchronization level between the rotation of the synchronous machine 10 and the rotation of the instruction magnetic flux as well as improvement of stability of the operation of the synchronous machine 10.

Hereinafter, detailed explanation will be made to the synchronous-machine control unit 52E. The synchronous-machine control unit 52E of Fig. 19 includes the instruction amplitude determining unit 521, the instruction magnetic flux determining unit522, the voltage instruction determining unit 523, the magnetic flux estimating unit 524, an instruction phase determining unit 525E, the error variable determining unit 526, the phase determining unit 527, and the torque determining unit 528.

The instruction phase determining unit 525E of Fig. 19 determines the phase $\theta_S{}^*$ of the instruction magnetic flux $\Psi_S{}^*$ of the synchronous machine 10. In the present embodiment, the instruction phase determining unit 525E receives the estimated phase $\theta_S$ from the phase determining unit 527: The instruction phase determining unit 525E receives the estimated torque $T_e$ from the torque determining unit 528. The instruction phase determining unit 525E determines the phase $\theta_S{}^*$ of the instruction magnetic flux $\Psi_S{}^*$ of the synchronous machine 10 by use of the instruction rotational speed $\omega_{ref}{}^*$, the estimated phase $\theta_S$ and the estimated torque $T_e$.

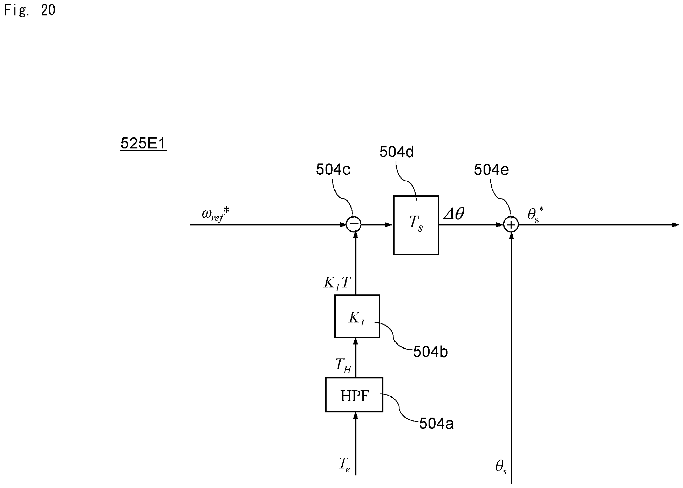

Fig. 20 is a block diagram of a first configuration of the instruction phase determining unit 525E (hereinafter, referred to as the "instruction phase determining unit 525E1", if necessary). The instruction phase determining unit 525E1 of Fig. 20 includes a high-pass filter 504a, a multiplier 504b, a subtractor 504c, a multiplier 504d, and an adder 504e. The high-pass filter 504a extracts an oscillation component (torque oscillation component) $T_H$ of a torque of the synchronous machine 10 from the estimated torque $T_e$ and outputs it. The multiplier 504b multiplies the oscillation component $T_H$ with a gain $K_1$ and outputs a resultant value. The subtractor 504c subtracts, from the instruction rotational speed $\omega_{ref}^*$, the output $(K_1 T_H)$ from the multiplier 504b, and outputs a resultant value. The multiplier 504d determines the variable $\Delta\theta$ of the phase of the armature flux linkage for each control cycle based on the output $(\omega_{ref}^* - K_1 T_H)$ from the subtractor 504c. In one example, the variable $\Delta\theta$ is given by $\Delta\theta = (\omega_{ref}^* - K_1 T_H) \times T_S$. The adder 504e adds the determined variable $\Delta\theta$ to the estimated phase $\theta_S$ to calculate the phase $\theta_S^*$ of the instruction magnetic flux $\Psi_s^*$. Thus, in the instruction phase determining unit 525E1, $\theta_S^* = \theta_S + \Delta\theta$.

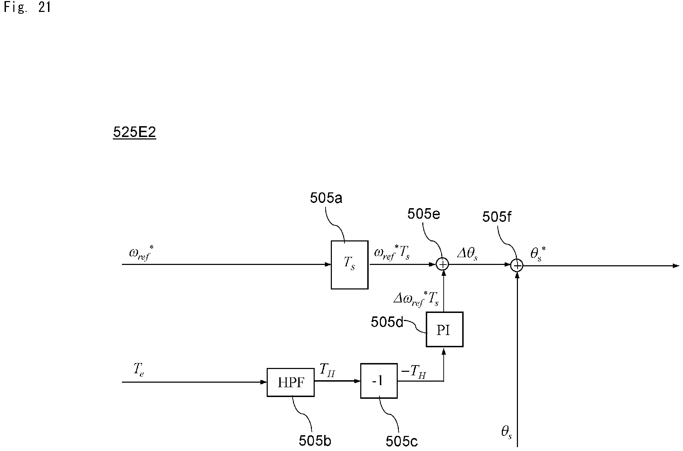

Fig. 21 is a block diagram of a second configuration of the instruction phase determining unit 525E (hereinafter, referred to as the "instruction phase determining unit 525E2", if necessary). The instruction phase determining unit 525E2 of Fig. 21 includes a multiplier 505a, a high-pass filter 505b, a sign inverter 505c, a PI compensator 505d, and adders 505e, 505f. The multiplier 505a multiplies the control cycle $\Psi_S$ with the instruction rotational speed $\omega_{ref}^*$ and outputs a variable $(\Delta\theta = \omega_{ref}^* T_S)$ of the phase of the armature flux linkage for each control cycle. The high-pass filter 505b extracts an oscillation component (torque oscillation component) $T_H$ of a torque of the synchronous machine 10 from the estimated torque $T_e$ and outputs it. The sign inverter 505c multiplies the torque oscillation component $T_H$ with -1 to output a resultant value. The PI compensator 505d determines a correction amount $(\Delta\omega_{ref}^* T_S)$ for the variable of the phase of the armature flux linkage for each control cycle in order to allow the output $(-T_H)$ from the sign inverter 505c to become zero. The adder 505e adds the correction amount $\Delta\omega_{ref}^* T_S$ from the PI compensator 505d to the variable $\omega_{ref}^* T_S$ from the multiplier 505a and outputs a resultant value as a corrected variable $\Delta\theta_S (= \omega_{ref}^* T_S + \Delta\omega_{ref}^* T_S)$. The adder 505f adds the corrected variable $\Delta 0_S$ to the estimated phase $\theta_S$ to calculate the phase $\theta_S^*$ of the instruction magnetic flux $\Psi P_s^*$. Thus, in the instruction phase determining unit 525E2, $\theta_S^* = \theta_S + \Delta\theta_S$.

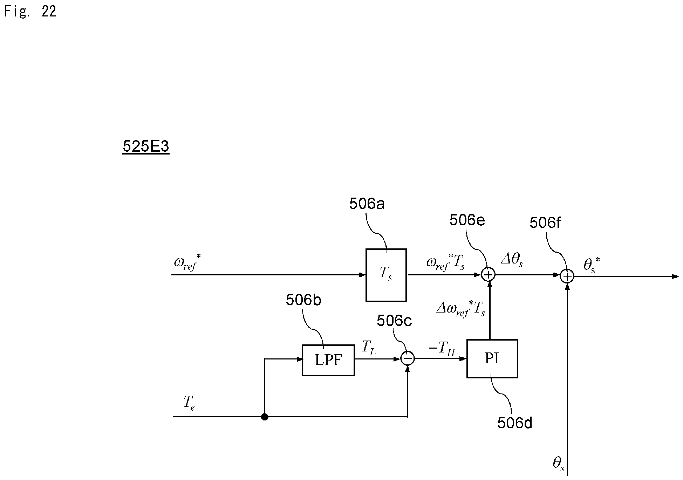

Fig. 22 is a block diagram of a third configuration of the instruction phase determining unit 525E (hereinafter, referred to as the "instruction phase determining unit 525E3", if necessary). The instruction phase determining unit 525E3 of Fig. 22 includes a multiplier 506a, a low-pass filter 506b, a subtractor 506c, a PI compensator 506d, and adders 506e, 506f. The multiplier 506a multiplies the control cycle $T_S$ with the instruction rotational speed $\omega_{ref}^*$ to output a variable $(\Delta\theta = \omega_{ref}^* T_S)$ of the phase of the armature flux linkage for each control cycle. The low-pass filter 506b extracts a low-frequency component $T_L$ of a torque of the synchronous machine 10 from the estimated torque $T_e$ and outputs it. The subtractor 506c subtracts the low-frequency component $T_L$ from the estimated torque $T_e$ and outputs a resultant value. The output from the subtractor 506b is $T_L - T_e$, and this is equivalent to a value obtained by sign inversion of the torque oscillation component $T_H$. Therefore, the subtractor 506c outputs $-T_H$. The PI compensator 506d determines a correction amount $(\Delta\omega_{ref}^* T_S)$ for the variable of the phase of the armature flux linkage for each control cycle in order to allow the output $(-T_H)$ from the subtractor 506c to become zero. The adder 506e adds the correction amount $\Delta\omega_{ref}^* T_S$ from the PI compensator 506d to the variable $\omega_{ref}^* T_S$ from the multiplier 506a and outputs a resultant value as a corrected variable $\Delta\theta_S (= \omega_{ref}^* T_S + \Delta\omega_{ref}^* T_S)$. The adder 506f adds the corrected variable $\Delta\theta_S$ to the estimated phase $\theta_S$ to calculate the phase $\theta_S^*$ of the instruction magnetic flux $\Psi_s^*$. Thus, in the instruction phase determining unit 525E3, $\theta_S^* = \theta_S + \Delta\theta_S$.

[1.6.2 ADVANTAGEOUS EFFECTS]

In the aforementioned synchronous-machine control device, the predetermined condition is that the reactive power component becomes zero. This configuration enables the maximum torque/ampere control of the synchronous machine 10.

In the synchronous-machine control device, the synchronous-machine control process determines the variable of the phase of the armature flux linkage for each control cycle based on the instruction rotational speed $\omega_{ref}^*$ and determines the phase $\theta_S^*$ of the instruction magnetic flux $\Psi_S^*$ based on the variable. Especially, the synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the variable $\Delta\theta$ based on the instruction rotational speed $\omega_{ref}^*$ and the estimated torque $T_e$. The synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the phase $\theta_S^*$ of the instruction magnetic flux $\Psi_S$" based on the variable $\Delta\theta$ and the estimated phase $\theta_S$. This configuration enables improvement of the synchronization level between the rotation of the synchronous machine 10 and the rotation of the instruction magnetic flux as well as the stability of the operation of the synchronous machine 10.

[1.7 EMBODIMENT 7]

[1.7.1 CONFIGURATION]

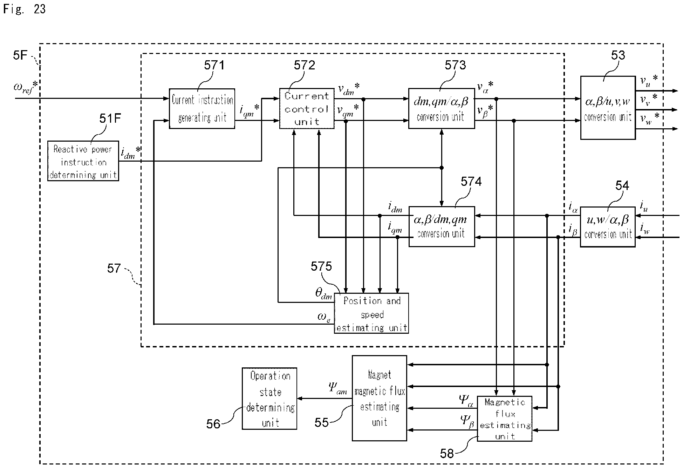

Fig. 23 is a block diagram of a voltage generator 5F of a synchronous-machine control device according to embodiment 7. The voltage generator 5F of Fig. 23 includes the reactive power instruction determining unit 51, the $\alpha$, $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55, the operation state determining unit 56, a synchronous-machine control unit 57, and a magnetic flux estimating unit 58. Components of the voltage generator 5F of Fig. 23 are visual representations of processing (e.g., signal processing, a transfer function, and the like) performed by the synchronous-machine control device rather than tangible configurations.

The synchronous-machine control unit 57 of Fig. 23 defines signal processing corresponding to the synchronous-machine control process. The synchronous-machine control process determines the instruction voltages $v_u^*$, $v_v^*$, $v_w^*$, and controls the drive circuit 2 to allow the drive circuit 2 to apply the voltages $v_u$, $v_v$, $v_w$ corresponding to the instruction voltages $v_u^*$, $v_v^*$, $v_w^*$ across the synchronous machine 10. In the present embodiment, the synchronous-machine control unit 57 determines dm axis and qm axis instruction voltages $V_{dm}^*$, $V_{qm}^*$, which will be described later, to thereby determine the instruction voltages $v_u^*$, $v_v^*$, $v_w^*$. Therefore, instruction voltages $v_u^*$, $v_v^*$, $v_w^*$ are determined by the dm axis and qm axis instruction voltages $V_{dm}^*$, $V_{qm}^*$.

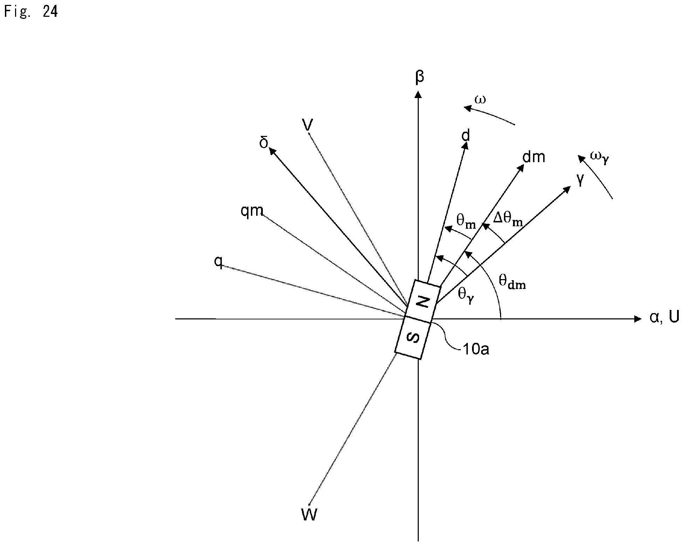

In the present embodiment, the operation of the synchronous-machine control device 1 will be explained with reference to a UVW coordinate system (UVW coordinate axes), an $\alpha\beta$ coordinate system ($\alpha\beta$ coordinate axes), a dq coordinate system (dq coordinate axes), a dmqm coordinate system (dmqm coordinate axes), and a y$\delta$ coordinate system (y$\delta$ coordinate axes). Fig. 24 is an explanatory diagram of coordinate systems used in the synchronous-machine control device. In the UVW coordinate system, the $\alpha\beta$ coordinate system, the dq coordinate system, the dmqm coordinate system, and the y$\delta$ coordinate system, angles mean electric angles.

The y$\delta$ coordinate system of Fig. 24 is a rotating coordinate system based on the rotator (permanent magnet 10a) of the synchronous machine 10. The y$\delta$ coordinate system may be referred to as an estimated coordinate system. The $\gamma\delta$ coordinate system is a two-dimensional Cartesian coordinate system and is defined by a $\gamma$ axis and a $\delta$ axis perpendicular to each other. The $\gamma\delta$ coordinate system is defined as a coordinate system rotating at a given rotational speed (number of rotations). In Fig. 24, $\theta_{dm}$ represents an angle of the dmqm coordinate system relative to the $\alpha\beta$ coordinate system and $\theta_m$ represents an angle of the dq coordinate system relative to the dmqm coordinate system. In Fig. 24, $\theta_\gamma$ represents an angle of the dq coordinate system relative to the y$\delta$ coordinate system and $\Delta\theta_m$ represents an angle of the dmqm coordinate system relative to the y$\delta$ coordinate system. In Fig. 24, $\omega$ represents a rotational speed of the synchronous machine 10. $\omega_\gamma$ represents a rotational speed of the y$\delta$ coordinate system.

Next, with reference to Fig. 23, the voltage generator 5F of the synchronous-machine control device 1 will be described in detail. First, explanation is made to parameters shown in the block diagram of Fig. 23. $i_{dm}^*$ represents a dm axis component of an instruction current in the dmqm coordinate system, and hereinafter may be referred to as a dm axis instruction current. $i_{qm}^*$ represents a qm axis component of the instruction current in the dmqm coordinate system, and hereinafter may be referred to as a qm axis instruction current. $v_{dm}^*$ represents a dm axis component of an instruction voltage in the dmqm coordinate system, and hereinafter may be referred to as a dm axis instruction voltage. $v_{qm}^*$ represents a qm axis component of the instruction voltage in the dmqm coordinate system, and hereinafter may be referred to as a qm axis instruction voltage. $i_{dm}$ represents a dm axis component of a detected current in the dmqm coordinate system, and hereinafter may be referred to as a dm axis current. $i_{qm}$ represents a qm axis component of the detected current in the dmqm coordinate system, and hereinafter may be referred to as a qm axis current. $\omega_e$ represents an estimated rotational speed of the synchronous machine 10. $v_\alpha^*$ represents an $\alpha$ axis component of an instruction voltage in the $\alpha\beta$ coordinate system, and hereinafter may be referred to as an $\alpha$ axis instruction voltage. $v_\beta^*$ represents a $\beta$ axis component of the instruction voltage in the $\alpha\beta$ coordinate system, and hereinafter may be referred to as a $\beta$ axis instruction voltage. $i_\alpha$ represents an $\alpha$ axis component of a detected current in the $\alpha\beta$ coordinate system, and hereinafter may be referred to as an $\alpha$ axis detected current. $i_\beta$ represents a $\beta$ axis component of the detected current in the $\alpha\beta$ coordinate system, and hereinafter may be referred to as a $\beta$ axis detected current. $\Psi_\alpha$ represents an $\alpha$ axis component of an estimated armature flux linkage in the $\alpha\beta$ coordinate system and hereinafter may be referred to as an $\alpha$ axis estimated magnetic flux. $\Psi_\beta$ represents a $\beta$ axis component of the estimated armature flux linkage in the $\alpha\beta$ coordinate system and hereinafter may be referred to as a $\beta$ axis estimated magnetic flux. In Fig. 23, $\omega_{ref}^*$ represents an instruction rotational speed provided as the control instruction. The instruction rotational speed $\omega_{ref}^*$ may be provided from an external device to the synchronous-machine control device 1.

The reactive power instruction determining unit 51F of Fig. 23 determines a target value of the reactive power component of the synchronous machine 10. The reactive power component of the synchronous machine 10 is given by an inner product of the magnet magnetic flux of the permanent magnet 10a of the synchronous machine 10 and the current flowing through the synchronous machine 10. As one example, the reactive power component of the synchronous machine 10 is represented by the aforementioned equation (5). From equation (5), the reactive power component $\varepsilon$ can be determined by the dm axis current $i_{dm}$. The reactive power instruction determining unit 51F of Fig. 23 designates the dm axis instruction current $i_{dm}^*$ as the target value of the reactive power component. The dm axis instruction current $i_{dm}^*$ indicates a target value of the dm axis current $i_{dm}$. To achieve the maximum torque/ampere control, in the dmqm coordinate system, the dm axis instruction current $i_{dm}^*$ is set to zero. This is equivalent to a situation where the target value of the reactive power component of the synchronous machine 10 is set to zero.

The synchronous-machine control process determines the instruction voltages $v_u^*$, $v_v^*$, $v_w^*$ to allow the reactive power component of the synchronous machine 10 to satisfy the predetermined condition. In the present embodiment, the predetermined condition is that the reactive power component of the synchronous machine 10 becomes equal to the target value. In the present embodiment, the target value is set to zero. Thus, In the present embodiment, the predetermined condition is that the reactive power component becomes zero.

The synchronous-machine control unit 57 of Fig. 23 includes a current instruction generating unit 571, a current control unit 572, a dm, qm/$\alpha$, $\beta$ conversion unit 573, an $\alpha$, $\beta$/dm, qm conversion unit 574, and a position and speed estimating unit 575.

The current instruction generating unit 571 generates (determines) the qm axis component (the qm axis instruction current) $i_{qm}^*$ of the instruction current. In the present embodiment, the current instruction generating unit 571 determines the qm axis instruction current $i_{qm}^*$ from the instruction rotational speed $\omega_{ref}^*$ and the estimated rotational speed $\omega_e$ of the synchronous machine 10. As one example, the current instruction generating unit 571 determines the qm axis instruction current $i_{qm}^*$ by feedback control to allow an error ($= \omega_{ref}^* - \omega_e$) between the instruction rotational speed $\omega_{ref}^*$ and the estimated rotational speed $\omega_e$ to become zero. Examples of the feedback control may include proportional (P) control, proportional-integral (PI) control, proportional-derivative (PD) control and proportional-integral-derivative (PID) control. In the case of using PI control, the qm axis instruction current $i_{qm}^*$ is represented by the following equation (22). In equation (22), $K_P$ denotes a proportional gain, $K_I$ denotes an integral gain, and s denotes a Laplace operator.

[FORMULA 16]

$$i_{qm}^* = \left(K_P + \frac{K_I}{s}\right)\left(\omega_{ref}^* - \omega_e\right) \qquad (22)$$

The current instruction generating unit 571 of Fig. 23 receives the instruction rotational speed $\omega_{ref}^*$ from an external device and receives the estimated rotational speed $\omega_e$ from the position and speed estimating unit 575. The current instruction generating unit 571 determines the qm axis instruction current $i_{qm}^*$. The current instruction generating unit 571 provides the qm axis instruction current $i_{qm}^*$ to the current control unit 572.

The current control unit 572 determines the dm axis instruction voltage $V_{dm}^*$ and the qm axis instruction voltage $v_{qm}^*$. In the present embodiment, the current control unit 572 determines the dm axis instruction voltage $v_{dm}^*$ and the qm axis instruction voltage $v_{qm}^*$ from the dm axis instruction current $i_{dm}^*$, the qm axis instruction current $i_{qm}^*$, the dm axis current $i_{dm}$, and the qm axis current $i_{qm}$. As one example, the current control unit 572 determines the dm axis instruction voltage $V_{dm}^*$ by feedback control to allow an error ($= i_{dm}^* - i_{dm}$) between the dm axis instruction current $i_{dm}^*$ and the dm axis current $i_{dm}$ to become zero. The current control unit 572 determines the qm axis instruction voltage $v_{qm}^*$ by feedback control to allow an error ($= i_{qm}^* - i_{qm}$) between the qm axis instruction current $i_{qm}^*$ and the qm axis current $i_{qm}$ to become zero. Examples of the feedback control may include proportional (P) control, proportional-integral (PI) control, proportional-derivative (PD) control and proportional-integral-derivative (PID) control. In the case of using PI control, the dm axis instruction voltage $v_{dm}^*$ and the qm axis instruction voltage $V_{qm}^*$ are represented by the following equations (23), (24), respectively. In equations (23), (24), $K_P$ denotes a proportional gain, $K_I$ denotes an integral gain, and s denotes a Laplace operator. Of course, $K_P$ and $K_I$ each may be different between equation (23) and equation (24).

[FORMULA 17]

$$v_{dm}^* = \left(K_P + \frac{K_I}{s}\right)\left(i_{dm}^* - i_{dm1}\right) \qquad (23)$$

$$v_{qm}^* = \left(K_P + \frac{K_I}{s}\right)\left(i_{qm}^* - i_{qm1}\right) \qquad (24)$$

The current control unit 572 of Fig. 23 receives the qm axis instruction current $i_{qm}^*$ from the current instruction generating unit 571, receives the dm axis instruction current $i_{dm}^*$ from the reactive power instruction determining unit 51F, and receives the dm axis current $i_{dm}$ and the qm axis current $i_{qm}$ from the $\alpha$, $\beta$/dm, qm conversion unit 574. The current control unit 572 determines the dm axis instruction voltage $v_{dm}^*$ and the qm axis instruction voltage $V_{qm}^*$. The current control unit 572 provides the dm axis instruction voltage $V_{dm}^*$ and the qm axis instruction voltage $v_{qm}^*$ to the dm, qm/$\alpha$, $\beta$ conversion unit 573 as well as the position and speed estimating unit 575.

The dm, qm/$\alpha$, $\beta$ conversion unit 573 converts the dm axis instruction voltage $v_{dm}^*$ and the qm axis instruction voltage $v_{qm}^*$ in the dmqm coordinate system into the $\alpha$ axis instruction voltage $v_\alpha^*$ and the $\beta$ axis instruction voltage $v_\beta^*$ in the $\alpha\beta$ coordinate system. As one example, the $\alpha$ axis instruction voltage $v_\alpha^*$ is represented by the following equation (25) and the β axis instruction voltage $v_\beta$* is represented by the following equation (26).

[FORMULA 18]

$$v_\alpha^* = v_{dm}^* cos\theta_{dm} - v_{qm}^* sin\theta_{dm} \qquad (25)$$
$$v_\beta^* = v_{dm}^* sin\theta_{dm} + v_{qm}^* cos\theta_{dm} \qquad (26)$$

The dm, qm/α, β conversion unit 573 of Fig. 23 receives the dm axis instruction voltage $V_{dm}$* and the qm axis instruction voltage $v_{qm}$* from the current control unit 572, and receives the estimated phase $\theta_{dm}$ from the position and speed estimating unit 575. The dm, qm/α, β conversion unit 573 determines the α axis instruction voltage $v_\alpha$* and the β axis instruction voltage $v_\beta$*. The dm, qm/α, β conversion unit 573 provides the α axis instruction voltage $v_\alpha$* and the β axis instruction voltage $v_\beta$* to the α, β/u, v, w conversion unit 53 and the magnetic flux estimating unit 58.

The α, β/dm, qm conversion unit 574 converts the α axis detected current $i_\alpha$ and the β axis detected current $i_\beta$ in the αβ coordinate system into the dm axis current $i_{dm}$ and the qm axis current $i_{qm}$ in the dmqm coordinate system. As one example, the dm axis current $i_{dm}$ is represented by the following equation (27) and the qm axis current $i_{qm}$ is represented by the following equation (28).

[FORMULA 19]

$$i_{dm} = i_\alpha cos\theta_{dm} + i_\beta sin\theta_{dm} \qquad (27)$$
$$i_{qm} = -i_\alpha sin\theta_{dm} + i_\beta cos\theta_{dm} \qquad (28)$$

The α, β/dm, qm conversion unit 574 of Fig. 23 receives the α axis detected current $i_\alpha$ and the β axis detected current is from the u, w/α, β conversion unit54, and receives the estimated phase $\theta_{dm}$ from the position and speed estimating unit 575. The α, β/dm, qm conversion unit 574 determines the dm axis current $i_{dm}$ and the qm axis current $i_{qm}$. The α, β/dm, qm conversion unit 574 provides the dm axis current $i_{dm}$ and the qm axis current $i_{qm}$ to the current control unit 572 as well as the position and speed estimating unit 575.

The position and speed estimating unit 575 determines the estimated phase $\theta_{dm}$ of the synchronous machine 10 and the estimated rotational speed $\omega_e$ of the synchronous machine 10. In the present embodiment, the position and speed estimating unit 575 determines the estimated phase $\theta_{dm}$ and the estimated rotational speed $\omega_e$ from the dm axis instruction voltage $V_{dm}$* and the qm axis instruction voltage $v_{qm}$* as well as the dm axis current $i_{dm}$ and the qm axis current $i_{qm}$.

Hereinafter, an explanation is made to how to determine the estimated phase $\theta_{dm}$ and the estimated rotational speed $\omega_e$.

For the synchronous machine 10, a control mode in the dmqm coordinate system is taken into account. In the control model in the dmqm coordinate system, a voltage equation can be represented by the following equation (29).
[FORMULA 20]

$$\begin{bmatrix} v_{dm} \\ v_{qm} \end{bmatrix} = \begin{bmatrix} R_a + pL_d - \omega L_{dm} & (p\theta_m)L_d - \omega L_{qm} \\ -(p\theta_m)L_d + \omega L_{qm} & R_a + pL_d \end{bmatrix} \begin{bmatrix} i_{dm} \\ i_{qm} \end{bmatrix} + \omega \Psi_{am} \begin{bmatrix} 0 \\ 1 \end{bmatrix}$$
$$- (L_d - L_q)(pi_q)\begin{bmatrix} -sin\,\theta_m \\ cos\,\theta_m \end{bmatrix} \qquad (29)$$

In equation (29), ω represents the rotational speed of the synchronous machine 10, $R_a$ represents the resistance of the synchronous machine 10, $L_d$ represents the d axis inductance of the synchronous machine 10, $L_q$ represents the q axis inductance of the synchronous machine 10, and p represents a differential operator. $L_{dm}$ is represented by the following equation (30). $L_{qm}$ is represented by the following equation (31). $\theta_m$ is represented by the following equation (32). $\Psi_{am}$ is represented by the following equation (33). In equation (33), $\Psi_a$ represents the magnet magnetic flux of the permanent magnet 10a in the dq coordinate system.

[FORMULA 21]

$$L_{dm} = (L_d - L_q) \sin \theta_m \cos \theta_m \qquad (30)$$

$$L_{qm} = L_q + (L_d - L_q) \cos^2 \theta_m \qquad (31)$$

$$\theta_m = \sin^{-1}\left(\frac{\Psi_a - \sqrt{\Psi_a^2 + 8(L_d - L_q)^2 i_{qm}^2}}{4(L_d - L_q)i_{qm}}\right) \qquad (32)$$

$$\Psi_{am} = \Psi_a \cos \theta_m + L_{dm} i_{qm} \qquad (33)$$

When equation (29) is converted into the yδ coordinate system, it can be represented by the following equation (34).

[FORMULA 22]

$$\begin{bmatrix} v_\gamma \\ v_\delta \end{bmatrix} = \begin{bmatrix} R_a - \omega L_{dm} & -\omega L_{qm} \\ \omega L_{qm} & R_a - \omega L_{dm} \end{bmatrix} \begin{bmatrix} i_\gamma \\ i_\delta \end{bmatrix} + \begin{bmatrix} e_\gamma \\ e_\delta \end{bmatrix} \qquad (34)$$

In equation (34), $v_\gamma$, $v_\delta$ represent $\gamma$, $\delta$ axis components of the voltage of the synchronous machine 10, and $i_\gamma$, is represent $\gamma$, $\delta$ axis components of the current of the synchronous machine 10. $e_\gamma$, $e_\delta$ represent extended electromotive forces and are represented by the following equation (35).

[FORMULA 23]

$$\begin{bmatrix} e_\gamma \\ e_\delta \end{bmatrix} = E_{exm} \begin{bmatrix} -\sin \Delta\theta_m \\ \cos \Delta\theta_m \end{bmatrix} + (\omega_\gamma - \omega)L_d \begin{bmatrix} -i_\gamma \\ i_\delta \end{bmatrix} \qquad (35)$$

In equation (35), $E_{exm}$ is represented by the following equation (36).

[FORMULA 24]

$$E_{exm} = \Psi_a \cos \theta_m + 2L_{dm} i_{qm} \qquad (36)$$

The angle $\Delta\theta_m$ represents an angle of the dmqm coordinate system relative to the yδ coordinate system and thus means an axis error between the yδ coordinate system and the dmqm coordinate system. The angle $\Delta\theta_m$ is represented by the following equation (37) from the angle $\theta_\gamma$ of the dq coordinate system relative to the yδ coordinate system and the angle $\theta_m$ of the dq coordinate system relative to the dmqm coordinate system.

[FORMULA 25]

$$\Delta\theta_m = \theta_r - \theta_m \qquad (37)$$

The angle $\Delta\theta_m$ is represented by the following equation (38) using the extended electromotive forces $e_\gamma$, $e_\delta$.

[FORMULA 26]

$$\Delta\theta_m = \tan^{-1}\left(\frac{-e_\gamma}{e_\delta}\right) \qquad (38)$$

In equation (34), from (38), $\Delta\theta_m$ is represented by the following equation (39).

[FORMULA 27]

$$\Delta\theta_m = \tan^{-1}\frac{-\{v_\gamma - (R_a - \omega L_{dm})i_\gamma + \omega L_{qm} i_\delta\}}{v_\delta - \omega L_{qm} i_\gamma - (R_a - \omega L_{dm})i_\delta} \qquad (39)$$

In the case of the maximum torque/ampere control, $i_{dm} = 0$ and therefore the relation of $i_\gamma = 0$ is established. Thus, equation (39) can be represented by the following equation (40).
[FORMULA 28]

$$\Delta\theta_m = tan^{-1}\frac{-\{v_\gamma + \omega L_{qm}i_\delta\}}{v_\delta - (R_a - \omega L_{dm})i_\delta} \qquad (40)$$

When the dmqm coordinate system is aligned with the γδ coordinate system, $\Delta\theta_m$ becomes zero. The rotational speed $m_\gamma$ of the yδ coordinate system while $\Delta\theta_m$ is kept zero can be taken as the estimated rotational speed $\omega_e$ of the synchronous machine 10. As one example, the position and speed estimating unit 575 determines the estimated rotational speed $\omega_e$ by feedback control to allow the angle (i.e., the axis error) $\Delta\theta_m$ of the dmqm coordinate system relative to the γδ coordinate system to become zero. In the case of using PI control, the estimated rotational speed $\omega_e$ is represented by the following equation (41). In equation (41), $K_P$ denotes a proportional gain, $K_I$ denotes an integral gain, and s denotes a Laplace operator.
[FORMULA 29]

$$\omega_e = \left(K_P + \frac{K_I}{s}\right)\Delta\theta_m \qquad (41)$$

The estimated phase $\theta_{dm}$ of the synchronous machine 10 can be calculated from time integration of the estimated rotational speed $\omega_e$ of the synchronous machine 10. Therefore, the estimated phase $\theta_{dm}$ is represented by the following equation (42). In equation (42), s denotes a Laplace operator.
[FORMULA 30]

$$\theta_{dm} = \frac{\omega_e}{s} \qquad (42)$$

As mentioned above, the position and speed estimating unit 575 determines the angle (i.e., the axis error) $\Delta\theta_m$ of the dmqm coordinate system relative to the γδ coordinate system from the dm axis instruction voltage $v_{dm}{}^*$ and the qm axis instruction voltage $v_{qm}{}^*$ as well as the dm axis current $i_{dm}$ and the qm axis current $i_{qm}$. The position and speed estimating unit 575 determines the estimated rotational speed $\omega_e$ by feedback control to allow the axis error $\Delta\theta_m$ to become zero. The position and speed estimating unit 575 determines the estimated phase $\theta_{dm}$ from the estimated rotational speed $\omega_e$ by integration.

The position and speed estimating unit 575 of Fig. 23 receives the dm axis instruction voltage $V_{dm}{}^*$ and the qm axis instruction voltage $v_{qm}{}^*$ from the current control unit 572, and receives the dm axis current $i_{dm}$ and the qm axis current $i_{qm}$ from the α, β/dm, qm conversion unit 574. The position and speed estimating unit 575 determines the estimated rotational speed $\omega_e$ and the estimated phase $\theta_{dm}$. The position and speed estimating unit 575 provides the estimated rotational speed $\omega_e$ to the current instruction generating unit 571. The position and speed estimating unit 575 provides the estimated phase $\theta_{dm}$ to the dm, qm/α, β conversion unit 573 and the α, β/dm, qm conversion unit 574.

In the present embodiment, the synchronous-machine control process determines the instruction voltages $v_u{}^*$, $v_v{}^*$, $v_w{}^*$ by the dm axis instruction voltage $v_{dm}{}^*$ and the qm axis instruction voltage $v_{qm}{}^*$ in the dmqm coordinate system defined by the dm axis corresponding to a direction of the magnet magnetic flux and the qm axis perpendicular to the dm axis. The synchronous-machine control process converts the detected current into the dm axis current $i_{dm}$ and the qm axis current $i_{qm}$ in the dmqm coordinate system. The synchronous-machine control process performs feedback control using the dm axis current $i_{dm}$ and the qm axis current $i_{qm}$ to determine the dm axis instruction voltage $v_{dm}{}^*$ and the qm axis instruction voltage $V_{qm}{}^*$ to allow the reactive power component to satisfy the predetermined condition. In the present embodiment, the synchronous-machine control process determines the estimated phase $\theta_{dm}$ and the estimated rotational speed $\omega_e$ of the permanent magnet 10a from the dm axis instruction voltage $v_{dm}{}^*$ and the qm axis instruction voltage $v_{qm}{}^*$ as well as the dm axis current $i_{dm}$ and the qm axis current $i_{qm}$. The estimated phase $\theta_{dm}$ is used for converting the detected current into the dm axis current $i_{dm}$ and the qm axis current $i_{qm}$ in the dmqm coordinate system. The synchronous-machine control process determines the qm axis instruction current $i_{qm}{}^*$ in the dmqm coordinate system by performing feedback control using the estimated rotational speed $\omega_e$. The synchronous-machine control process determines the dm axis instruction voltage $V_{dm}{}^*$ and the qm axis instruction voltage $v_{qm}{}^*$ to allow the reactive power component to satisfy the predetermined condition, based on the qm axis instruction current $i_{qm}{}^*$. This configuration enables the control of the synchronous machine 10 based on currents.

The magnetic flux estimating unit 58 of Fig. 23 estimates the armature flux linkage $\Psi_S$ of the synchronous machine 10. In the present embodiment, the magnetic flux estimating unit 58 calculates the α axis estimated magnetic flux

$\Psi_{\alpha}$ and the $\beta$ axis estimated magnetic flux $\Psi_{\beta}$. In more detail, the magnetic flux estimating unit 58 calculates the $\alpha$ axis estimated magnetic flux $\Psi_{\alpha}$ and the $\beta$ axis estimated magnetic flux $\Psi_{\beta}$ from the $\alpha$ axis instruction voltage $v_{\alpha}^{*}$, the $\beta$ axis instruction voltage $v_{\beta}^{*}$, the $\alpha$ axis detected current $i_{\alpha}$, and the $\beta$ axis detected current $i_{\beta}$. As described above, as one example, the $\alpha$ axis estimated magnetic flux $\Psi_{\alpha}$ and the $\beta$ axis estimated magnetic flux $\Psi_{\beta}$ are represented by the above equations (11) , (12), respectively.

The magnetic flux estimating unit 58 of Fig. 23 receives the $\alpha$ axis instruction voltage $v_{\alpha}^{*}$ and the $\beta$ axis instruction voltage $v_{\beta}^{*}$ from the dm, qm/$\alpha$, $\beta$ conversion unit 573, and receives the $\alpha$ axis detected current $i_{\alpha}$ and the $\beta$ axis detected current $i_{\beta}$ from the u, w/$\alpha$, $\beta$ conversion unit 54. The magnetic flux estimating unit 58 calculates the $\alpha$ axis estimated magnetic flux $\Psi_{\alpha}$ and the $\beta$ axis estimated magnetic flux $\Psi_{\beta}$. The magnetic flux estimating unit 58 provides the $\alpha$ axis estimated magnetic flux $\Psi_{\alpha}$ and the $\beta$ axis estimated magnetic flux $\Psi_{\beta}$ to the magnet magnetic flux estimating unit 55.

The magnet magnetic flux estimating unit 55 of Fig. 23 receives the $\alpha$ axis estimated magnetic flux $\Psi_{\alpha}$ and the $\beta$ axis estimated magnetic flux $\Psi_{\beta}$ from the magnetic flux estimating unit 58, and receives the $\alpha$ axis detected current $i_{\alpha}$ and the $\beta$ axis detected current $i_{\beta}$ from the u, w/$\alpha$, $\beta$ conversion unit 54. The magnet magnetic flux estimating unit 55 uses the $\alpha$ axis estimated magnetic flux $\Psi_{\alpha}$, the $\beta$ axis estimated magnetic flux $\Psi_{\beta}$, the $\alpha$ axis detected current $i_{\alpha}$, and the $\beta$ axis detected current $i_{\beta}$ to estimate the magnet magnetic flux $\Psi_{am}$ from the above equation (1). The magnet magnetic flux estimating unit 55 provides the magnet magnetic flux $\Psi_{am}$ to the operation state determining unit 56.

[1.7.2 ADVANTAGEOUS EFFECTS]

In the aforementioned synchronous-machine control device, the synchronous-machine control process determines the instruction voltages $v_u^{*}$, $v_v^{*}$, $v_w^{*}$ from the dm axis instruction voltage $v_{dm}^{*}$ and the qm axis instruction voltage $v_{qm}^{*}$ in the dmqm coordinate system defined by the dm axis corresponding to the direction of the magnet magnetic flux and the qm axis perpendicular to the dm axis. The synchronous-machine control process converts the detected current into the dm axis current $i_{dm}$ and the qm axis current $i_{qm}$ in the dmqm coordinate system. The synchronous-machine control process determines the estimated phase $\theta_{dm}$ and the estimated rotational speed $\omega_e$, of the permanent magnet 10a, from the dm axis instruction voltage $v_{dm}^{*}$ and the qm axis instruction voltage $v_{qm}^{*}$ as well as the dm axis current $i_{dm}$ and the qm axis current $i_{qm}$. The synchronous-machine control process performs feedback control using the estimated rotational speed $\omega_e$ to determine the qm axis instruction current $i_{qm}^{*}$ in the dmqm coordinate system. The synchronous-machine control process determines the dm axis instruction voltage $v_{dm}^{*}$ and the qm axis instruction voltage $v_{qm}^{*}$ based on the qm axis instruction current $i_{qm}^{*}$ to allow the reactive power component to satisfy the predetermined condition. This configuration enables control of the synchronous machine 10 based on currents.

[1.8 EMBODIMENT 8]

[1.8.1 CONFIGURATIONS]

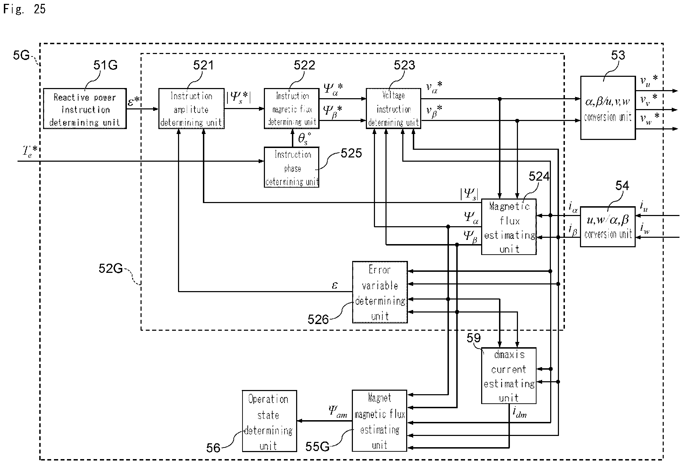

Fig. 25 is a block diagram of a voltage generator 5G of a synchronous-machine control device according to embodiment 8. The voltage generator 5G of Fig. 25 includes a reactive power instruction determining unit 51G, a synchronous-machine control unit 52G, the $\alpha$, $\beta$/u, v, w conversion unit (two-phase to three-phase coordinate conversion unit) 53, the u, w/$\alpha$, $\beta$ conversion unit (three-phase to two-phase coordinate conversion unit) 54, a magnet magnetic flux estimating unit 55G, the operation state determining unit 56, and a dm axis current estimating unit 59. Components of the voltage generator 5G of Fig. 25 are visual representations of processing (e.g., signal processing, a transfer function, and the like) performed by the synchronous-machine control device rather than tangible configurations.

The reactive power instruction determining unit 51G of Fig. 25 designates the target value $\varepsilon^{*}$ of the reactive power component of the synchronous machine 10. The target value $\varepsilon^{*}$ is provided to the synchronous-machine control unit 52G. In the present embodiment, the target value $\varepsilon^{*}$ is set to achieve not the maximum torque/ampere control but flux-weakening control. The flux-weakening control may be referred to as field-weakening control or voltage phase control. There is an induced voltage at a winding of the stator of the synchronous machine 10. The induced voltage is caused by a magnetic flux of the permanent magnet of the rotor, and is proportional to the number of windings. An increase in the number of rotations causes an increase in the induced voltage. When the induced voltage is equal to or larger than the output voltage of the synchronous-machine control device, no current can flow through the winding of the stator, and the number of rotations cannot be increased any more. In view of this, in the flux-weakening control, the dm axis current $i_{dm}$ is set to not zero but a negative value. By doing so, the magnetic flux of the permanent magnet of the rotor is weakened, and thus the induced voltage is reduced. This allows driving with the higher number of rotations. To achieve the flux-weakening control, the target value $\varepsilon^{*}$ of the reactive power component of the synchronous machine 10 is set to a predetermined value (a negative predetermined value) which is equal to or larger than a predetermined lower limit and is smaller than zero. The absolute value of the predetermined lower limit is, for example, a product of a rated current of the synchronous machine 10 and a rated magnetic flux of the permanent magnet 10a.

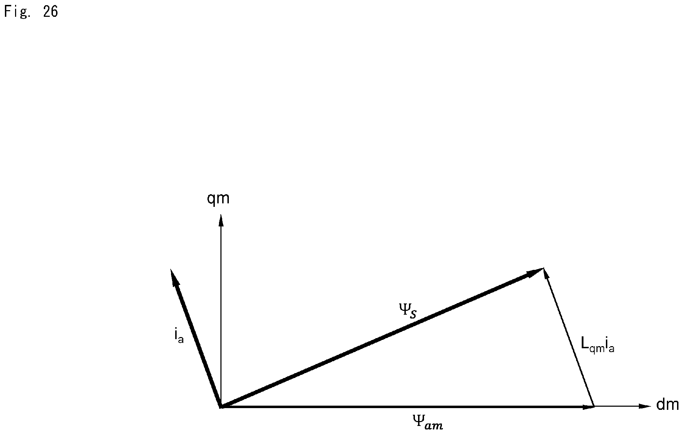

Fig. 26 is an explanatory diagram of the current and flux vectors of the synchronous machine 10. Especially, Fig. 26 illustrates a relation among the armature flux linkage of the synchronous machine 10, the armature reaction flux of the synchronous machine 10, and the magnet magnetic flux of the permanent magnet 10a of the synchronous machine 10 when the reactive power component of the synchronous machine 10 is the negative predetermined value (the dm axis current $i_{dm}$ is negative). $\Psi_S$ is the armature flux linkage (vector) of the synchronous machine 10. In the dmqm coordinate system, $\Psi_S = (\Psi_{dm}, \Psi_{qm})$. $\Psi_{am}$ is the magnet magnetic flux (vector) of the permanent magnet 10a. Especially, $\Psi_{am}$ is the magnet magnetic flux (vector) of the permanent magnet 10a in the dmqm coordinate system. In the dmqm coordinate system, $\Psi_{am} = (\Psi_{am}, 0)$. $L_{qm}$ is the virtual inductance, and means the inductance in the qm axis in the dmqm coordinate system. $i_a$ is the current (i.e., the detected current) (vector) flowing through the synchronous machine 10. In the dmqm coordinate system, $i_a = (i_{dm}, i_{qm})$. Note that, $i_{dm} < 0$. The armature reaction flux of the synchronous machine 10 is represented by $L_{qm}i_a$.

A magnetic flux vector matrix of $\Psi_S = (\Psi_{dm}, \Psi_{qm})$ in the dmqm coordinate system is represented by the following equation (43).

[FORMULA 31]

$$\begin{bmatrix} \Psi_{dm} \\ \Psi_{qm} \end{bmatrix} = \begin{bmatrix} L_{qm} & 0 \\ L_{dm} & L_{qm} \end{bmatrix} \begin{bmatrix} i_{dm} \\ i_{qm} \end{bmatrix} + \begin{bmatrix} \Psi_{am} \\ 0 \end{bmatrix} \qquad (43)$$

When the reactive power component of the synchronous machine 10 is negative (the dm axis current $i_{dm}$ is negative), the relation satisfied by the armature flux linkage $\Psi_S$ of the synchronous machine 10, the armature reaction flux $L_{qm}i_a$ of the synchronous machine 10 and the magnet magnetic flux $\Psi_{am}$ of the permanent magnet 10a of the synchronous machine 10 is represented by the following equation (44).

[FORMULA 32]

$$\Psi_{am} = \Psi_S - L_{qm}i_a \qquad (44)$$

The synchronous-machine control unit 52G of Fig. 25 defines signal processing corresponding to the synchronous-machine control process. The synchronous-machine control process determines the instruction voltages $v_u{}^*$, $v_v{}^*$, $v_w{}^*$ and controls the drive circuit 2 to allow the drive circuit 2 to apply voltages $v_u$, $v_v$, $v_w$ corresponding to the instruction voltages $v_u{}^*$, $v_v{}^*$, $v_w{}^*$ to the synchronous machine 10. In the present embodiment, the synchronous-machine control unit 52G determines the $\alpha$ axis and $\beta$ axis instruction voltages $V_\alpha{}^*$, $V_\beta{}^*$ to determine the instruction voltages $v_u{}^*$, $v_v{}^*$, $v_w{}^*$.

The synchronous-machine control process determines the instruction voltage $v_u{}^*$, $v_v{}^*$, $v_w{}^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to a predetermined value (negative predetermined value) which is equal to or larger than a predetermined lower limit and is smaller than zero. Thus, in the present embodiment, the predetermined condition is that the reactive power component becomes the predetermined value (negative predetermined value) which is equal to or larger than the predetermined lower limit and is smaller than zero.

The synchronous-machine control unit 52G of Fig. 25 includes the instruction amplitude determining unit 521, the instruction magnetic flux determining unit 522, the voltage instruction determining unit 523, the magnetic flux estimating unit 524, the instruction phase determining unit 525, and the error variable determining unit 526. In the synchronous-machine control unit 52G of Fig. 25, the magnetic flux estimating unit 524 provides the $\alpha$ axis estimated magnetic flux $\Psi_\alpha$ and the $\beta$ axis estimated magnetic flux $\Psi_\beta$ to the dm axis current estimating unit 59 in addition to the voltage instruction determining unit 523, the error variable determining unit 526 and the magnet magnetic flux estimating unit 55G.

The dm axis current estimating unit 59 defines signal processing corresponding to a dm axis current determining process. The dm axis current determining process determines the dm axis current $i_{dm}$ in the dmqm coordinate system defined by the dm axis corresponding to a direction of the magnet magnetic flux $\Psi_{am}$ and the qm axis perpendicular to the dm axis. The dm axis current determining process estimates a position (angle $\theta_{dm}$) of the permanent magnet 10a in the dmqm coordinate system from the armature flux linkage $\Psi_S$ (the $\alpha$ axis estimated magnetic flux $\Psi_\alpha$ and the $\beta$ axis estimated magnetic flux $\Psi_\beta$) and the detected current $i_a$ (the $\alpha$ axis detected current $i_\alpha$ and the $\beta$ axis detected current $i_\beta$), and determines the dm axis current $i_{dm}$ from the position (angle $\theta_{dm}$) of the permanent magnet 10a and the detected current $i_a$ (the $\alpha$ axis detected current $i_\alpha$ and the $\beta$ axis detected current $i_\beta$).

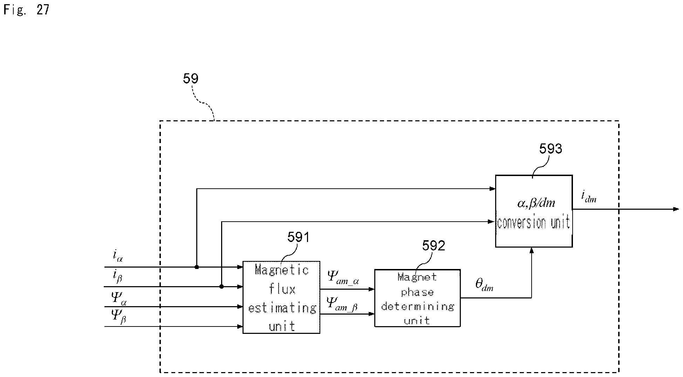

Fig. 27 is a block diagram of a configuration example of the dm axis current estimating unit 59. The dm axis current estimating unit 59 of Fig. 27 includes a magnet magnetic flux determining unit 591, a magnet phase determining unit 592, and an $\alpha$, $\beta$/dm conversion unit 593.

The magnet magnetic flux determining unit 591 determines the $\alpha$ axis magnet magnetic flux $\Psi_{am\_a}$ and the $\beta$ axis

magnet magnetic flux $\Psi_{am\_\beta}$ from the $\alpha$ axis estimated magnetic flux $\Psi_\alpha$, the $\beta$ axis estimated magnetic flux $\Psi_\beta$, the $\alpha$ axis detected current $i_\alpha$, and the $\beta$ axis detected current $i_\beta$. The $\alpha$ axis magnet magnetic flux $\Psi_{am\_\alpha}$ is represented by the above equation (14) and the $\beta$ axis magnet magnetic flux $\Psi_{am\_\beta}$ is represented by the above equation (15).

The magnet magnetic flux determining unit 591 of Fig. 27 receives the $\alpha$ axis estimated magnetic flux $\Psi_\alpha$ and the $\beta$ axis estimated magnetic flux $\Psi_\beta$ from the magnetic flux estimating unit 524, and receives the $\alpha$ axis detected current $i_\alpha$ and the $\beta$ axis detected current $i_\beta$ from the u, w/$\alpha$, $\beta$ conversion unit 54. The magnet magnetic flux determining unit 591 determines the $\alpha$ axis magnet magnetic flux $\Psi_{am\_\alpha}$ and the $\beta$ axis magnet magnetic flux $\Psi_{am\_\beta}$. The magnet magnetic flux determining unit 591 provides the $\alpha$ axis magnet magnetic flux $\Psi_{am\_\alpha}$ and the $\beta$ axis magnet magnetic flux $\Psi_{am\_\beta}$ to the magnet phase determining unit 592.

The magnet phase determining unit 592 determines an angle $\theta_{dm}$ as a magnet phase, from the $\alpha$ axis magnet magnetic flux $\Psi_{am\_\alpha}$ and the $\beta$ axis magnet magnetic flux $\Psi_{am\_\beta}$. The angle $\theta_{dm}$ is represented by the following equation (45).

[FORMULA 33]

$$\theta_{dm} = tan^{-1}\left(\Psi_{am\_\beta}\Big/\Psi_{am\_\alpha}\right) \qquad (45)$$

The magnet phase determining unit 592 of Fig. 27 receives the $\alpha$ axis magnet magnetic flux $\Psi_{am\_\alpha}$ and the $\beta$ axis magnet magnetic flux $\Psi_{am\_\beta}$ from the magnet magnetic flux determining unit 591. The magnet phase determining unit 592 determines the angle $\theta_{dm}$ as the magnet phase. The magnet phase determining unit 592 provides the angle $\theta_{dm}$ to the $\alpha$, $\beta$/dm conversion unit 593.

The $\alpha$, $\beta$/dm conversion unit 593 determines the dm axis current $i_{dm}$ from the $\alpha$ axis detected current $i_\alpha$, the $\beta$ axis detected current $i_\beta$, and the angle $\theta_{dm}$. The dm axis current $i_{dm}$ is represented by the above equation (27).

The $\alpha$, $\beta$/dm conversion unit 593 of Fig. 27 receives the $\alpha$ axis detected current $i_\alpha$ and the $\beta$ axis detected current is from the u, w/$\alpha$, $\beta$ conversion unit 54, and receives the angle $\theta_{dm}$ from the magnet phase determining unit 592. The $\alpha$, $\beta$/dm conversion unit 593 determines the dm axis current $i_{dm}$. The $\alpha$, $\beta$/dm conversion unit 593 provides the dm axis current $i_{dm}$ to the magnet magnetic flux estimating unit 55G.

As described above, the dm axis current estimating unit 59 of Fig. 25 receives the $\alpha$ axis estimated magnetic flux $\Psi_\alpha$ and the $\beta$ axis estimated magnetic flux $\Psi_\beta$ from the magnetic flux estimating unit 524, and receives the $\alpha$ axis detected current $i_\alpha$ and the $\beta$ axis detected current $i_\beta$ from the u, w/$\alpha$, $\beta$ conversion unit 54. The dm axis current estimating unit 59 determines the dm axis current $i_{dm}$. The dm axis current estimating unit 59 provides the dm axis current $i_{dm}$ to the magnet magnetic flux estimating unit 55G.

The magnet magnetic flux estimating unit 55G of Fig. 25 defines signal processing corresponding to the magnet magnetic flux estimating process. The magnet magnetic flux estimating process estimates the magnet magnetic flux $\Psi_{am}$ of the permanent magnet 10a of the synchronous machine 10. Estimating the magnet magnetic flux $\Psi_{am}$ uses the relation satisfied by the armature flux linkage of the synchronous machine 10, the armature reaction flux of the synchronous machine 10, and the magnet magnetic flux $\Psi_{am}$ of the permanent magnet 10a of the synchronous machine 10 when the reactive power component $\varepsilon$ of the synchronous machine 10 satisfies the predetermined condition. The predetermined condition is that the reactive power component becomes the predetermined value (negative predetermined value) which is equal to or larger than the predetermined lower limit and is smaller than zero. In this case, the relation satisfied by the armature flux linkage $\Psi_S$ of the synchronous machine 10, the armature reaction flux $L_{qm}i_a$ of the synchronous machine 10 and the magnet magnetic flux $\Psi_{am}$ of the permanent magnet 10a of the synchronous machine 10 is represented by equation (44), as described above.

Here, the reactive power component $\varepsilon$ is represented by the following equation (46) in view of the above equations (2), (43), (44).

[FORMULA 34]

$$\varepsilon = \Psi_{am} \cdot i_a = (\Psi_S - L_{dm}i_a)i_a = (\Psi_{am} + L_{dm}i_{qm})i_{dm} \qquad (46)$$

The magnet magnetic flux $\Psi_{am}$ is represented by the following equation (47) from the above equation (46).

[FORMULA 35]

$$\Psi_{am} = \frac{\varepsilon}{i_{dm}} - L_{dm}i_{qm} \qquad (47)$$

The dm axis inductance $L_{dm}$ is extremely small and thus the second term in the right side of equation (47) is considered zero. Accordingly, the above equation (47) can be rewritten in the following equation (48).
[FORMULA 36]

$$\Psi_{am} = \frac{\varepsilon}{i_{dm}} \qquad (48)$$

The reactive power component $\varepsilon$ is also represented by the following equation (49) using the $\alpha$ axis estimated magnetic flux $\Psi_{\alpha}$, the $\beta$ axis estimated magnetic flux $\Psi_{\beta}$, the $\alpha$ axis detected current $i_{\alpha}$, and the $\beta$ axis detected current $i_{\beta}$.
[FORMULA 37]

$$\varepsilon = \left(\Psi_S - L_{qm}i_a\right)i_a = \left(\Psi_\alpha - L_{qm}i_\alpha\right)i_\alpha + \left(\Psi_\beta - L_{qm}i_\beta\right)i_\beta \qquad (49)$$

Therefore, from equations (48), (49), the magnet magnetic flux $\Psi_{am}$ can be represented by the following equation (50).
[FORMULA 38]

$$\Psi_{am} = \frac{\left(\Psi_\alpha - L_{qm}i_a\right)i_a + \left(\Psi_\beta - L_{qm}i_\beta\right)i_\beta}{i_{dm}} \qquad (50)$$

As described above, from the relation which is represented by equation (44) and is satisfied by the armature flux linkage $\Psi_S$ of the synchronous machine 10, the armature reaction flux $L_{qm}i_a$ of the synchronous machine 1 0, and the magnet magnetic flux $\Psi_{am}$ of the permanent magnet 10a of the synchronous machine 10, a relationship equation among the magnet magnetic flux $\Psi_{am}$, the reactive power component $\varepsilon$, and the dm axis current $i_{dm}$, which is represented by equation (50), can be obtained.

The magnet magnetic flux estimating unit 55G estimates the magnet magnetic flux $\Psi_{am}$ from the relationship equation represented by equation (50) derived from the relation shown in equation (44). As apparent from equation (50), equation (50) defines calculation using a magnetic flux and does not contain the instruction voltage and the winding resistance as such. Therefore, it is less susceptible to voltage errors. Accordingly, it is possible to improve the accuracy of estimation of the magnet magnetic flux of the permanent magnet 10a of the synchronous machine 10.

In the present embodiment, the magnet magnetic flux estimating unit 55G receives the $\alpha$ axis estimated magnetic flux $\Psi_{\alpha}$ and the $\beta$ axis estimated magnetic flux $\Psi_{\beta}$ from the magnetic flux estimating unit 524, receives the $\alpha$ axis detected current $i_{\alpha}$ and the $\beta$ axis detected current $i_{\beta}$ from the u, w/$\alpha$, $\beta$ conversion unit 54, and receives the dm axis current $i_{dm}$ from the dm axis current estimating unit 59. The magnet magnetic flux estimating unit 55G estimates the magnet magnetic flux $\Psi_{am}$ from the above equation (50) using the $\alpha$ axis estimated magnetic flux $\Psi_{\alpha}$, the $\beta$ axis estimated magnetic flux $\Psi_{\beta}$, the $\alpha$ axis detected current $i_{\alpha}$, the $\beta$ axis detected current $i_{\beta}$, and the dm axis current $i_{dm}$. The magnet magnetic flux estimating unit 55G provides the magnet magnetic flux $\Psi_{am}$ to the operation state determining unit 56.

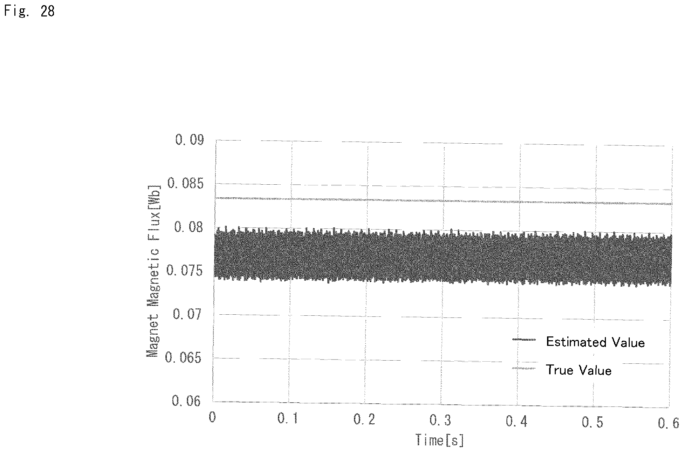

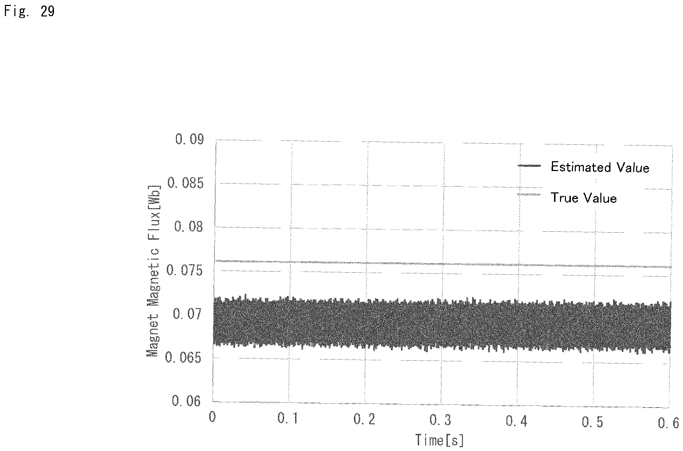

To confirm the estimation accuracy of the flux (the magnet magnetic flux $\Psi_{am}$) of the permanent magnet 10a of the synchronous machine 10 by the synchronous-machine control device, a simulation was conducted to calculate the estimated value of the magnet magnetic flux $\Psi_{am}$. Fig. 28 is a graph representing one example of comparison between an estimated value and a true value, of the magnet magnetic flux $\Psi_{am}$ by the synchronous-machine control device. In Fig. 28, an error between the estimated value and the true value, of the magnet magnetic flux $\Psi_{am}$ is less than 8%, and the relatively high estimation accuracy was confirmed. Fig. 29 is a graph representing another example of comparison between an estimated value and a true value, of the magnet magnetic flux $\Psi_{am}$ by the synchronous-machine control device. Regarding Fig. 29, a simulation was conducted to calculate the estimated value of the magnet magnetic flux $\Psi_{am}$ under an assumption that the permanent magnet 10a lost about 10% of its magnetism. In Fig. 29, an error between the estimated value and the true value, of the magnet magnetic flux $\Psi_{am}$ is less than 9%, and the relatively high estimation accuracy was confirmed. Comparison between the estimated value of Fig. 28 and the estimated value of Fig. 29 reveals that the estimated value of Fig. 29 is lower than the estimated value of Fig. 28 by about 10% of the estimated value of Fig. 28. Therefore it is confirmed that the estimated value of Fig. 29 accurately reflects demagnetization of the permanent magnet 10a.

[1.8.2 ADVANTAGEOUS EFFECTS]

In the aforementioned synchronous-machine control device, the predetermined condition is that the reactive power component becomes the predetermined value which is equal to or larger than the predetermined lower limit and is smaller than zero. The absolute value of the predetermined lower limit is the product of the rated current of the synchronous machine 10 and the rated magnetic flux of the permanent magnet 10a. This configuration enables the current-weakening control of the synchronous machine 10.

In the synchronous-machine control device, the synchronous-machine control process calculates the inner product of the magnet magnetic flux and the detected current, performs feedback control using the inner product to determine the amplitude of the instruction magnetic flux of the synchronous machine 10 to allow the reactive power component to satisfy the predetermined condition, determines the phase of the instruction magnetic flux based on the instruction torque of the synchronous machine 10, and determines the instruction voltage based on the amplitude and the phase, of the instruction magnetic flux. The synchronous-machine control device includes a function of performing the dm axis current determining process. The dm axis current determining process determines the dm axis current $i_{dm}$ in the dmqm coordinate system defined by the dm axis corresponding to the direction of the magnet magnetic flux $\Psi_{am}$ and the qm axis perpendicular to the dm axis. The dm axis current determining process determines the position (angle $\theta_{dm}$) of the permanent magnet 10a in the dmqm coordinate system from the armature flux linkage $\Psi_S$ (the $\alpha$ axis estimated magnetic flux $\Psi_\alpha$ and the $\beta$ axis estimated magnetic flux $\Psi_\beta$) and the detected current $i_a$ (the $\alpha$ axis detected current $i_\alpha$ and the $\beta$ axis detected current $i_\beta$), and determines the dm axis current $i_{dm}$ from the position (angle $\theta_{dm}$) of the permanent magnet 10a and the detected current $i_a$ (the $\alpha$ axis detected current $i_\alpha$ and the $\beta$ axis detected current $i_\beta$). The magnet magnetic flux estimating process estimates the magnet magnetic flux $\Psi_{am}$ from the relationship equation among the magnet magnetic flux $\Psi_{am}$, the reactive power component $\varepsilon$, and the dm axis current $i_{dm}$ which is represented by equation (50) and $i_\beta$ derived from the relation which is represented by equation (44) and is satisfied by the armature flux linkage $\Psi_S$ of the synchronous machine 10, the armature reaction flux $L_{qm}i_a$ of the synchronous machine 10, and the magnet magnetic flux $\Psi_{am}$ of the permanent magnet 10a of the synchronous machine 10. This configuration enables control of the synchronous machine (10) based on the magnetic flux.

[1.9 EMBODIMENT 9]

[1.9.1 CONFIGURATIONS]

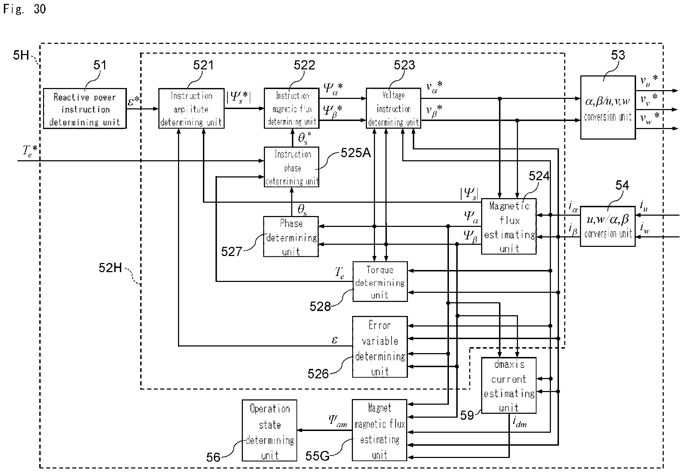

Fig. 30 is a block diagram of a voltage generator 5H of a synchronous-machine control device according to embodiment 9. The voltage generator 5H of Fig. 30 includes the reactive power instruction determining unit 51, a synchronous-machine control unit 52H, the $\alpha$ $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55G, the operation state determining unit 56 and the dm axis current estimating unit 59. Components of the voltage generator 5H of Fig. 30 are visual representations of processing (e.g., signal processing, a transfer function, and the like) performed by the synchronous-machine control device rather than tangible configurations.

The synchronous-machine control unit 52H of Fig. 30 defines signal processing corresponding to the synchronous-machine control process. The synchronous-machine control process determines the instruction voltages $v_u^*$, $v_v^*$, $v_w^*$, and controls the drive circuit 2 to allow the drive circuit 2 to apply the voltages $v_u$, $v_v$, $v_w$ corresponding to the instruction voltages $v_u^*$, $v_v^*$, $v_w^*$ across the synchronous machine 10. In the present embodiment, the synchronous-machine control unit 52H determines the $\alpha$ axis and $\beta$ axis instruction voltages $V_\alpha^*$, $V_\beta^*$ to thereby determine the instruction voltages $v_u^*$, $v_v^*$, $v_w^*$.

The synchronous-machine control process determines the instruction voltage $v_u^*$, $v_v^*$, $v_w^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to a predetermined value (negative predetermined value) which is equal to or larger than a predetermined lower limit and is smaller than zero. Thus, in the present embodiment, the predetermined condition is that the reactive power component becomes the predetermined value (negative predetermined value) which is equal to or larger than the predetermined lower limit and is smaller than zero.

The synchronous-machine control unit 52H of Fig. 30 includes the instruction amplitude determining unit 521, the instruction magnetic flux determining unit 522, the voltage instruction determining unit 523, the magnetic flux estimating unit 524, the instruction phase determining unit 525A, the error variable determining unit 526, the phase determining unit 527, and the torque determining unit 528. In the synchronous-machine control unit 52H of Fig. 30, the magnetic flux estimating unit 524 provides the $\alpha$ axis estimated magnetic flux $\Psi_\alpha$ and the $\beta$ axis estimated magnetic flux $\Psi_\beta$ to the dm axis current estimating unit 59 in addition to the voltage instruction determining unit 523, the error variable determining unit 526 and the magnet magnetic flux estimating unit 55G.

The synchronous-machine control unit 52H receives the instruction torque $T_e^*$ as the control instruction. The synchronous-machine control process performed by the synchronous-machine control unit 52H is similar to the synchronous-machine control process performed by the synchronous-machine control unit 52A of Fig. 12. Thus, the synchronous-machine control process performed by the synchronous-machine control unit 52H determines the estimated phase $\theta_s$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the estimated torque $T_e$ of the

synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the torque phase to allow the estimated torque $T_e$ to be equal to the instruction torque $T_e^*$, and adds the torque phase to the estimated phase $\theta$s to thereby determine the phase $\theta$s* of the instruction magnetic flux $\Psi$s*. This configuration enables improvement of the accuracy of the phase $\theta$s* of the instruction magnetic flux $\Psi$s*.

[1.9.2 ADVANTAGEOUS EFFECTS]

In the aforementioned synchronous-machine control device, the predetermined condition is that the reactive power component becomes the predetermined value which is equal to or larger than the predetermined lower limit and is smaller than zero. The absolute value of the predetermined lower limit is the product of the rated current of the synchronous machine 10 and the rated magnetic flux of the permanent magnet 10a. This configuration enables the current-weakening control of the synchronous machine 10.

In the synchronous-machine control device, the synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the torque phase to allow the estimated torque $T_e$ to be identical to the instruction torque $T_e^*$, and determines the phase $\theta_S^*$ of the instruction magnetic flux $\Psi_S^*$ by adding the torque phase to the estimated phase $\theta_S$. This configuration enables improvement of the accuracy of the phase $\theta_S^*$ of the instruction magnetic flux $\Psi_S^*$.

[1.10 EMBODIMENT 10]

[1.10.1 CONFIGURATIONS]

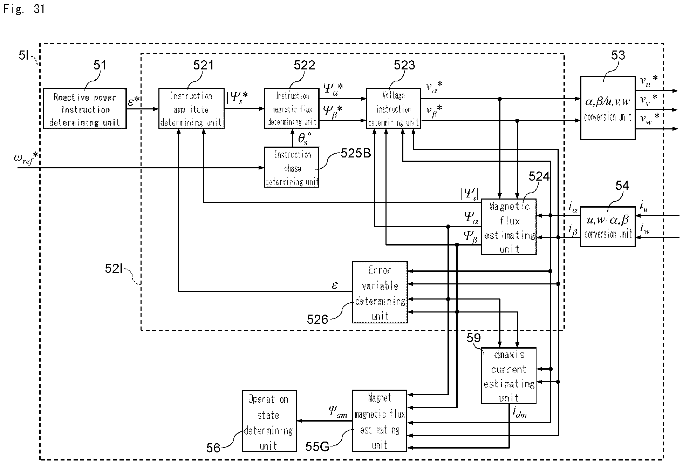

Fig. 31 is a block diagram of a voltage generator 5I of a synchronous-machine control device according to embodiment 10. The voltage generator 51 of Fig. 31 includes the reactive power instruction determining unit 51, a synchronous-machine control unit 521, the $\alpha$ $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55G, the operation state determining unit 56 and the dm axis current estimating unit 59. Components of the voltage generator 51 of Fig. 31 are visual representations of processing (e.g., signal processing, a transfer function, and the like) performed by the synchronous-machine control device rather than tangible configurations.

The synchronous-machine control unit 52I of Fig. 31 defines signal processing corresponding to the synchronous-machine control process. The synchronous-machine control process determines the instruction voltages $v_u^*$, $v_v^*$, $v_w^*$, and controls the drive circuit 2 to allow the drive circuit 2 to apply the voltages $v_u$, $v_v$, $v_w$ corresponding to the instruction voltages $v_u^*$, $v_v^*$, $v_w^*$ across the synchronous machine 10. In the present embodiment, the synchronous-machine control unit 521 determines the $\alpha$ axis and $\beta$ axis instruction voltages $V_\alpha^*$, $V_\beta^*$ to thereby determine the instruction voltages $v_u^*$, $v_v^*$, $v_w^*$.

The synchronous-machine control process determines the instruction voltage $v_u^*$, $v_v^*$, $v_w^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to a predetermined value (negative predetermined value) which is equal to or larger than a predetermined lower limit and is smaller than zero. Thus, in the present embodiment, the predetermined condition is that the reactive power component becomes the predetermined value (negative predetermined value) which is equal to or larger than the predetermined lower limit and is smaller than zero.

The synchronous-machine control unit 52I of Fig. 31 includes the instruction amplitude determining unit 521, the instruction magnetic flux determining unit 522, the voltage instruction determining unit 523, the magnetic flux estimating unit 524, the instruction phase determining unit 525B, and the error variable determining unit 526. In the synchronous-machine control unit 52I of Fig. 31, the magnetic flux estimating unit 524 provides the $\alpha$ axis estimated magnetic flux $\Psi_\alpha$ and the $\beta$ axis estimated magnetic flux $\Psi_\beta$ to the dm axis current estimating unit 59 in addition to the voltage instruction determining unit 523, the error variable determining unit 526 and the magnet magnetic flux estimating unit 55G.

The synchronous-machine control unit 52I receives the instruction rotational speed $\omega_{ref}^*$ as the control instruction. The instruction rotational speed $\omega_{ref}^*$ indicates the target value of the rotational speed of the rotor of the synchronous machine 10. The synchronous-machine control process performed by the synchronous-machine control unit 52I is similar to the synchronous-machine control process performed by the synchronous-machine control unit 52B of Fig. 13. The synchronous-machine control process performed by the synchronous-machine control unit 52I determines the variable of the phase of the armature flux linkage for each control cycle based on the instruction rotational speed $\omega_{ref}^*$,

and determines the phase $\theta_S^*$ of the instruction magnetic flux $\Psi_S^*$ based on the variable. In the present embodiment, the determined variable is used as the phase $\theta_S^*$ of the instruction magnetic flux $\Psi_S^*$.

[1.10.2 ADVANTAGEOUS EFFECTS]

In the aforementioned synchronous-machine control device, the predetermined condition is that the reactive power component becomes the predetermined value which is equal to or larger than the predetermined lower limit and is smaller than zero. The absolute value of the predetermined lower limit is the product of the rated current of the synchronous machine 10 and the rated magnetic flux of the permanent magnet 10a. This configuration enables the current-weakening control of the synchronous machine 10.

In the synchronous-machine control device, the synchronous-machine control process determines the variable of the phase of the armature flux linkage for each control cycle based on the instruction rotational speed $\omega_{ref}^*$, and determines the phase of the instruction magnetic flux based on the variable. This configuration enables control of the synchronous machine 10 based on the magnetic flux.

[1.11 EMBODIMENT 11]

[1.11.1 CONFIGURATIONS]

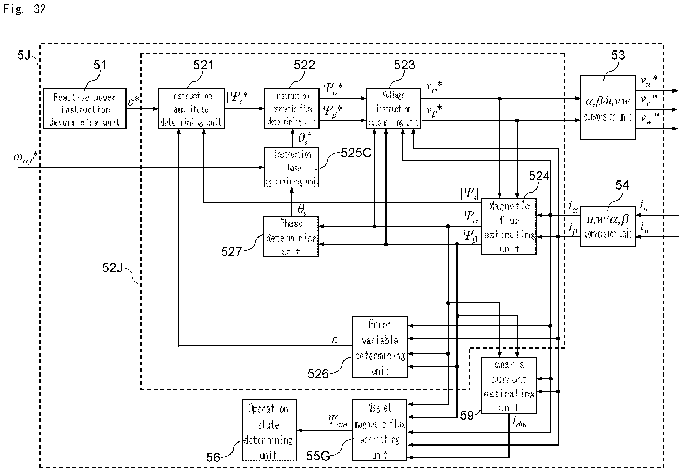

Fig. 32 is a block diagram of a voltage generator 5J of a synchronous-machine control device according to embodiment 11. The voltage generator 5J of Fig. 32 includes the reactive power instruction determining unit 51, a synchronous-machine control unit 52J, the $\alpha$, $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55G, the operation state determining unit 56 and the dm axis current estimating unit 59. Components of the voltage generator 5J of Fig. 32 are visual representations of processing (e.g., signal processing, a transfer function, and the like) performed by the synchronous-machine control device rather than tangible configurations.

The synchronous-machine control unit 52I of Fig. 32 defines signal processing corresponding to the synchronous-machine control process. The synchronous-machine control process determines the instruction voltages $v_u^*$, $v_v^*$, $v_w^*$, and controls the drive circuit 2 to allow the drive circuit 2 to apply the voltages $v_u$, $v_v$, $v_w$ corresponding to the instruction voltages $v_u^*$, $v_v^*$, $v_w^*$ across the synchronous machine 10. In the present embodiment, the synchronous-machine control unit 52J determines the $\alpha$ axis and $\beta$ axis instruction voltages $V_\alpha^*$, $V_\beta^*$ to thereby determine the instruction voltages $v_u^*$, $v_v^*$, $v_w^*$.

The synchronous-machine control process determines the instruction voltage $v_u^*$, $v_v^*$, $v_w^*$ to allow the reactive power component of the synchronous machine 1 0 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to a predetermined value (negative predetermined value) which is equal to or larger than a predetermined lower limit and is smaller than zero. Thus, in the present embodiment, the predetermined condition is that the reactive power component becomes the predetermined value (negative predetermined value) which is equal to or larger than the predetermined lower limit and is smaller than zero.

The synchronous-machine control unit 52J of Fig. 32 includes the instruction amplitude determining unit 521, the instruction magnetic flux determining unit 522, the voltage instruction determining unit 523, the magnetic flux estimating unit 524, the instruction phase determining unit 525C, the error variable determining unit 526, and the phase determining unit 527. In the synchronous-machine control unit 52J of Fig. 32, the magnetic flux estimating unit 524 provides the $\alpha$ axis estimated magnetic flux $\Psi_\alpha$ and the $\beta$ axis estimated magnetic flux $\Psi_\beta$ to the dm axis current estimating unit 59 in addition to the voltage instruction determining unit 523, the error variable determining unit 526 and the magnet magnetic flux estimating unit 55G.

The synchronous-machine control unit 52J receives the instruction rotational speed $\omega_{ref}^*$ as the control instruction. The synchronous-machine control process performed by the synchronous-machine control unit 52J is similar to the synchronous-machine control process performed by the synchronous-machine control unit 52C of Fig. 15. Therefore, the synchronous-machine control process performed by the synchronous-machine control unit 52J determines a variable of the phase of the armature flux linkage for each control cycle based on the instruction rotational speed $\omega_{ref}^*$, and determines the phase $\theta_S^*$ of the instruction magnetic flux $\Psi_S^*$ based on the variable. Especially, the synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the variable $\Delta\theta$ of the phase of the armature flux linkage for each control cycle based on the instruction rotational speed $\omega_{ref}^*$, and determines the phase $\theta_S^*$ of the instruction magnetic flux $\Psi_S^*$ based on the variable $\Delta\theta$ and the estimated phase $\theta_S$. This configuration enables improvement of the synchronization level between the rotation of the synchronous machine 10 and the rotation of the instruction magnetic flux.

[1.11.2 ADVANTAGEOUS EFFECTS]

In the aforementioned synchronous-machine control device, the predetermined condition is that the reactive power component becomes the predetermined value which is equal to or larger than the predetermined lower limit and is smaller than zero. The absolute value of the predetermined lower limit is the product of the rated current of the synchronous machine 10 and the rated magnetic flux of the permanent magnet 10a. This configuration enables the current-weakening control of the synchronous machine 10.

In the synchronous-machine control device, the synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the variable $\Delta\theta$ of the phase of the armature flux linkage for each control cycle based on the instruction rotational speed $\omega_{ref}{}^*$, and determines the phase $\theta_S{}^*$ of the instruction magnetic flux $\Psi_S{}^*$ based on the variable $\Delta\theta$ and the estimated phase $\theta_S$. This configuration enables improvement of the synchronization level between the rotation of the synchronous machine 10 and the rotation of the instruction magnetic flux.

[1.12 EMBODIMENT 12]

[1.12.1 CONFIGURATIONS]

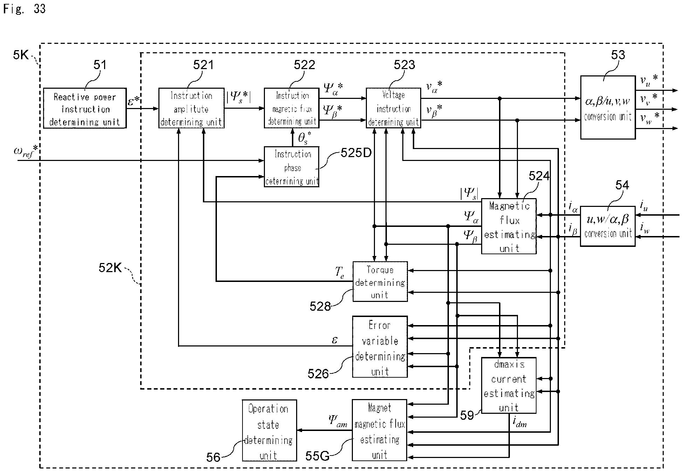

Fig. 33 is a block diagram of a voltage generator 5K of a synchronous-machine control device according to embodiment 12. The voltage generator 5K of Fig. 33 includes the reactive power instruction determining unit 51, a synchronous-machine control unit 52K, the $\alpha$, $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55G, the operation state determining unit 56, and the dm axis current estimating unit 59. Components of the voltage generator 5K of Fig. 33 are visual representations of processing (e.g., signal processing, a transfer function, and the like) performed by the synchronous-machine control device rather than tangible configurations.

The synchronous-machine control unit 52K of Fig. 33 defines signal processing corresponding to the synchronous-machine control process. The synchronous-machine control process determines the instruction voltages $v_u{}^*$, $v_v{}^*$, $v_w{}^*$, and controls the drive circuit 2 to allow the drive circuit 2 to apply the voltages $v_u$, $v_v$, $v_w$ corresponding to the instruction voltages $v_u{}^*$, $v_v{}^*$, $v_w{}^*$ across the synchronous machine 10. In the present embodiment, the synchronous-machine control unit 52K determines the $\alpha$ axis and $\beta$ axis instruction voltages $V_\alpha{}^*$, $V_\beta{}^*$ to thereby determine the instruction voltages $v_u{}^*$, $v_{v^*}$, $v_w{}^*$.

The synchronous-machine control process determines the instruction voltage $v_u{}^*$, $v_v{}^*$, $v_w{}^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to a predetermined value (negative predetermined value) which is equal to or larger than a predetermined lower limit and is smaller than zero. Thus, in the present embodiment, the predetermined condition is that the reactive power component becomes the predetermined value (negative predetermined value) which is equal to or larger than the predetermined lower limit and is smaller than zero.

The synchronous-machine control unit 52K of Fig. 33 includes the instruction amplitude determining unit 521, the instruction magnetic flux determining unit 522, the voltage instruction determining unit 523, the magnetic flux estimating unit 524, the instruction phase determining unit 525D, the error variable determining unit 526, and the torque determining unit 528. In the synchronous-machine control unit 52K of Fig. 33, the magnetic flux estimating unit 524 provides the $\alpha$ axis estimated magnetic flux $\Psi_\alpha$ and the $\beta$ axis estimated magnetic flux $\Psi_\beta$ to the dm axis current estimating unit 59 in addition to the voltage instruction determining unit 523, the error variable determining unit 526 and the magnet magnetic flux estimating unit 55G.

The synchronous-machine control unit 52K receives the instruction rotational speed $\omega_{ref}{}^*$ as the control instruction. The synchronous-machine control process performed by the synchronous-machine control unit 52K is similar to the synchronous-machine control process performed by the synchronous-machine control unit 52D of Fig. 17. Therefore, the synchronous-machine control process performed by the synchronous-machine control unit 52K determines the variable $\Delta\theta$ of the phase of the armature flux linkage for each control cycle based on the instruction rotational speed $\omega_{ref}{}^*$, and determines the phase $\theta_S{}^*$ of the instruction magnetic flux $\Psi_S{}^*$ based on the variable $\Delta\theta$, Especially, the synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the variable $\Delta\theta$ based on the instruction rotational speed $\omega_{ref}{}^*$ and the estimated torque $T_e$. This configuration enables improvement of stability of the operation of the synchronous machine 10.

[1.12.2 ADVANTAGEOUS EFFECTS]

In the aforementioned synchronous-machine control device, the predetermined condition is that the reactive power component becomes the predetermined value which is equal to or larger than the predetermined lower limit and is smaller than zero. The absolute value of the predetermined lower limit is the product of the rated current of the synchronous machine 10 and the rated magnetic flux of the permanent magnet 10a. This configuration enables the current-weakening control of the synchronous machine 10.

In the synchronous-machine control device, the synchronous-machine control process determines the estimated torque $T_e$ of the synchronous machine 10 from the armature flux linkage (the $\alpha$ axis estimated magnetic flux $\Psi_\alpha$ the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the variable $\Delta\theta$ based on the instruction rotational speed $\omega_{ref}^*$ and the estimated torque $T_e$. This configuration enables improvement of stability of the operation of the synchronous machine 10.

[1.13 EMBODIMENT 13]

[1.13.1 CONFIGURATIONS]

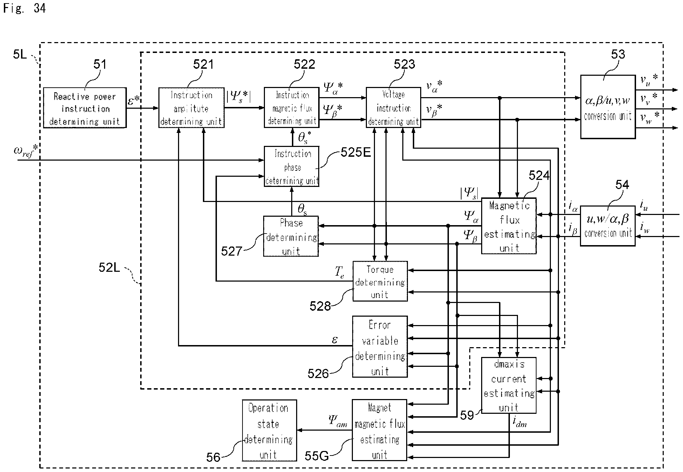

Fig. 34 is a block diagram of a voltage generator 5L of a synchronous-machine control device according to embodiment 13. The voltage generator 5L of Fig. 34 includes the reactive power instruction determining unit 51, a synchronous-machine control unit 52L, the $\alpha$, $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55G, the operation state determining unit 56, and the dm axis current estimating unit 59. Components of the voltage generator 5L of Fig. 34 are visual representations of processing (e.g., signal processing, a transfer function, and the like) performed by the synchronous-machine control device rather than tangible configurations.

The synchronous-machine control unit 52L of Fig. 34 defines signal processing corresponding to the synchronous-machine control process. The synchronous-machine control process determines the instruction voltages $v_u^*$, $v_v^*$, $v_w^*$, and controls the drive circuit 2 to allow the drive circuit 2 to apply the voltages $v_u$, $v_v$, $v_w$ corresponding to the instruction voltages $v_u^*$, $v_v^*$, $v_w^*$ across the synchronous machine 10. In the present embodiment, the synchronous-machine control unit 52L determines the $\alpha$ axis and $\beta$ axis instruction voltages $V_\alpha^*$, $V_\beta^*$ to thereby determine the instruction voltages $v_u^*$, $v_v^*$, $v_w^*$.

The synchronous-machine control process determines the instruction voltage $v_u^*$, $v_v^*$, $v_w^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to a predetermined value (negative predetermined value) which is equal to or larger than a predetermined lower limit and is smaller than zero. Thus, in the present embodiment, the predetermined condition is that the reactive power component becomes the predetermined value (negative predetermined value) which is equal to or larger than the predetermined lower limit and is smaller than zero.

The synchronous-machine control unit 52L of Fig. 34 includes the instruction amplitude determining unit 521, the instruction magnetic flux determining unit 522, the voltage instruction determining unit 523, the magnetic flux estimating unit 524, the instruction phase determining unit 525E, the error variable determining unit 526, the phase determining unit 527, and the torque determining unit 528. In the synchronous-machine control unit 52L of Fig. 34, the magnetic flux estimating unit 524 provides the $\alpha$ axis estimated magnetic flux $\Psi_\alpha$ and the $\beta$ axis estimated magnetic flux $\Psi_\beta$ to the dm axis current estimating unit 59 in addition to the voltage instruction determining unit 523, the error variable determining unit 526 and the magnet magnetic flux estimating unit 55G.

The synchronous-machine control unit 52L receives the instruction rotational speed $\omega_{ref}^*$ as the control instruction. The synchronous-machine control process performed by the synchronous-machine control unit 52L is similar to the synchronous-machine control process performed by the synchronous-machine control unit 52E of Fig. 19. Therefore, the synchronous-machine control process performed by the synchronous-machine control unit 52L determines a variable of the phase of the armature flux linkage for each control cycle based on the instruction rotational speed $\omega_{ref}^*$, and determines the phase $\theta_S^*$ of the instruction magnetic flux $\Psi_S^*$ based on the variable. Especially, the synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the variable $\Delta\theta$ based on the instruction rotational speed $\omega_{ref}^*$ and the estimated torque $T_e$. The synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the phase $\theta_S^*$ of the instruction magnetic flux $\Psi_S^*$ based on the variable $\Delta\theta$ and the estimated phase $\theta_S$. This configuration enables improvement of the synchronization level between the rotation of the synchronous machine

10 and the rotation of the instruction magnetic flux as well as improvement of stability of the operation of the synchronous machine 10.

[1.13.2 ADVANTAGEOUS EFFECTS]

In the aforementioned synchronous-machine control device, the predetermined condition is that the reactive power component becomes the predetermined value which is equal to or larger than the predetermined lower limit and is smaller than zero. The absolute value of the predetermined lower limit is the product of the rated current of the synchronous machine 10 and the rated magnetic flux of the permanent magnet 10a. This configuration enables the current-weakening control of the synchronous machine 10.

In the synchronous-machine control device, the synchronous-machine control process determines the variable of the phase of the armature flux linkage for each control cycle based on the instruction rotational speed $\omega_{ref}^*$ and determines the phase $\theta_S^*$ of the instruction magnetic flux $\Psi_S^*$ based on the variable. Especially, the synchronous-machine control process determines the estimated torque $T_e$ of the synchronous machine 10 from the armature flux linkage (the $\alpha$ axis estimated magnetic flux $\Psi_\alpha$, the $\beta$ axis estimated magnetic flux $\Psi_\beta$) and the detected current (the $\alpha$ axis detected current $i_\alpha$, the $\beta$ axis detected current $i_\beta$). The synchronous-machine control process determines the variable $\Delta\theta$ based on the instruction rotational speed $\omega_{ref}^*$ and the estimated torque $T_e$. The synchronous-machine control process determines the estimated phase $\theta_S$ of the armature flux linkage from the armature flux linkage (the $\alpha$ axis estimated magnetic flux $\Psi_\alpha$, the $\beta$ axis estimated magnetic flux $\Psi_\beta$). The synchronous-machine control process determines the phase $\theta_S^*$ of the instruction magnetic flux $\Psi_S^*$ based on the variable $\Delta\theta$ and the estimated phase $\theta_S$. This configuration enables improvement of the synchronization level between the rotation of the synchronous machine 10 and the rotation of the instruction magnetic flux as well as the stability of the operation of the synchronous machine 10.

[1.14 EMBODIMENT 14]

[1.14.1 CONFIGURATIONS]

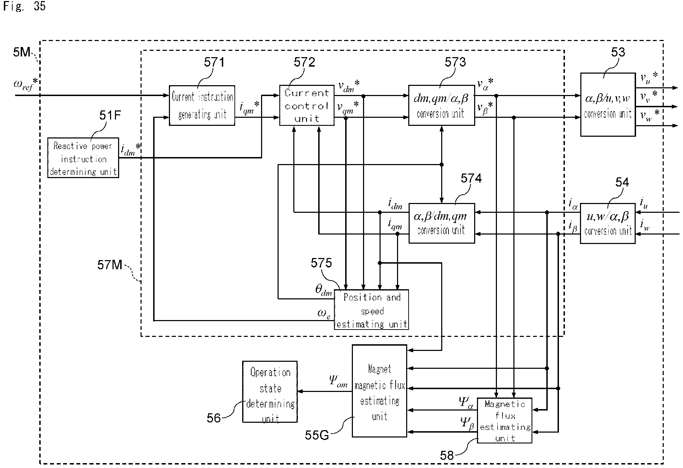

Fig. 35 is a block diagram of a voltage generator 5M of a synchronous-machine control device according to embodiment 14. The voltage generator 5M of Fig. 35 includes the reactive power instruction determining unit 51F, the $\alpha$, $\beta$/u, v, w conversion unit (two-phase to three-phase coordinate conversion unit) 53, the u, w/$\alpha$, $\beta$ conversion unit (three-phase to two-phase coordinate conversion unit) 54, the magnet magnetic flux estimating unit 55G, the operation state determining unit 56, the synchronous-machine control unit 57M, and the magnetic flux estimating unit 58. Components of the voltage generator 5M of Fig. 35 are visual representations of processing (e.g., signal processing, a transfer function, and the like) performed by the synchronous-machine control device rather than tangible configurations.

The synchronous-machine control unit 52M of Fig. 35 defines signal processing corresponding to the synchronous-machine control process. The synchronous-machine control process determines the instruction voltages $v_u^*$, $v_v^*$, $v_w^*$, and controls the drive circuit 2 to allow the drive circuit 2 to apply the voltages $v_u$, $v_v$, $v_w$ corresponding to the instruction voltages $v_u^*$, $v_v^*$, $v_w^*$ across the synchronous machine 10. In the present embodiment, the synchronous-machine control unit 52L determines the $\alpha$ axis and $\beta$ axis instruction voltages $V_\alpha^*$, $V_\beta^*$ to thereby determine the instruction voltages $v_u^*$, $v_v^*$, $v_w^*$.

The synchronous-machine control process determines the instruction voltage $v_u^*$, $v_v^*$, $v_w^*$ to allow the reactive power component of the synchronous machine 10 to satisfy the predetermined condition. In the present embodiment, the predetermined condition is that the reactive power component of the synchronous machine 10 is equal to the target value $\varepsilon^*$. In the present embodiment, the target value $\varepsilon^*$ is set to a predetermined value (negative predetermined value) which is equal to or larger than a predetermined lower limit and is smaller than zero. Thus, in the present embodiment, the predetermined condition is that the reactive power component becomes the predetermined value (negative predetermined value) which is equal to or larger than the predetermined lower limit and is smaller than zero.

The synchronous-machine control unit 57K of Fig. 35 includes the current instruction generating unit 571, the current control unit 572, the dm, qm/$\alpha$, $\beta$ conversion unit 573, the $\alpha$, $\beta$/dm, qm conversion unit 574, and the position and speed estimating unit 575. In the synchronous-machine control unit 57K of Fig. 35, the $\alpha$, $\beta$/dm, qm conversion unit 574 also provides the dm axis current $i_{dm}$ to the magnet magnetic flux estimating unit 55G.

The synchronous-machine control unit 52M receives the instruction rotational speed $\omega_{ref}^*$ as the control instruction. The synchronous-machine control process performed by the synchronous-machine control unit 52M is similar to the synchronous-machine control process performed by the synchronous-machine control unit 57 of Fig. 23. Therefore, the synchronous-machine control process performed by the synchronous-machine control unit 52M determines the instruction voltages $v_u^*$, $v_v^*$, $v_w^*$ from the dm axis instruction voltage $v_{dm}^*$ and the qm axis instruction voltage $v_{qm}^*$ in the dmqm coordinate system defined by the dm axis corresponding to the direction of the magnet magnetic flux and the qm axis perpendicular to the dm axis. The synchronous-machine control process converts the detected current into the dm axis current $i_{dm}$ and the qm axis current $i_{qm}$ in the dmqm coordinate system. The synchronous-machine control process performs feedback control using the dm axis current $i_{dm}$ and the qm axis current $i_{qm}$ to determine the dm axis instruction voltage $v_{dm}^*$ and the qm axis instruction voltage $v_{qm}^*$ to allow the reactive power component to satisfy the predetermined condition. Especially, in the present embodiment, the synchronous-machine control process determines the estimated phase $\theta_{dm}$ and the estimated rotational speed $\omega_e$, of the permanent magnet 10a, from the dm axis instruction voltage $v_{dm}^*$ and the qm axis instruction voltage $v_{qm}^*$ as well as the dm axis current $i_{d\,m}$ and the qm axis current $i_{qm}$. The estimated phase $\theta_{dm}$ is used for converting the detected current into the dm axis current $i_{dm}$ and the qm axis current $i_{qm}$ in the dmqm coordinate system. The synchronous-machine control process determines the qm axis instruction current $i_{qm}^*$ in the dmqm coordinate system by performing feedback control using the estimated rotational speed $\omega_e$. The synchronous-machine control process performs feedback control using the dm axis current and the qm axis current based on the qm axis instruction current $i_{qm}^*$ to thereby determine the dm axis instruction voltage $v_{dm}^*$ and the qm axis instruction voltage $v_{um}^*$ to allow the reactive power component to satisfy the predetermined condition. This configuration enables control of the synchronous machine 10 based on currents.

[1.14.2 ADVANTAGEOUS EFFECTS]

In the aforementioned synchronous-machine control device, the predetermined condition is that the reactive power component becomes the predetermined value which is equal to or larger than the predetermined lower limit and is smaller than zero. The absolute value of the predetermined lower limit is the product of the rated current of the synchronous machine 10 and the rated magnetic flux of the permanent magnet 10a. This configuration enables the current-weakening control of the synchronous machine 10.

In the synchronous-machine control device, the synchronous-machine control process determines the instruction voltage $v_u^*$, $v_u^*$, $v_w^*$ from the dm axis instruction voltage $v_{dm}^*$ and the qm axis instruction voltage $v_{qm}^*$ in the dmqm coordinate system defined by the dm axis corresponding to the direction of the magnet magnetic flux and the qm axis perpendicular to the dm axis. The synchronous-machine control process converts the detected current into the dm axis current $i_{d\,m}$ and the qm axis current $i_{qm}$ in the dmqm coordinate system. The synchronous-machine control process performs feedback control using the dm axis current and the qm axis current to determine the dm axis instruction voltage $v_{dm}^*$ and the qm axis instruction voltage $v_{qm}^*$ to allow the reactive power component to satisfy the predetermined condition. The magnet magnetic flux estimating process estimates the magnet magnetic flux $\Psi_{am}$ from the relationship equation among the magnet magnetic flux $\Psi_{am}$, the reactive power component $\varepsilon$, and the dm axis current $i_{dm}$ which is represented by equation (50) and is derived from the relation which is represented by equation (44) and is satisfied by the armature flux linkage $\Psi_S$ of the synchronous machine 10, the armature reaction flux $L_{qm}i_a$ of the synchronous machine 10, and the magnet magnetic flux $\Psi_{am}$ of the permanent magnet 10a of the synchronous machine 10. This configuration enables control of the synchronous machine 10 based on currents.

[2. VARIATIONS]

Embodiments of the present disclosure are not limited to the above embodiments. The above embodiments may be modified in various ways in accordance with designs or the like to an extent that they can achieve the problem of the present disclosure. Hereinafter, some variations or modifications of the above embodiments will be listed. One or more of the variations or modifications described below may apply in combination with one or more of the others.

In embodiment 1, the synchronous-machine control process calculates an inner product of the magnet magnetic flux $\Psi_{am}$ and the detected current $i_a$, and performs feedback control using the inner product to determine the amplitude $|\Psi_S^*|$ of the instruction magnetic flux $\Psi_S^*$ of the synchronous machine 10 to allow the reactive power component to satisfy the predetermined condition. In one variation, the synchronous-machine control process may calculate an inner product of the armature flux linkage $\Psi_S$ and the detected current $i_a$, perform feedback control using the inner product to determine the amplitude $|\Psi_S^*|$ of the instruction magnetic flux $\Psi_S^*$ of the synchronous machine 10 to allow the reactive power component to satisfy the predetermined condition.

As one example, the error variable determining unit 526 determines an inner product $\varepsilon_1$ of the armature flux linkage $\Psi_S$ and the detected current $i_a$. The error variable determining unit 526 determines the inner product $\varepsilon_1$ of the armature flux linkage $\Psi_S$ and the detected current $i_a$ from the a axis estimated magnetic flux $\Psi_\alpha$, the $\beta$ axis estimated magnetic flux $\Psi_\beta$, the $\alpha$ axis detected current $i_\alpha$, and the $\beta$ axis detected current $i_\beta$. The inner product $\varepsilon_1$ is represented by the following equation (51).

[FORMULA 39]

$$\varepsilon_1 = \Psi_\alpha i_\alpha + \Psi_\beta i_\beta \qquad (51)$$

The instruction amplitude determining unit 521 of Fig. 3 receives the target value $\varepsilon^*$ from the reactive power instruction determining unit 51, receives the amplitude $|\Psi_S|$ of the estimated armature flux linkage of the synchronous machine 10 from the magnetic flux estimating unit 524, and receives inner product $\varepsilon_1$ from the error variable determining unit 526. As one example, the instruction amplitude determining unit 521 uses the amplitude $|\Psi_S|$ as the amplitude $|\Psi_{S0}^*|$, performs feedback control to allow a difference between the inner product $\varepsilon_1$ and a reference value $\varepsilon_2$ to be equal or identical to the target value $\varepsilon^*$ (a deviation of the difference between the inner product $\varepsilon_1$ and the reference value $\varepsilon_2$ (= $\varepsilon_2$ - $\varepsilon_1$) from the target value $\varepsilon^*$ becomes zero) to determine the correction amount $\Delta\Psi$, and thereby determines the amplitude $|\Psi_S^*|$ of the instruction magnetic flux $\Psi_S^*$. Examples of the feedback control may include proportional (P) control, proportional-integral (PI) control, proportional-derivative (PD) control and proportional-integral-derivative (PID) control. In the case of using PI control, the correction amount $\Delta\Psi$ is represented by the following equation (52). In equation (52), $K_P$ denotes a proportional gain, $K_1$ denotes an integral gain, and s denotes a Laplace operator.
[FORMULA 40]

$$\Delta\Psi = \left(K_P + \frac{K_I}{s}\right)\{\varepsilon^* - (\varepsilon_2 - \varepsilon_1)\} \qquad (52)$$

The reference value $\varepsilon_2$ indicates an amplitude of the armature reaction flux and is given by the following equation (53). The reference value $\varepsilon_2$ may be determined by the error variable determining unit 526 and then provided to the instruction amplitude determining unit 521, or may be determined by the instruction amplitude determining unit 521.
[FORMULA 41]

$$\varepsilon_2 = L\left(i_\alpha^2 + i_\beta^2\right) \qquad (53)$$

The feedback control using the first inner product may apply to the voltage generators 5A, 5G, 5H of embodiments 2, 8, 9, in addition to the voltage generator 5 of embodiment 1. Further, the feedback control using the first inner product may apply to a case where the control instruction is the instruction rotational speed $\omega_{ref}^*$. This means that the voltage generators 5B to 5E and 5I to 5L of embodiments 3 to 6 and 10 to 13 can perform the feedback control using the first inner product.

As described above, the synchronous-machine control process may use any of the inner product (first inner product) of the armature flux linkage $\Psi_S$ and the detected current $i_a$ and the inner product (second inner product) of the magnet magnetic flux $\Psi_{am}$ and the detected current $i_a$ in order to determine the amplitude $|\Psi s^*|$ of the instruction magnetic flux $\Psi s^*$ of the synchronous machine 10.

Accordingly, the synchronous machine controlling process may calculate the first inner product of the armature flux linkage $\Psi_S$ and the detected current $i_a$, or, a second inner product of the magnet magnetic flux $\Psi_{am}$ and the detected current $i_a$ and perform feedback control using the first inner product or the second inner product to determine the amplitude $|\Psi s^*|$ of the instruction magnetic flux $\Psi s^*$ of the synchronous machine 10 to allow the reactive power component to satisfy the predetermined condition. The synchronous-machine control process may determine the phase $\theta_S^*$ of the instruction magnetic flux $\Psi s^*$ based on the instruction torque $T_e^*$ or the instruction rotational speed $\omega_{ref}^*$, of the synchronous machine 10 and determine the instruction voltages $v_u^*$, $v_v^*$, $v_w^*$ based on the amplitude $|\Psi s^*|$ and the phase $\theta_S^*$, of the instruction magnetic flux $\Psi s^*$. This configuration enables control of the synchronous machine 10 based on the magnetic flux.

In one variation, the instruction phase determining unit 525B may not be limited to the configuration shown in Fig. 14 and it is sufficient that the instruction phase determining unit 525B can determine the phase $\theta_s^*$ of the instruction magnetic flux $\Psi s^*$ of the synchronous machine 10 by use of the instruction rotational speed $\omega_{ref}^*$. Similarly, the instruction phase determining unit 525C may not be limited to the configuration shown in Fig. 16 and it is sufficient that the instruction phase determining unit 525C can determine the phase $\theta_S^*$ of the instruction magnetic flux $\Psi s^*$ of the synchronous machine 10 by use of the instruction rotational speed $\omega_{ref}^*$ and the estimated phase $\theta_S$. Similarly, the instruction phase determining unit 525D may not be limited to the configuration shown in Fig. 18 and it is sufficient that the instruction phase determining unit 525D can determine the phase $\theta_S^*$ of the instruction magnetic flux $\Psi s^*$ of the synchronous machine 10 by use of the instruction rotational speed $\omega_{ref}^*$ and the estimated torque $T_e$. Similarly, the instruction phase determining unit 525E may not be limited to the configuration shown in Fig. 20, Fig. 21 or Fig. 22 and it is sufficient that the instruction phase determining unit 525E can determine the phase $\theta_S^*$ of the instruction magnetic flux $\Psi s^*$ of the synchronous machine 10 by use of the instruction rotational speed $\omega_{ref}^*$, the estimated phase $\theta_S$ and the estimated torque $T_e$.

In one variation, the operation state determining unit 56 may be configured to detect a sing of failure of the synchronous machine 10 or determine whether or not the synchronous machine 10 is in failure. The synchronous-machine control device 1 may be devoid of the operation state determining unit 56. The operation state determining unit 56 may be realized by a computer system, such as, a remote server, communicably connected to the synchronous-machine control device 1. Note that, the computer system may be realized by two or more servers. The operation state determining unit 56 may be realized by a cloud (cloud computing) or the like.

In one variation, the refrigeration cycle device is not limited to an air conditioner with a configuration where one indoor unit is connected to one outdoor unit (so called, a room air conditioner (RAC)). The refrigeration cycle device may be an air conditioner with a configuration where a plurality of indoor units are connected to one or more outdoor units (so-called, a package air conditioner (PAC) or a variable refrigerant flow (VRF)). Or, the refrigeration cycle device is not limited to an air conditioner, but may be a freezing or refrigerating device such as a refrigerator or a freezer.

In one variation, the synchronous-machine control device may apply to devices, apparatuses, or systems other than compression systems or refrigeration-cycle devices. For example, the synchronous-machine control device may apply to devices, apparatuses, or systems for speed and sensorless operation of synchronous machines. Concretely, the synchronous-machine control device may apply to: home appliances such as refrigerators, freezers, washing machines, ventilators, and the like; OA equipment such as scanners, printers, and the like; industrial equipment such as robots and the like; medical and healthcare equipment; moving object such as electric vehicles, drones, and the like; and automotive products such as power doors, power seats, and the like.

[3. ASPECTS]

As apparent from the above embodiments and variations, the present disclosure includes the following aspects. Hereinafter, reference signs in parenthesis are attached for the purpose of clearly showing correspondence with the embodiments only. Note that, in consideration of readability of texts, the reference signs in parentheses may be omitted from the second and subsequent times.

A first aspect is a synchronous-machine control device (1) and is connectable to a drive circuit (2) configured to drive a synchronous machine (10) and a detection circuit (3) configured to detect a current flowing through the synchronous machine (10) to output a detected current indicative of the current. The synchronous-machine control device (1) includes functions of performing: a synchronous machine controlling process of determining an instruction voltage to be applied across the synchronous machine (10) and controlling the drive circuit (2) to allow the drive circuit (2) to apply a voltage corresponding to the instruction voltage across the synchronous machine (10); and a magnet magnetic flux estimating process of estimating a magnet magnetic flux of a permanent magnet (10a) of the synchronous machine (10). The synchronous machine controlling process determines the instruction voltage to allow a reactive power component of the synchronous machine (10) to satisfy a predetermined condition. The magnet magnetic flux estimating process estimates the magnet magnetic flux, based on a relation satisfied by an armature flux linkage of the synchronous machine (10), an armature reaction flux of the synchronous machine (10) and the magnet magnetic flux of the permanent magnet (10a) of the synchronous machine (10) when the reactive power component of the synchronous machine (10) satisfies the predetermined condition, from the armature flux linkage calculated from the detected current and the instruction voltage and the armature reaction flux calculated from an inductance of the synchronous machine (10) and the detected current. This aspect enables improvement of accuracy of estimation of the magnet magnetic flux of the permanent magnet (10a) of the synchronous machine (10).

A second aspect is a synchronous-machine control device (1) according to the first aspect. In this aspect, the predetermined condition is that the reactive power component becomes zero This aspect enables the maximum torque/ampere control of the synchronous machine (10).

In the second aspect, the relation is represented by the following equation (54), wherein $\Psi_S$ denotes the armature flux linkage of the synchronous machine 10, $L_{qm} i_a$ denotes the armature reaction flux of the synchronous machine 10, and $\Psi_{a\,m}$ denotes the magnet magnetic flux of the permanent magnet 10a of the synchronous machine 10.

[FORMULA 42]

$$\Psi_{am} = \sqrt{|\Psi_s|^2 - \left(L_{qm}|i_a|\right)^2} \qquad (54)$$

A third aspect is a synchronous-machine control device (1) according to the first or second aspect. In this aspect, the synchronous machine controlling process: calculates a first inner product of the armature flux linkage and the detected current, or, a second inner product of the magnet magnetic flux and the detected current; performs feedback control using the first inner product or the second inner product to determine an amplitude of an instruction magnetic flux of the synchronous machine (10) to allow the reactive power component to satisfy the predetermined condition; determines a phase of the instruction magnetic flux based on an instruction torque or an instruction rotational speed, of the synchronous machine (10); and determines the instruction voltage based on the amplitude and the phase, of the instruction magnetic flux. This aspect enables control of the synchronous machine (10) based on the magnetic flux.

A fourth aspect is a synchronous-machine control device (1) according to the third aspect. In this aspect, the

## EP 4 583 397 A1

synchronous machine controlling process: determines an estimated phase of the armature flux linkage from the armature flux linkage; determines an estimated torque of the synchronous machine (10) from the armature flux linkage and the detected current; determines a torque phase to allow the estimated torque to be identical to the instruction torque; and determines the phase of the instruction magnetic flux by adding the torque phase to the estimated phase. This aspect enables improvement of accuracy of the phase of the instruction magnetic flux.

A fifth aspect is a synchronous-machine control device (1) according to the third aspect. In this aspect, the synchronous machine controlling process: determines a variable of the phase of the armature flux linkage for each control cycle based on the instruction rotational speed; and determines the phase of the instruction magnetic flux based on the variable. This aspect enables control of the synchronous machine (10) based on the magnetic flux.

A sixth aspect is a synchronous-machine control device (1) according to the third aspect. In this aspect, the synchronous machine controlling process: determines an estimated phase of the armature flux linkage from the armature flux linkage; determines a variable of the phase of the armature flux linkage for each control cycle based on the instruction rotational speed; and determines the phase of the instruction magnetic flux based on the variable and the estimated phase. This aspect enables improvement of a synchronization level between the rotation of the synchronous machine (10) and the rotation of the instruction magnetic flux.

A seventh aspect is a synchronous-machine control device (1) according to the fifth aspect. In this aspect, the synchronous machine controlling process: determines an estimated torque of the synchronous machine (10) from the armature flux linkage and the detected current; and determines the variable based on the instruction rotational speed and the estimated torque. This aspect enables improvement of stability of the operation of the synchronous machine 10.

An eighth aspect is a synchronous-machine control device (1) according to the sixth aspect. In this aspect, the synchronous machine controlling process: determines an estimated torque of the synchronous machine (10) from the armature flux linkage and the detected current; and determines the variable based on the instruction rotational speed and the estimated torque. This aspect enables improvement of stability of the operation of the synchronous machine 10.

A ninth aspect is a synchronous-machine control device (1) according to the second aspect. In this aspect, the synchronous machine controlling process: determines the instruction voltage from a dm axis instruction voltage and a qm axis instruction voltage in a dmqm coordinate system defined by a dm axis corresponding to a direction of the magnet magnetic flux and a qm axis perpendicular to the dm axis; converts the detected current into a dm axis current and a qm axis current in the dmqm coordinate system; and performs feedback control using the dm axis current and the qm axis current to determine the dm axis instruction voltage and the qm axis instruction voltage to allow the reactive power component to satisfy the predetermined condition. This aspect enables the control of the synchronous machine (10) based on currents.

A tenth aspect is a synchronous-machine control device (1) according to the first aspect. In this aspect, the predetermined condition is that the reactive power component becomes a predetermined value which is equal to or larger than a predetermined lower limit and is smaller than zero. An absolute value of the predetermined lower limit is a product of a rated current of the synchronous machine (10) and a rated magnetic flux of the permanent magnet (10a). This aspect enables the current-weakening control of the synchronous machine (10).

An eleventh aspect is a synchronous-machine control device (1) according to the tenth aspect. In this aspect, the synchronous-machine control device (1) includes a function of performing a dm axis current determining process of determining a dm axis current in a dmqm coordinate system defined by a dm axis corresponding to a direction of the magnet magnetic flux and a qm axis perpendicular to the dm axis. The synchronous machine controlling process: calculates a first inner product of the armature flux linkage and the detected current, or, a second inner product of the magnet magnetic flux and the detected current; performs feedback control using the first inner product or the second inner product to determine an amplitude of an instruction magnetic flux of the synchronous machine (10) to allow the reactive power component to satisfy the predetermined condition; determines a phase of the instruction magnetic flux based on an instruction torque or an instruction rotational speed, of the synchronous machine (10); and determines the instruction voltage based on the amplitude and the phase, of the instruction magnetic flux. The dm axis current determining process: determines a position of the permanent magnet in the dmqm coordinate system from the armature flux linkage and the detected current; and determines the dm axis current from the position of the permanent magnet and the detected current. The magnet magnetic flux estimating process estimates the magnet magnetic flux from a relationship equation among the magnet magnetic flux, the reactive power component and the dm axis current, derived from the relation. This aspect enables control of the synchronous machine (10) based on the magnetic flux.

In the eleventh aspect, the relation can be represented by the following equation (55), wherein $\Psi_S$ denotes the armature flux linkage of the synchronous machine (10), $L_{qm} i_a$ denotes the armature reaction flux of the synchronous machine (10), and $\Psi_{am}$ denotes the magnet magnetic flux of the permanent magnet (10a) of the synchronous machine (10). The relationship equation among the magnet magnetic flux, the reactive power component and the dm axis current, derived from the relation can be represented by the following equation (56), wherein $\Psi_{am}$ denotes the magnet magnetic flux, $\varepsilon$ denotes the reactive power component, and $i_{dm}$ denotes the dm axis current. The reactive power component $\varepsilon$ can be represented by the following equation (57).

43

[FORMULA 43]

$$\Psi_{am} = \Psi_S - L_{qm}i_a \qquad (55)$$

$$\Psi_{am} = \frac{\varepsilon}{i_{dm}} \qquad (56)$$

$$\varepsilon = (\Psi_S - L_{qm}i_a)i_a \qquad (57)$$

A twelfth aspect is a synchronous-machine control device (1) according to the eleventh aspect. In this aspect, the synchronous machine controlling process: determines an estimated phase of the armature flux linkage from the armature flux linkage; determines an estimated torque of the synchronous machine (10) from the armature flux linkage and the detected current; determines a torque phase to allow the estimated torque to be identical to the instruction torque; and determines the phase of the instruction magnetic flux by adding the torque phase to the estimated phase. This aspect enables improvement of accuracy of the phase of the instruction magnetic flux.

A thirteenth aspect is a synchronous-machine control device (1) according to the eleventh aspect. In this aspect, the synchronous machine controlling process: determines a variable of the phase of the armature flux linkage for each control cycle based on the instruction rotational speed; and determines the phase of the instruction magnetic flux based on the variable. This aspect enables control of the synchronous machine (10) based on the magnetic flux.

A fourteenth aspect is a synchronous-machine control device (1) according to the eleventh aspect. In this aspect, the synchronous machine controlling process: determines an estimated phase of the armature flux linkage from the armature flux linkage; determines a variable of the phase of the armature flux linkage for each control cycle based on the instruction rotational speed; and determines the phase of the instruction magnetic flux based on the variable and the estimated phase. This aspect enables improvement of a synchronization level between the rotation of the synchronous machine (10) and the rotation of the instruction magnetic flux.

A fifteenth aspect is a synchronous-machine control device (1) according to the thirteenth aspect. In this aspect, the synchronous machine controlling process: determines an estimated torque of the synchronous machine (10) from the armature flux linkage and the detected current; and determines the variable based on the instruction rotational speed and the estimated torque. This aspect enables improvement of stability of the operation of the synchronous machine 10.

A sixteenth aspect is a synchronous-machine control device (1) according to the fourteenth aspect. In this aspect, the synchronous machine controlling process: determines an estimated torque of the synchronous machine (10) from the armature flux linkage and the detected current; and determines the variable based on the instruction rotational speed and the estimated torque. This aspect enables improvement of stability of the operation of the synchronous machine 10.

A seventeenth aspect is a synchronous-machine control device (1) according to the tenth aspect. In this aspect, the synchronous machine controlling process determines the instruction voltage from a dm axis instruction voltage and a qm axis instruction voltage in a dinqm coordinate system defined by a dm axis corresponding to a direction of the magnet magnetic flux and a qm axis perpendicular to the dm axis. The synchronous machine controlling process converts the detected current into a dm axis current and a qm axis current in the dmqm coordinate system. The synchronous machine controlling process performs feedback control using the dm axis current and the qm axis current to determine the dm axis instruction voltage and the qm axis instruction voltage to allow the reactive power component to satisfy the predetermined condition. The magnet magnetic flux estimating process estimates the magnet magnetic flux from a relationship equation among the magnet magnetic flux, the reactive power component and the dm axis current, derived from the relation. This aspect enables the control of the synchronous machine (10) based on currents.

In the seventeenth aspect, the relation can be represented by the following equation (58), wherein $\Psi_S$ denotes the armature flux linkage of the synchronous machine (10), $L_{qm}i_a$ denotes the armature reaction flux of the synchronous machine (10), and $\Psi_{am}$ denotes the magnet magnetic flux of the permanent magnet (10a) of the synchronous machine (10). The relationship equation among the magnet magnetic flux, the reactive power component and the dm axis current, derived from the relation can be represented by the following equation (59), wherein $\Psi_{am}$ denotes the magnet magnetic flux, $\varepsilon$ denotes the reactive power component, and $i_{dm}$ denotes the dm axis current. The reactive power component $\varepsilon$ can be represented by the following equation (60).

[FORMULA 44]

$$\Psi_{am} = \Psi_S - L_{qm}i_a \qquad (58)$$
$$\Psi_{am} = \frac{\varepsilon}{i_{dm}} \qquad (59)$$
$$\varepsilon = \left(\Psi_S - L_{qm}i_a\right)i_a \qquad (60)$$

An eighteenth aspect is a synchronous-machine control device (1) according to any one of the first to seventeenth aspects. In this aspect, the synchronous-machine control device (1) further includes a function of performing a stop process of stopping the synchronous machine (10) when a surrounding temperature of the synchronous machine (10) is determined to exceed a predetermined temperature based on the magnet magnetic flux. This aspect enables improvement of the safety of the operation of the synchronous machine (10).

A nineteenth aspect is a compression system (110) and includes a compressor (104); and a control device (101) configured to control the compressor (104). The compressor (104) includes: a sealed container (140) constituting a fluidic pathway for a working medium (200) containing ethylene-based fluoroolefin as a refrigerant component; a compression mechanism (141) positioned inside the sealed container (140) to compress the working medium (200); and a synchronous machine (142) positioned inside the sealed container (140) to operate the compression mechanism (141). The control device (101) includes: a drive circuit (2) configured to drive the synchronous machine (142); a detection circuit (3) configured to detect a current flowing through the synchronous machine (142) to output a detected current indicative of the current; and a synchronous-machine control device (1) connected to the drive circuit (2) and the detection circuit (3). The synchronous-machine control device (1) includes functions of performing: a synchronous machine controlling process of determining an instruction voltage to be applied across the synchronous machine (142) and controlling the drive circuit (2) to allow the drive circuit (2) to apply a voltage corresponding to the instruction voltage across the synchronous machine (142); a magnet magnetic flux estimating process of estimating a magnet magnetic flux of a permanent magnet of the synchronous machine (142); and a stop process of stopping the synchronous machine (142) when a surrounding temperature of the synchronous machine (142) is determined to exceed a predetermined temperature based on the magnet magnetic flux. The synchronous machine controlling process determines the instruction voltage to allow a reactive power component of the synchronous machine (142) to satisfy a predetermined condition. The magnet magnetic flux estimating process estimates the magnet magnetic flux, based on a relation satisfied by an armature flux linkage of the synchronous machine (142), an armature reaction flux of the synchronous machine (142) and the magnet magnetic flux of the permanent magnet of the synchronous machine (142) when the reactive power component of the synchronous machine (142) satisfies the predetermined condition, from the armature flux linkage calculated from the detected current and the instruction voltage and the armature reaction flux calculated from an inductance of the synchronous machine (142) and the detected current. This aspect enables improvement of accuracy of estimation of the magnet magnetic flux of the permanent magnet of the synchronous machine (142).

A twentieth aspect is a refrigeration-cycle device (100) and includes: a refrigeration cycle circuit (102) including a compressor (104), a condenser (the first heat exchanger 105, the second heat exchanger 107), an expansion valve (106) and an evaporator (the first heat exchanger 105, the second heat exchanger 107), and allowing circulation of a working medium (200); and a control device (101) configured to control the refrigeration cycle circuit (102). The working medium (200) contains ethylene-based fluoroolefin as a refrigerant component. The compressor (104) includes: a sealed container (140) constituting a fluidic pathway for the working medium (200); a compression mechanism (141) positioned inside the sealed container (140) to compress the working medium (200); and a synchronous machine (142) positioned inside the sealed container (140) to operate the compression mechanism (141). The control device (101) includes: a drive circuit (2) configured to drive the synchronous machine (10); a detection circuit (3) configured to detect a current flowing through the synchronous machine (10) to output a detected current indicative of the current; and a synchronous-machine control device (1) connected to the drive circuit (2) and the detection circuit (3). The synchronous-machine control device (1) includes functions of performing: a synchronous machine controlling process of determining an instruction voltage to be applied across the synchronous machine (142) and controlling the drive circuit (2) to allow the drive circuit (2) to apply a voltage corresponding to the instruction voltage across the synchronous machine (142); a magnet magnetic flux estimating process of estimating a magnet magnetic flux of a permanent magnet of the synchronous machine (142); and a stop process of stopping the synchronous machine (142) when a surrounding temperature of the synchronous machine (142) is determined to exceed a predetermined temperature based on the magnet magnetic flux. The synchronous machine controlling process determines the instruction voltage to allow a reactive power component of the synchronous machine (142) to satisfy a predetermined condition, and estimates the magnet magnetic flux, based on a relation satisfied by an armature flux linkage of the synchronous machine (142), an armature reaction flux of the synchronous machine (142) and the magnet magnetic flux of the permanent magnet of the synchronous machine

(142) when the reactive power component of the synchronous machine (142) satisfies the predetermined condition, from the armature flux linkage calculated from the detected current and the instruction voltage and the armature reaction flux calculated from an inductance of the synchronous machine (142) and the detected current. This aspect enables improvement of accuracy of estimation of the magnet magnetic flux of the permanent magnet of the synchronous machine (142).

The second to eighteenth aspects can be combined with the nineteenth or twentieth aspect in an appropriate manner. The second to eighteenth aspects are optional rather than necessary.

INDUSTRIAL APPLICABILITY

The present disclosure is applicable to synchronous-machine control devices, compression systems, and refrigeration-cycle devices. Concretely, the present disclosure is applicable to a synchronous-machine control device for a sensorless operation for speed and position of a synchronous machine, a compression system for compression of a working medium containing ethylene-based fluoroolefin as a refrigerant component, and a refrigeration-cycle device with a working medium containing ethylene-based fluoroolefin as a refrigerant component.

REFERENCE SIGNS LIST

| 1 | Synchronous-Machine Control Device |
| 2 | Drive Circuit |
| 3 | Detection Circuit |
| 10 | Synchronous Machine |
| 10a | Permanent Magnet |
| 100 | Refrigeration-Cycle Device |
| 104 | Compressor |
| 110 | Compression System |
| 140 | Sealed Container |
| 141 | Compression Mechanism |
| 142 | Synchronous Machine |
| 200 | Working Medium |

**Claims**

1. A synchronous-machine control device connectable to a drive circuit configured to drive a synchronous machine and a detection circuit configured to detect a current flowing through the synchronous machine to output a detected current indicative of the current, and comprising functions of performing:

   a synchronous machine controlling process of determining an instruction voltage to be applied across the synchronous machine and controlling the drive circuit to allow the drive circuit to apply a voltage corresponding to the instruction voltage across the synchronous machine; and
   a magnet magnetic flux estimating process of estimating a magnet magnetic flux of a permanent magnet of the synchronous machine,
   the synchronous machine controlling process determining the instruction voltage to allow a reactive power component of the synchronous machine to satisfy a predetermined condition, and
   the magnet magnetic flux estimating process estimating the magnet magnetic flux, based on a relation satisfied by an armature flux linkage of the synchronous machine, an armature reaction flux of the synchronous machine and the magnet magnetic flux of the permanent magnet of the synchronous machine when the reactive power component of the synchronous machine satisfies the predetermined condition, from the armature flux linkage calculated from the detected current and the instruction voltage and the armature reaction flux calculated from an inductance of the synchronous machine and the detected current.

2. The synchronous-machine control device according to claim 1, wherein
   the predetermined condition is that the reactive power component becomes zero.

3. The synchronous-machine control device according to claim 1 or 2, wherein
   the synchronous machine controlling process:

calculates a first inner product of the armature flux linkage and the detected current, or, a second inner product of the magnet magnetic flux and the detected current;

performs feedback control using the first inner product or the second inner product to determine an amplitude of an instruction magnetic flux of the synchronous machine to allow the reactive power component to satisfy the predetermined condition;

determines a phase of the instruction magnetic flux based on an instruction torque or an instruction rotational speed, of the synchronous machine; and

determines the instruction voltage based on the amplitude and the phase, of the instruction magnetic flux.

4. The synchronous-machine control device according to claim 3, wherein
the synchronous machine controlling process:

determines an estimated phase of the armature flux linkage from the armature flux linkage;

determines an estimated torque of the synchronous machine from the armature flux linkage and the detected current;

determines a torque phase to allow the estimated torque to be identical to the instruction torque; and

determines the phase of the instruction magnetic flux by adding the torque phase to the estimated phase.

5. The synchronous-machine control device according to claim 3, wherein
the synchronous machine controlling process:

determines a variable of the phase of the armature flux linkage for each control cycle based on the instruction rotational speed; and

determines the phase of the instruction magnetic flux based on the variable.

6. The synchronous-machine control device according to claim 3, wherein
the synchronous machine controlling process:

determines an estimated phase of the armature flux linkage from the armature flux linkage;

determines a variable of the phase of the armature flux linkage for each control cycle based on the instruction rotational speed; and

determines the phase of the instruction magnetic flux based on the variable and the estimated phase.

7. The synchronous-machine control device according to claim 5, wherein
the synchronous machine controlling process:

determines an estimated torque of the synchronous machine from the armature flux linkage and the detected current; and

determines the variable based on the instruction rotational speed and the estimated torque.

8. The synchronous-machine control device according to claim 6, wherein
the synchronous machine controlling process:

determines an estimated torque of the synchronous machine from the armature flux linkage and the detected current; and

determines the variable based on the instruction rotational speed and the estimated torque.

9. The synchronous-machine control device according to claim 2, wherein
the synchronous machine controlling process:

determines the instruction voltage from a dm axis instruction voltage and a qm axis instruction voltage in a dmqm coordinate system defined by a dm axis corresponding to a direction of the magnet magnetic flux and a qm axis perpendicular to the dm axis;

converts the detected current into a dm axis current and a qm axis current in the dmqm coordinate system; and

performs feedback control using the dm axis current and the qm axis current to determine the dm axis instruction voltage and the qm axis instruction voltage to allow the reactive power component to satisfy the predetermined condition.

10. The synchronous-machine control device according to claim 1, wherein:

the predetermined condition is that the reactive power component becomes a predetermined value which is equal to or larger than a predetermined lower limit and is smaller than zero; and

An absolute value of the predetermined lower limit is a product of a rated current of the synchronous machine and a rated magnetic flux of the permanent magnet.

11. The synchronous-machine control device according to claim 1, further comprising a function of performing a dm axis current determining process of determining a dm axis current in a dmqm coordinate system defined by a dm axis corresponding to a direction of the magnet magnetic flux and a qm axis perpendicular to the dm axis; wherein:

the synchronous machine controlling process:

calculates a first inner product of the armature flux linkage and the detected current, or, a second inner product of the magnet magnetic flux and the detected current;

performs feedback control using the first inner product or the second inner product to determine an amplitude of an instruction magnetic flux of the synchronous machine to allow the reactive power component to satisfy the predetermined condition;

determines a phase of the instruction magnetic flux based on an instruction torque or an instruction rotational speed, of the synchronous machine; and

determines the instruction voltage based on the amplitude and the phase, of the instruction magnetic flux,

the dm axis current determining process:

determines a position of the permanent magnet in the dmqm coordinate system from the armature flux linkage and the detected current; and

determines the dm axis current from the position of the permanent magnet and the detected current, and

the magnet magnetic flux estimating process estimates the magnet magnetic flux from a relationship equation among the magnet magnetic flux, the reactive power component and the dm axis current, derived from the relation.

12. The synchronous-machine control device according to claim 11, wherein the synchronous machine controlling process:

determines an estimated phase of the armature flux linkage from the armature flux linkage;

determines an estimated torque of the synchronous machine from the armature flux linkage and the detected current;

determines a torque phase to allow the estimated torque to be identical to the instruction torque; and

determines the phase of the instruction magnetic flux by adding the torque phase to the estimated phase.

13. The synchronous-machine control device according to claim 11, wherein the synchronous machine controlling process:

determines a variable of the phase of the armature flux linkage for each control cycle based on the instruction rotational speed; and

determines the phase of the instruction magnetic flux based on the variable.

14. The synchronous-machine control device according to claim 11, wherein the synchronous machine controlling process:

determines an estimated phase of the armature flux linkage from the armature flux linkage;

determines a variable of the phase of the armature flux linkage for each control cycle based on the instruction rotational speed; and

determines the phase of the instruction magnetic flux based on the variable and the estimated phase.

15. The synchronous-machine control device according to claim 13, wherein

the synchronous machine controlling process:

> determines an estimated torque of the synchronous machine from the armature flux linkage and the detected current; and
> determines the variable based on the instruction rotational speed and the estimated torque.

16. The synchronous-machine control device according to claim 14, wherein
the synchronous machine controlling process:

> determines an estimated torque of the synchronous machine from the armature flux linkage and the detected current; and
> determines the variable based on the instruction rotational speed and the estimated torque.

17. The synchronous-machine control device according to claim 10, wherein:

> the synchronous machine controlling process
>
> > determines the instruction voltage from a dm axis instruction voltage and a qm axis instruction voltage in a dmqm coordinate system defined by a dm axis corresponding to a direction of the magnet magnetic flux and a qm axis perpendicular to the dm axis,
> > converts the detected current into a dm axis current and a qm axis current in the dmqm coordinate system, and
> > performs feedback control using the dm axis current and the qm axis current to determine the dm axis instruction voltage and the qm axis instruction voltage to allow the reactive power component to satisfy the predetermined condition; and
>
> the magnet magnetic flux estimating process estimates the magnet magnetic flux from a relationship equation among the magnet magnetic flux, the reactive power component and the dm axis current, derived from the relation.

18. The synchronous-machine control device according to any one of claims 1 to 17, further comprising
a function of performing a stop process of stopping the synchronous machine when a surrounding temperature of the synchronous machine is determined to exceed a predetermined temperature based on the magnet magnetic flux.

19. A compression system comprising:

> a compressor; and
> a control device configured to control the compressor,
> the compressor including
>
> > a sealed container constituting a fluidic pathway for a working medium containing ethylene-based fluoroolefin as a refrigerant component,
> > a compression mechanism positioned inside the sealed container to compress the working medium, and
> > a synchronous machine positioned inside the sealed container to operate the compression mechanism,
>
> the control device including
>
> > a drive circuit configured to drive the synchronous machine,
> > a detection circuit configured to detect a current flowing through the synchronous machine to output a detected current indicative of the current, and
> > a synchronous-machine control device connected to the drive circuit and the detection circuit,
>
> the synchronous-machine control device including functions of performing:
>
> > a synchronous machine controlling process of determining an instruction voltage to be applied across the synchronous machine and controlling the drive circuit to allow the drive circuit to apply a voltage corresponding to the instruction voltage across the synchronous machine;
> > a magnet magnetic flux estimating process of estimating a magnet magnetic flux of a permanent magnet of the synchronous machine; and
a stop process of stopping the synchronous machine when a surrounding temperature of the synchronous machine is determined to exceed a predetermined temperature based on the magnet magnetic flux,

the synchronous machine controlling process determining the instruction voltage to allow a reactive power component of the synchronous machine to satisfy a predetermined condition, and
the magnet magnetic flux estimating process estimating the magnet magnetic flux, based on a relation satisfied by an armature flux linkage of the synchronous machine, an armature reaction flux of the synchronous machine and the magnet magnetic flux of the permanent magnet of the synchronous machine when the reactive power component of the synchronous machine satisfies the predetermined condition, from the armature flux linkage calculated from the detected current and the instruction voltage and the armature reaction flux calculated from an inductance of the synchronous machine and the detected current.

20. A refrigeration-cycle device comprising:

a refrigeration cycle circuit including a compressor, a condenser, an expansion valve and an evaporator, and allowing circulation of a working medium; and
a control device configured to control the refrigeration cycle circuit,
the working medium containing ethylene-based fluoroolefin as a refrigerant component,
the compressor including

a sealed container constituting a fluidic pathway for the working medium,
a compression mechanism positioned inside the sealed container to compress the working medium, and
a synchronous machine positioned inside the sealed container to operate the compression mechanism,

the control device including

a drive circuit configured to drive the synchronous machine,
a detection circuit configured to detect a current flowing through the synchronous machine to output a detected current indicative of the current, and
a synchronous-machine control device connected to the drive circuit and the detection circuit,

the synchronous-machine control device including functions of performing:

a synchronous machine controlling process of determining an instruction voltage to be applied across the synchronous machine and controlling the drive circuit to allow the drive circuit to apply a voltage corresponding to the instruction voltage across the synchronous machine;
a magnet magnetic flux estimating process of estimating a magnet magnetic flux of a permanent magnet of the synchronous machine; and
a stop process of stopping the synchronous machine when a surrounding temperature of the synchronous machine is determined to exceed a predetermined temperature based on the magnet magnetic flux,

the synchronous machine controlling process determining the instruction voltage to allow a reactive power component of the synchronous machine to satisfy a predetermined condition, and
the magnet magnetic flux estimating process estimating the magnet magnetic flux, based on a relation satisfied by an armature flux linkage of the synchronous machine, an armature reaction flux of the synchronous machine and the magnet magnetic flux of the permanent magnet of the synchronous machine when the reactive power component of the synchronous machine satisfies the predetermined condition, from the armature flux linkage calculated from the detected current and the instruction voltage and the armature reaction flux calculated from an inductance of the synchronous machine and the detected current.

Fig. 1

Fig. 2

Fig. 3

Fig. 4

Fig. 5

Fig. 6

Fig. 7

Fig. 8

Fig. 9

Fig. 10

100

Fig. 11

<u>104</u>

140b     140

<u>200</u>

M    142

141

140a

Fig. 12

Fig. 13

Fig. 14

525B

Fig. 15

Fig. 16

525C

502a

502b

$\omega_{ref}^{*}$ → $T_s$ $\Delta\theta$ → ⊕ $\theta_s^{*}$ →

$\theta_s$

Fig. 17

Fig. 18

525D

$\omega_{ref}{}^*$      503c    503d    $\dfrac{1}{s}$    $\theta_s{}^*$

$K_1 T_H$

$K_1$   503b

$T_H$

HPF   503a

$T_e$

Fig. 19

Fig. 20

525E1

Fig. 21

525E2

Fig. 22

525E3

Fig. 23

Fig. 24

EP 4 583 397 A1

Fig. 25

Fig. 26

Fig. 27

Fig. 28

Fig. 29

Fig. 30

Fig. 31

Fig. 32

Fig. 33

Fig. 34

Fig. 35

## INTERNATIONAL SEARCH REPORT

| International application No. |
| --- |
| **PCT/JP2023/015441** |

| A. | CLASSIFICATION OF SUBJECT MATTER |
| --- | --- |

*H02P 21/14*(2016.01)i; *H02P 25/024*(2016.01)i; *F25B 49/02*(2006.01)i
FI:   H02P21/14; H02P25/024; F25B49/02 D

According to International Patent Classification (IPC) or to both national classification and IPC

| B. | FIELDS SEARCHED |
| --- | --- |

Minimum documentation searched (classification system followed by classification symbols)

H02P21/14; H02P25/024; F25B49/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-100994 A (PANASONIC IP MANAGEMENT CORP.) 30 May 2016 (2016-05-30) paragraphs [0036]-[0040], [0047]-[0050], [0071]-[0089], [0091]-[0116], fig. 1, 3-4, 6, 9A-10B | 1-3, 5, 7, 10 |
| Y | | 4, 6, 8-9, 11-20 |
| Y | JP 2016-127697 A (PANASONIC IP MANAGEMENT CORP.) 11 July 2016 (2016-07-11) paragraphs [0147]-[0166], [0173]-[0189], fig. 14-17B, 20-21 | 4, 6, 8, 12, 14, 16, 18 |
| Y | JP 2009-268268 A (SANYO ELECTRIC CO., LTD.) 12 November 2009 (2009-11-12) paragraphs [0089]-[0099], fig. 10 | 9, 11-18 |
| Y | JP 2003-235286 A (NISSAN MOTOR CO., LTD.) 22 August 2003 (2003-08-22) paragraphs [0028]-[0032], fig. 1-2 | 18-20 |
| Y | WO 2022/034674 A1 (MITSUBISHI ELECTRIC CORP.) 17 February 2022 (2022-02-17) paragraphs [0010]-[0042], [0074], fig. 1-8 | 19-20 |
| A | JP 2015-122928 A (PANASONIC IP MANAGEMENT CORP.) 02 July 2015 (2015-07-02) paragraphs [0058]-[0125], fig. 1-9 | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 June 2023** | **20 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/015441** |

| Patent document cited in search report | | | Publication date (day/month/year) | Patent family member(s) | Publication date (day/month/year) |
| --- | --- | --- | --- | --- | --- |
| JP | 2016-100994 | A | 30 May 2016 | (Family: none) | |
| JP | 2016-127697 | A | 11 July 2016 | (Family: none) | |
| JP | 2009-268268 | A | 12 November 2009 | (Family: none) | |
| JP | 2003-235286 | A | 22 August 2003 | (Family: none) | |
| WO | 2022/034674 | A1 | 17 February 2022 | (Family: none) | |
| JP | 2015-122928 | A | 02 July 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5396906 B